# FASCICULE DE BREVET EUROPEEN

(11) **EP 4 004 277 B1**
(45) Date de publication et mention de la délivrance du brevet: **25.06.2025**
(21) Numéro de dépôt: 20757635.6
(22) Date de dépôt: 22.07.2020
(51) Int. Cl.: D07B 7/02, D07B 3/00, D07B 1/06

(54) **PROCEDE DE SEPARATION ET DE REASSEMBLAGE D'UN ASSEMBLAGE A DEUX COUCHES**
VERFAHREN ZUM TRENNEN UND ZUSAMMENBAUEN EINER DOPPELSCHICHTANORDNUNG
METHOD FOR SEPARATING AND REASSEMBLING A DUAL LAYER ASSEMBLY

(30) Priorité: 25.07.2019 FR 1908431
(43) Date de publication de la demande: 01.06.2022
(73) Titulaire: COMPAGNIE GENERALE DES ETABLISSEMENTS MICHELIN, 63000 Clermont-Ferrand (FR)
(72) Inventeur: REIX, Olivier, 63040 CLERMONT-FERRAND CEDEX 9 (FR); PATAUT, Gaël, 63040 CLERMONT-FERRAND CEDEX 9 (FR)
(74) Mandataire: M.F.P. Michelin
(86) Numéro de dépôt international: PCT/FR2020/051337
(87) Numéro de publication internationale: WO 2021/014098

(56) Documents cités:
- EP-A1- 3 293 306
- WO-A1-2016/083267
- WO-A1-2016/189074
- DE-A1- 102011 053 240
- US-A- 2 556 164

## Description

L'invention concerne un procédé et une installation de fabrication d'un assemblage final, un assemblage final obtenu par ce procédé ainsi qu'un pneumatique comprenant un tel assemblage final.

On connait de WO2016083265 et WO2016083267 un procédé et une installation de fabrication de premier et deuxième assemblages finaux. Ce procédé comprend une étape d'assemblage de plusieurs éléments filaires métalliques ensemble en une couche de plusieurs éléments filaires métalliques autour d'un noyau transitoire pour former un assemblage transitoire.

On connaît également de l'état de la technique les documents EP3293306 et DE102011053240.

Puis, le procédé comprend une première étape de fractionnement de l'assemblage transitoire en :
- un premier assemblage fractionné constitué d'une couche constituée de plusieurs éléments filaires métalliques enroulés en hélice et issus de la couche de l'assemblage transitoire, et
- un ensemble fractionné comprenant plusieurs éléments filaires métalliques enroulés en hélice autour du noyau transitoire, ces éléments filaires métalliques étant issus de la couche de l'assemblage transitoire.

Puis le procédé comprend, une deuxième étape de fractionnement de l'ensemble fractionné en :
- un deuxième assemblage fractionné constitué d'une couche constituée des éléments filaires métalliques enroulés en hélice issus de la couche de l'ensemble fractionné, et
- le noyau transitoire.

A l'issue de ce procédé, chaque premier et deuxième assemblage fractionné forme un assemblage final duquel on a séparé le noyau transitoire. La séparation du noyau transitoire est rendue possible grâce à la séparation des éléments filaires métalliques de la couche de l'assemblage transitoire qui permet de ménager, lors de la première étape de fractionnement, un passage de sortie de l'ensemble fractionné comprenant le noyau transitoire, et lors de la deuxième étape de fractionnement, un passage de sortie du noyau transitoire.

Grâce au noyau transitoire, le procédé permet de préformer collectivement les éléments filaires métalliques en les appuyant sur le noyau transitoire afin de leur conférer à tous, les mêmes caractéristiques géométriques particulières, par exemple, un rayon de courbure et un diamètre d'hélice. L'utilisation d'un noyau transitoire permet ainsi une préformation sans utilisation d'outils mécaniques. Chaque assemblage final présente des propriétés mécaniques avantageuses, notamment des propriétés d'endurance en compression, ces propriétés pouvant être affinées en modifiant notamment le diamètre du noyau transitoire et l'angle d'hélice de chaque élément filaire métallique.

Néanmoins, lors de ce procédé, afin de ménager les passages de sortie pour le noyau transitoire et pour des caractéristiques géométriques données de chaque élément filaire métallique, on réduit nécessairement le nombre d'éléments filaires métalliques de la couche de chaque assemblage final. Cette réduction du nombre d'éléments filaires métalliques de la couche entraine une baisse de la masse linéique de chaque assemblage final et donc une baisse du renforcement que peut procurer l'assemblage final, notamment au sein d'un pneumatique. A l'inverse, si on souhaite conserver un renforcement élevé, il est nécessaire de partir d'un assemblage transitoire comprenant un nombre élevé d'éléments filaires métalliques ce qui ne permet pas d'obtenir toutes les caractéristiques géométriques souhaitées, ni les propriétés mécaniques désirées pour les assemblages finaux.

L'invention a pour but un procédé de fabrication d'un assemblage final au moyen d'une préformation collective de ces éléments filaires métalliques autour d'un noyau transitoire, n'empêchant pas, d'une part, de maintenir une masse linéique aussi élevée que possible et permettant, d'autre part, d'accéder à l'ensemble des caractéristiques géométriques souhaitées des éléments filaires métalliques.

A cet effet l'invention a pour objet un procédé de fabrication d'un assemblage final comprenant au moins deux couches comprenant une couche interne C1 constituée de C1'>1 éléments filaires métalliques enroulés en hélice et une couche externe C2 constituée de C2'>1 éléments filaires métalliques enroulés en hélice autour de la couche interne C1. Le procédé comprend:
- une étape de fourniture d'un assemblage transitoire comprenant au moins deux couches comprenant une couche interne A1 constituée de A1'>1 éléments filaires métalliques enroulés en hélice autour d'un noyau transitoire et une couche externe A2 constituée de A2'>1 éléments filaires métalliques enroulés en hélice autour de la couche interne A1,
- une étape de séparation de l'assemblage transitoire entre au moins:
   o un premier assemblage fractionné comprenant au moins une couche D1 constituée de D1'≥1 élément(s) filaire(s) métallique(s) enroulé(s) en hélice, le ou les D1' élément(s) filaire(s) métallique(s) étant issu(s) de la couche interne A1 constituée de A1'>1 éléments filaires métalliques de l'assemblage transitoire,
   o un deuxième assemblage fractionné comprenant au moins une couche comprenant une couche E2 constituée de E2'≥1 élément(s) filaire(s) métallique(s) enroulé(s) en hélice, le ou les E2' élément(s) filaire(s) métallique(s) étant issu(s) de la couche externe A2 constituée de A2'>1 éléments filaires métalliques de l'assemblage transitoire,
   o un troisième assemblage fractionné comprenant au moins une couche F2 constituée de F2'≥ 1 élément(s) filaire(s) métallique(s) enroulé(s) en hélice, le ou les F2' élément(s) filaire(s) métallique(s) étant issu(s) de la couche externe A2 constituée de A2'>1 éléments filaires métalliques de l'assemblage transitoire,
   o le noyau transitoire ou un ou plusieurs ensembles comprenant le noyau transitoire.

Le procédé selon l'invention comprend également une étape de réassemblage d'au moins le premier assemblage fractionné, le deuxième assemblage fractionné et le troisième assemblage fractionné ensemble pour former l'assemblage final.

A l'issue de l'étape de séparation de l'assemblage transitoire, on obtient, dans une variante, le premier assemblage fractionné, le deuxième assemblage fractionné, le troisième assemblage fractionné et le noyau transitoire, le noyau transitoire étant isolé de tout autre élément filaire métallique issu des couches interne A1 et externe A2 de l'assemblage transitoire. En d'autres termes, à l'issue l'étape de séparation de l'assemblage transitoire, on obtient, dans cette variante, le premier assemblage fractionné, le deuxième assemblage fractionné, le troisième assemblage factionné et un ensemble constitué par le noyau transitoire.

Dans une autre variante, à l'issue de l'étape de séparation de l'assemblage transitoire, on obtient le premier assemblage fractionné, le deuxième assemblage fractionné, le troisième assemblage factionné et un ensemble comprenant le noyau transitoire, l'ensemble comprenant le noyau transitoire comprenant également un ou plusieurs éléments filaires métalliques issus des couches interne A1 et externe A2 de l'assemblage transitoire. En d'autres termes, dans cette variante, à l'issue l'étape de séparation de l'assemblage transitoire, on obtient, le premier assemblage fractionné, le deuxième assemblage fractionné, le troisième assemblage factionné et un ensemble constitué par le noyau transitoire et un ou plusieurs éléments filaires métalliques issus des couches interne A1 et externe A2 de l'assemblage transitoire.

Dans encore une autre variante, à l'issue l'étape de séparation de l'assemblage transitoire, on obtient le premier assemblage fractionné, le deuxième assemblage fractionné, le troisième assemblage factionné et plusieurs ensembles comprenant chacun une partie du noyau transitoire, chaque ensemble comprenant une partie du noyau transitoire comprenant également un ou plusieurs éléments filaires métalliques issus des couches interne A1 et externe A2 de l'assemblage transitoire. Ainsi, les ensembles comprennent l'intégralité du noyau transitoire et les parties du noyau transitoire des ensembles forment le noyau transitoire dans son intégralité. En d'autres termes, on obtient, dans cette variante, le premier assemblage fractionné, le deuxième assemblage fractionné, le troisième assemblage fractionné et plusieurs ensembles constitué chacun par une partie du noyau transitoire et un ou plusieurs éléments filaires métalliques issus des couches interne A1 et externe A2 de l'assemblage transitoire, les parties du noyau transitoire constituant le noyau transitoire.

Grâce à l'étape de réassemblage du procédé selon l'invention, il est possible, pour des caractéristiques géométriques données, d'augmenter la masse linéique de l'assemblage final par rapport au procédé de l'état de la technique dans lequel le nombre d'éléments filaires métalliques est nécessairement limité, cela tout en permettant la sortie du noyau transitoire. A l'inverse, pour une masse linéique donnée, il est possible d'obtenir une plus grande plage de caractéristiques géométriques qu'avec le procédé de l'état de la technique.

En outre, grâce aux deux couches de l'assemblage final, on dispose d'un plus grand nombre d'éléments filaires métalliques pour augmenter la masse linéique de l'assemblage final par rapport à un assemblage à une seule couche. De plus, en raison d'un nombre plus grand d'éléments filaires métalliques, il est également possible d'ajuster plus précisément la masse linéique de l'assemblage final par rapport à un assemblage à une seule couche. Enfin, en jouant sur les propriétés géométriques de chacune des couches interne C1 et externe C2 de l'assemblage final, on peut obtenir une bien plus grande diversité de propriétés mécaniques avec des assemblages finaux comprenant au moins deux couches par rapport à des assemblages finaux constitué d'une unique couche.

Lors de cette étape de réassemblage, on réassemble le ou les élément(s) filaire(s) métallique(s) enroulé(s) en hélice formant la ou les couches du premier assemblage fractionné avec le ou les élément(s) filaire(s) métallique(s) enroulé(s) en hélice formant la ou les couches du deuxième assemblage fractionné et avec le ou les élément(s) filaire(s) métallique(s) enroulé(s) en hélice formant la ou les couches du troisième assemblage fractionné. Le réassemblage des éléments filaires métalliques de ces couches permet d'obtenir les couches de l'assemblage final.

Dans le procédé selon l'invention, chaque élément filaire métallique de chaque premier, deuxième et troisième assemblage fractionné étant issu d'une des couches interne et externe de l'assemblage transitoire, l'étape de réassemblage permet avantageusement de former l'assemblage final dans lequel les C1' et C2' éléments filaires métalliques présentent les mêmes caractéristiques géométriques et forment donc deux couches homogènes d'éléments filaires métalliques. Ainsi, afin de permettre dans un mode de réalisation avantageux l'obtention d'un assemblage dans lequel les éléments filaires métalliques présentent des caractéristiques géométriques identiques, l'étape de fourniture, l'étape de séparation et l'étape de réassemblage sont réalisées de sorte que, d'une part, tous les C1' éléments filaires métalliques présentent un même diamètre d1, sont enroulés en hélice selon un même pas p1 et présentent un même diamètre d'hélice ϕ1 et d'autre part, tous les C2' éléments filaires métalliques présentent un même diamètre d2, sont enroulés en hélice selon un même pas p2 et présentent un même diamètre d'hélice ϕ2. Le diamètre d'hélice correspond au diamètre du cercle théorique passant par les centres des éléments filaires métalliques de la couche dans un plan perpendiculaire à l'axe principal de l'assemblage. On rappelle que le pas auquel chaque élément filaire métallique est enroulé est la longueur parcourue par cet élément filaire, mesurée parallèlement à l'axe de l'assemblage dans lequel il se trouve, au bout de laquelle l'élément filaire ayant ce pas effectue un tour complet autour dudit axe de l'assemblage.

En outre, comme décrit ci-dessus, suivant les différents modes de réalisation, l'étape de séparation et l'étape de réassemblage sont réalisées de sorte que A1'≥ C1' et A2'≥ C2'.

L'assemblage transitoire du procédé selon l'invention comprend la couche interne A1 constituée de A1' éléments filaires métalliques, la couche externe A2 constituée de A2' éléments filaires métalliques enroulés en hélice autour de la couche interne A1 et le noyau transitoire, les A1' éléments filaires métalliques étant enroulés en hélice autour du noyau transitoire. De préférence, dans un mode de réalisation permettant de fabriquer un assemblage final constitué de deux couches d'éléments filaires métalliques, l'assemblage transitoire est constitué de la couche interne A1 constituée des A1' éléments filaires métalliques, de la couche externe A2 constituée des A2' éléments filaires métalliques enroulés en hélice autour de la couche interne A1 et du noyau transitoire, les A1' éléments filaires métalliques étant enroulés en hélice autour du noyau transitoire.

Un autre avantage du procédé selon l'invention est que chaque élément filaire métallique de l'assemblage final est dépourvu de marques de préformation. De telles marques de préformation comprennent notamment des méplats. Les marques de préformations comprennent également des fissures s'étendant dans des plans de coupe sensiblement perpendiculaires à l'axe principal selon lequel s'étend chaque élément filaire métallique. De telles fissures s'étendent, dans un plan de coupe sensiblement perpendiculaire à l'axe principal, depuis une surface radialement externe de chaque élément filaire métallique radialement vers l'intérieur de chaque élément filaire métallique. Comme décrits ci-dessus, de telles fissures sont initiées par les outils mécaniques de préformation en raison des efforts en flexion, c'est-à-dire perpendiculairement à l'axe principal de chaque élément filaire métallique, ce qui les rend très néfastes pour l'endurance. A l'inverse, dans le procédé utilisé, les éléments filaires métalliques sont préformés collectivement et simultanément sur le noyau transitoire et les efforts de préformations sont exercés en torsion et donc non perpendiculairement à l'axe principal de chaque élément filaire métallique. Les éventuelles fissures créées s'étendent non pas radialement depuis la surface radialement externe de chaque élément filaire métallique radialement vers l'intérieur de chaque élément filaire métallique mais le long de la surface radialement externe de chaque élément filaire métallique ce qui les rend peu néfastes pour l'endurance.

Le procédé selon l'invention est avantageusement un procédé continu ou en ligne. Ainsi, il n'y a pas d'étape de stockage intermédiaire des différents assemblages et ensembles générés lors du procédé entre l'étape de fourniture de l'assemblage transitoire et l'étape de réassemblage de l'assemblage final.

Dans la présente invention, une étape de fractionnement d'un objet initial en plusieurs objets finaux signifie que, durant cette étape de fractionnement, l'objet initial est divisé en les objets finaux et seulement ces objets finaux de sorte que l'objet initial se retrouve intégralement dans les objets finaux. De plus, dans une étape de fractionnement, l'objet initial est divisé en les objets finaux de façon simultanée, c'est-à-dire que les objets finaux sont séparés en un même point de fractionnement. En particulier, dans le cas d'un objet initial fractionné en au moins trois objets finaux, les trois objets finaux sont, lors d'une étape de fractionnement, séparés simultanément les uns des autres et en un même point.

Dans la présente invention, une étape de séparation d'un objet initial entre plusieurs objets finaux signifie que, pour obtenir ces objets finaux, au moins une étape de fractionnement est nécessaire. Ainsi, pour obtenir les objets finaux, l'étape de séparation comprend une étape de fractionnement de l'objet initial en les objets finaux ou bien comprend une étape de fractionnement de l'objet initial en des objets intermédiaires suivie par une ou plusieurs étapes successives de fractionnement des objets intermédiaires en les objets finaux. Par ailleurs, dans une étape de séparation, l'objet initial ne se retrouve pas nécessairement intégralement dans les objets finaux, des ensembles ou assemblages ayant pu être extraits du procédé lors d'une ou plusieurs étapes de fractionnement et non utilisés lors des étapes de fractionnement ultérieures. Enfin, une étape de séparation peut comprendre une ou plusieurs étapes de réassemblage entre plusieurs objets intermédiaires issus d'une étape de fractionnement de l'étape de séparation pour obtenir d'autres objets intermédiaires ou bien les objets finaux.

Que ce soit dans une étape de séparation ou une étape de fractionnement, les objets finaux sont physiquement séparés les uns des autres, c'est-à-dire non en contact les uns avec les autres en aval de l'étape de séparation ou de fractionnement et en amont de toute étape de réassemblage de deux ou de plusieurs de ces objets finaux.

L'assemblage final est à simple hélice. Par définition, un assemblage à simple hélice est un assemblage dans lequel l'axe de chaque élément filaire métallique décrit une unique hélice, contrairement à un assemblage à double hélice dans lequel l'axe de chaque élément filaire métallique décrit une première hélice autour de l'axe de l'assemblage et une deuxième hélice autour d'une hélice décrite par l'axe de l'assemblage.

En d'autres termes, lorsque l'assemblage s'étend selon une direction sensiblement rectiligne, l'assemblage comprenant une ou plusieurs couches d'éléments filaires enroulés en hélice, chaque élément filaire métallique de la ou chaque couche décrit une trajectoire en forme d'hélice autour d'un axe principal sensiblement parallèle à la direction sensiblement rectiligne de sorte que, dans un plan de coupe sensiblement perpendiculaire à l'axe principal, la distance entre le centre de chaque élément filaire métallique d'une couche donnée et l'axe principal soit sensiblement constante et égale pour tous les éléments filaires métallique de chaque couche donnée. Au contraire, lorsqu'un assemblage à double hélice s'étend selon une direction sensiblement rectiligne, la distance entre le centre de chaque élément filaire métallique d'une couche donnée et la direction sensiblement rectiligne est différente pour tous les éléments filaires métalliques de la couche donnée.

Par élément filaire, on entend tout élément longiligne de grande longueur relativement à sa section transversale, quelle que soit la forme de cette dernière, par exemple circulaire, oblongue, rectangulaire ou carrée, ou même plate. Lorsqu'il est de forme circulaire, son diamètre est de préférence inférieur à 3 mm. Très préférentiellement, chaque élément filaire présente une section circulaire.

Dans un mode de réalisation, chaque élément filaire métallique comprend un unique monofilament élémentaire métallique.

Dans un autre mode de réalisation, chaque élément filaire métallique comprend un assemblage de plusieurs monofilaments élémentaires métalliques. Ainsi, par exemple, chaque élément filaire métallique comprend un toron de plusieurs monofilaments élémentaires métalliques. Chaque toron comprend de préférence une ou plusieurs couches de monofilaments élémentaires métalliques enroulés en hélice.

Par métallique, on entend par définition un monofilament élémentaire constitué majoritairement (c'est-à-dire pour plus de 50% de sa masse) ou intégralement (pour 100% de sa masse) d'un matériau métallique. Chaque monofilament élémentaire métallique est préférentiellement en acier, plus préférentiellement en acier perlitique (ou ferrito-perlitique) au carbone désigné ci-après par "acier au carbone", ou encore en acier inoxydable (par définition, acier comportant au moins 10,5% de chrome).

Un tel monofilament élémentaire métallique comprend préférentiellement une âme en acier, éventuellement revêtue d'une ou plusieurs couches d'un revêtement qui peut être métallique et/ou à base d'une composition adhésive non métallique. Par exemple, le revêtement métallique comprend un métal choisi parmi le zinc, le cuivre, l'étain, le cobalt et les alliages de ces métaux. Comme exemples d'alliages de ces métaux, on citera le laiton et le bronze.

Lorsqu'un acier au carbone est utilisé, sa teneur en carbone (% en masse d'acier) est de préférence comprise entre 0,1% et 1,2%. Chaque monofilament élémentaire métallique présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle l'élément de renfort est destiné à être noyé et un allègement de la matrice ainsi renforcée.

Dans un mode de réalisation préféré, chaque monofilament élémentaire métallique présente un diamètre allant de 0,05 mm à 0,50 mm, de préférence de 0,10 mm à 0,48 mm et plus préférentiellement de 0,15 mm à 0,45 mm.

Dans une première configuration, le premier assemblage fractionné est constitué de la couche D1, le deuxième assemblage fractionné est constitué de la couche E2 et le troisième assemblage fractionné est constitué de la couche F2. Dans cette première configuration D1'=C1' et E2'+F2'=C2'.

Dans une deuxième configuration, le premier assemblage fractionné est constitué de la couche D1, le deuxième assemblage fractionné comprend au moins deux couches comprenant une couche interne E1 constituée de E1'≥1 élément(s) filaire(s) métallique(s) enroulé(s) en hélice et la couche externe E2 constituée du ou des E2'≥1 élément(s) filaire(s) métallique(s) enroulé(s) en hélice autour de la couche interne E1, le ou les E1' élément(s) filaire(s) métallique(s) étant issu(s) de la couche interne A1 constituée de A1'>1 éléments filaires métalliques de l'assemblage transitoire, le ou les E2' élément(s) filaire(s) métallique(s) étant issu(s) de la couche externe A2 constituée de A2'>1 éléments filaires métalliques de l'assemblage transitoire et le troisième assemblage fractionné est constitué de la couche F2. Dans cette deuxième configuration D1'+E1'=C1' et E2'+F2'=C2'.

Dans une troisième configuration, le premier assemblage fractionné est constitué de la couche D1, le deuxième assemblage fractionné est constitué de la couche E2 et le troisième assemblage fractionné comprend au moins deux couches comprenant une couche interne F1 constituée de F1'≥1 élément(s) filaire(s) métallique(s) enroulé(s) en hélice et la couche externe F2 constituée du ou des F2'≥1 élément(s) filaire(s) métallique(s) enroulé(s) en hélice autour de la couche interne F1, le ou les F1' élément(s) filaire(s) métallique(s) étant issu(s) de la couche interne A1 constituée de A1'>1 éléments filaires métalliques de l'assemblage transitoire. Dans cette troisième configuration D1'+F1'=C1' et E2'+F2'=C2'.

Dans une quatrième configuration, le premier assemblage fractionné est constitué de la couche D1, le deuxième assemblage fractionné comprend au moins deux couches comprenant une couche interne E1 constituée de E1'≥1 élément(s) filaire(s) métallique(s) enroulé(s) en hélice et la couche externe E2 constituée du ou des E2'≥1 élément(s) filaire(s) métallique(s) enroulé(s) en hélice autour de la couche interne E1, le ou les E1' élément(s) filaire(s) métallique(s) étant issu(s) de la couche interne A1 constituée de A1'>1 éléments filaires métalliques de l'assemblage transitoire, le ou les E2' élément(s) filaire(s) métallique(s) étant issu(s) de la couche externe A2 constituée de A2'>1 éléments filaires métalliques de l'assemblage transitoire, le troisième assemblage fractionné comprend au moins deux couches comprenant une couche interne F1 constituée de F1'≥1 élément(s) filaire(s) métallique(s) enroulé(s) en hélice et la couche externe F2 constituée du ou des F2'≥1 élément(s) filaire(s) métallique(s) enroulé(s) en hélice autour de la couche interne F1, le ou les F1' élément(s) filaire(s) métallique(s) étant issu(s) de la couche interne A1 constituée de A1'>1 éléments filaires métalliques de l'assemblage transitoire. Dans cette quatrième configuration D1'+E1'+F1'=C1' et E2'+F2'=C2'.

Dans une cinquième configuration, le premier assemblage fractionné comprend au moins deux couches comprenant la couche interne D1 et une couche externe D2 constituée de D2'≥1 élément(s) filaire(s) métallique(s) enroulé(s) en hélice autour de la couche interne D1, le ou les D2' élément(s) filaire(s) métallique(s) étant issu(s) de la couche externe A2 constituée de A2'>1 éléments filaires métalliques de l'assemblage transitoire, le deuxième assemblage fractionné est constitué de la couche E2 et le troisième assemblage fractionné est constitué de la couche F2. Dans cette première configuration D1'=C1' et D2'+E2'+F2'=C2'.

Dans une sixième configuration, le premier assemblage fractionné comprend au moins deux couches comprenant la couche interne D1 et une couche externe D2 constituée de D2'≥1 élément(s) filaire(s) métallique(s) enroulé(s) en hélice autour de la couche interne D1, le ou les D2' élément(s) filaire(s) métallique(s) étant issu(s) de la couche externe A2 constituée de A2'>1 éléments filaires métalliques de l'assemblage transitoire, le deuxième assemblage fractionné comprend au moins deux couches comprenant une couche interne E1 constituée de E1'≥1 élément(s) filaire(s) métallique(s) enroulé(s) en hélice et la couche externe E2 constituée du ou des E2'≥1 élément(s) filaire(s) métallique(s) enroulé(s) en hélice autour de la couche interne E1, le ou les E1' élément(s) filaire(s) métallique(s) étant issu(s) de la couche interne A1 constituée de A1'>1 éléments filaires métalliques de l'assemblage transitoire, le ou les E2' élément(s) filaire(s) métallique(s) étant issu(s) de la couche externe A2 constituée de A2'>1 éléments filaires métalliques de l'assemblage transitoire et le troisième assemblage fractionné est constitué de la couche F2. Dans cette deuxième configuration D1'+E1'=C1' et D2'+E2'+F2'=C2'.

Dans une septième configuration, le premier assemblage fractionné comprend au moins deux couches comprenant la couche interne D1 et une couche externe D2 constituée de D2'≥1 élément(s) filaire(s) métallique(s) enroulé(s) en hélice autour de la couche interne D1, le ou les D2' élément(s) filaire(s) métallique(s) étant issu(s) de la couche externe A2 constituée de A2'>1 éléments filaires métalliques de l'assemblage transitoire, le deuxième assemblage fractionné est constitué de la couche E2 et le troisième assemblage fractionné comprend au moins deux couches comprenant une couche interne F1 constituée de F1'≥1 élément(s) filaire(s) métallique(s) enroulé(s) en hélice et la couche externe F2 constituée du ou des F2'≥1 élément(s) filaire(s) métallique(s) enroulé(s) en hélice autour de la couche interne F1, le ou les F1' élément(s) filaire(s) métallique(s) étant issu(s) de la couche interne A1 constituée de A1'>1 éléments filaires métalliques de l'assemblage transitoire. Dans cette troisième configuration D1'+F1'=C1' et D2'+E2'+F2'=C2'.

Dans une huitième configuration, le premier assemblage fractionné comprend au moins deux couches comprenant la couche interne D1 et une couche externe D2 constituée de D2'≥1 élément(s) filaire(s) métallique(s) enroulé(s) en hélice autour de la couche interne D1, le ou les D2' élément(s) filaire(s) métallique(s) étant issu(s) de la couche externe A2 constituée de A2'>1 éléments filaires métalliques de l'assemblage transitoire, le deuxième assemblage fractionné comprend au moins deux couches comprenant une couche interne E1 constituée de E1'≥1 élément(s) filaire(s) métallique(s) enroulé(s) en hélice et la couche externe E2 constituée du ou des E2'≥1 élément(s) filaire(s) métallique(s) enroulé(s) en hélice autour de la couche interne E1, le ou les E1' élément(s) filaire(s) métallique(s) étant issu(s) de la couche interne A1 constituée de A1'>1 éléments filaires métalliques de l'assemblage transitoire, , le ou les E2' élément(s) filaire(s) métallique(s) étant issu(s) de la couche externe A2 constituée de A2'>1 éléments filaires métalliques de l'assemblage transitoire, le troisième assemblage fractionné comprend au moins deux couches comprenant une couche interne F1 constituée de F1'≥1 élément(s) filaire(s) métallique(s) enroulé(s) en hélice et la couche externe F2 constituée du ou des F2'≥1 élément(s) filaire(s) métallique(s) enroulé(s) en hélice autour de la couche interne F1, le ou les F1' élément(s) filaire(s) métallique(s) étant issu(s) de la couche interne A1 constituée de A1'>1 éléments filaires métalliques de l'assemblage transitoire. Dans cette quatrième configuration D1'+E1'+F1'=C1' et D2'+E2'+F2'=C2'.

Dans un mode de réalisation dans lequel l'étape de réassemblage pour former l'assemblage final est réalisée séquentiellement, l'étape de réassemblage comprend, d'amont en aval:
o une étape de réassemblage amont de l'un des premier, deuxième et troisième assemblages fractionnés avec un autre des premier, deuxième et troisième assemblages fractionnés pour former un assemblage transitoire aval,
o une étape de réassemblage aval de l'assemblage transitoire aval avec l'assemblage restant entre les premier, deuxième et troisième assemblages fractionnés pour former l'assemblage final.

Dans une première variante du mode de réalisation dans lequel l'étape de réassemblage pour former l'assemblage final est réalisée séquentiellement à partir des assemblages fractionnés des première et cinquième configurations décrites ci-dessus, l'étape de réassemblage comprend, d'amont en aval :
o une étape de réassemblage amont du premier assemblage fractionné avec le deuxième assemblage fractionné pour former un assemblage transitoire aval,
o une étape de réassemblage aval de l'assemblage transitoire aval avec le troisième assemblage fractionné pour former l'assemblage final,
   ou
o une étape de réassemblage amont du premier assemblage fractionné avec le troisième assemblage fractionné pour former un assemblage transitoire aval,
o une étape de réassemblage aval de l'assemblage transitoire aval avec le deuxième assemblage fractionné pour former l'assemblage final.

Dans une deuxième variante du mode de réalisation dans lequel l'étape de réassemblage pour former l'assemblage final est réalisée séquentiellement à partir des assemblages fractionnés des deuxième et sixième configurations décrites ci-dessus, l'étape de réassemblage comprend, d'amont en aval:
o une étape de réassemblage amont du premier assemblage fractionné avec le deuxième assemblage fractionné pour former un assemblage transitoire aval,
o une étape de réassemblage aval de l'assemblage transitoire aval avec le troisième assemblage fractionné pour former l'assemblage final.

Dans une troisième variante du mode de réalisation dans lequel l'étape de réassemblage pour former l'assemblage final est réalisée séquentiellement à partir des assemblages fractionnés des troisième et septième configurations décrites ci-dessus l'étape de réassemblage comprend, d'amont en aval:
o une étape de réassemblage amont du premier assemblage fractionné avec le troisième assemblage fractionné pour former un assemblage transitoire aval,
o une étape de réassemblage aval de l'assemblage transitoire aval avec le deuxième assemblage fractionné pour former l'assemblage final.

Dans une quatrième variante du mode de réalisation dans lequel l'étape de réassemblage pour former l'assemblage final est réalisée séquentiellement à partir des assemblages fractionnés des quatrième et huitième configurations décrites ci-dessus, l'étape de réassemblage comprend, d'amont en aval:
o une étape de réassemblage amont du premier assemblage fractionné avec le deuxième assemblage fractionné pour former un assemblage transitoire aval,
o une étape de réassemblage aval de l'assemblage transitoire aval avec le troisième assemblage fractionné pour former l'assemblage final,
   ou
o une étape de réassemblage amont du premier assemblage fractionné avec le troisième assemblage fractionné pour former un assemblage transitoire aval,
o une étape de réassemblage aval de l'assemblage transitoire aval avec le deuxième assemblage fractionné pour former l'assemblage final.

Dans un autre mode de réalisation dans lequel l'étape de réassemblage pour former l'assemblage final est réalisée en une seule étape, l'étape de réassemblage comprend une étape de réassemblage simultané des premier, deuxième et troisième assemblages fractionnés pour former l'assemblage final.

Dans une première forme de réalisation permettant un réassemblage partiel des A1' éléments filaires métalliques de la couche interne A1, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire et l'étape de réassemblage d'au moins le premier assemblage fractionné, le deuxième assemblage fractionné et le troisième assemblage fractionné ensemble pour former l'assemblage final sont réalisées de sorte que C1'<A1' et C2'≤A2'

Dans des variantes d'une première version de la première forme de réalisation compatibles avec la deuxième configuration des premier, deuxième et troisième assemblages fractionnés décrites ci-dessus, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprend:
- une étape de séparation de l'assemblage transitoire entre :
   - un ensemble fractionné amont comprenant au moins deux couches comprenant une couche interne G1 constituée de G1'≥1 élément(s) filaire(s) métallique(s) enroulé(s) en hélice autour du noyau transitoire et une couche externe G2 constituée de G2'≥1 élément(s) filaire(s) métallique(s) enroulé(s) en hélice autour de la couche interne G1, le ou les G1' élément(s) filaire(s) métallique(s) étant issu(s) de la couche interne A1 constituée de A1'>1 éléments filaires métalliques de l'assemblage transitoire et le ou les G2' élément(s) filaire(s) métallique(s) étant issu(s) de la couche externe A2 constituée de A2'>1 éléments filaires métalliques de l'assemblage transitoire, et
   - le troisième assemblage fractionné, et
- une étape de séparation de l'ensemble fractionné amont entre :
   - le premier assemblage fractionné,
   - le deuxième assemblage fractionné, et
   - le noyau transitoire ou un ou plusieurs ensembles comprenant le noyau transitoire, de préférence le noyau transitoire.

Dans ces variantes de la première version de la première forme de réalisation, on a A1'≥G1', A2'≥F2'+G2', G1'≥D1' et G2'≥E2'.

Dans ces variantes, l'ensemble fractionné amont comprend la couche interne G1 constituée du ou des G1' élément(s) filaire(s) métallique(s), la couche externe G2 constituée de G2' élément(s) filaire(s) métallique(s) enroulés en hélice autour de la couche interne G1 et le noyau transitoire, le ou les G1' élément(s) filaire(s) métallique(s) étant enroulés en hélice autour du noyau transitoire. De préférence, dans un mode de réalisation permettant de fabriquer un assemblage final constitué de deux couches d'éléments filaires métalliques, l'ensemble fractionné amont est constitué de la couche interne G1 constituée du ou des G1' élément(s) filaire(s) métallique(s), de la couche externe G2 constituée du ou des G2' élément(s) filaire(s) métallique(s) enroulés en hélice autour de la couche interne G1 et du noyau transitoire, le ou les G1' élément(s) filaire(s) métallique(s) étant enroulés en hélice autour du noyau transitoire.

Dans ces variantes de la première version de la première forme de réalisation, l'étape de séparation de l'assemblage transitoire entre l'ensemble fractionné amont et le troisième assemblage fractionné a lieu en amont de l'étape de séparation de l'ensemble fractionné amont entre le premier assemblage fractionné, le deuxième assemblage fractionné et le noyau transitoire ou un ou plusieurs ensembles comprenant le noyau transitoire, de préférence le noyau transitoire.

Avantageusement, dans ces variantes de la première version de la première forme de réalisation, l'étape de séparation de l'ensemble fractionné amont entre le premier assemblage fractionné, le deuxième assemblage fractionné, et le noyau transitoire ou un ou plusieurs ensembles comprenant le noyau transitoire, de préférence le noyau transitoire comprend :
- une étape de séparation de l'ensemble fractionné amont entre :
   - un ensemble précurseur comprenant au moins une couche I1 constituée de I1'>1 éléments filaires métalliques enroulés en hélice, les I1' éléments filaires métalliques étant issus de la couche interne G1 constituée des G1' éléments filaires métalliques de l'ensemble fractionné amont,
   - le deuxième assemblage fractionné,
   - le noyau transitoire ou un ou plusieurs ensembles comprenant le noyau transitoire, de préférence le noyau transitoire, et
- une étape de séparation de l'ensemble précurseur entre :
   - un ensemble principal comprenant au moins une couche J1 constituée de J1'≥1 élément(s) filaire(s) métallique(s) enroulé(s) en hélice, le ou les J1'≥1 élément(s) filaire(s) métallique(s) étant issu(s) de la couche I1 constituée des I1'>1 éléments filaires métalliques de l'ensemble précurseur, l'ensemble principal formant le premier assemblage fractionné, et
   - un ensemble complémentaire comprenant au moins une couche K1 constituée de K1'≥1 élément(s) filaire(s) métallique(s) enroulé(s) en hélice, le ou les K1'≥1 élément(s) filaire(s) métallique(s) étant issu(s) de la couche I1 constituée des I1'>1 éléments filaires métalliques de l'ensemble précurseur.

L'ensemble principal formant le premier assemblage fractionné, on a D1'=J1'.

De préférence, dans un mode de réalisation permettant de fabriquer un assemblage final constitué de deux couches d'éléments filaires métalliques, l'ensemble précurseur est constitué de la couche I1 constituée des I1' éléments filaires métalliques, l'ensemble principal formant le premier assemblage fractionné est constitué de la couche J1 constituée du ou des J1' élément(s) filaire(s) métallique(s) et l'ensemble complémentaire est constitué de la couche K1 constituée du ou des K1' élément(s) filaire(s) métallique(s).

Dans ces variantes de la première version de la première forme de réalisation, l'étape de séparation de l'ensemble fractionné amont entre l'ensemble précurseur, le deuxième assemblage fractionné et le noyau transitoire ou un ou plusieurs ensembles comprenant le noyau transitoire, de préférence le noyau transitoire a lieu en amont de l'étape de séparation de l'ensemble précurseur entre l'ensemble principal formant le premier assemblage fractionné et l'ensemble complémentaire.

Avantageusement, l'étape de séparation de l'ensemble précurseur entre l'ensemble principal formant le premier assemblage fractionné et l'ensemble complémentaire comprend une étape de fractionnement de l'ensemble précurseur en :
- l'ensemble principal formant le premier assemblage fractionné, et
- l'ensemble complémentaire.

Ainsi, on a avantageusement, I1'=J1'+K1'.

Dans une première variante de la première version de la première forme de réalisation dans laquelle le noyau transitoire est séparé avec le premier assemblage fractionné, l'étape de séparation de l'ensemble fractionné amont entre l'ensemble précurseur, le deuxième assemblage fractionné et le noyau transitoire ou un ou plusieurs ensembles comprenant le noyau transitoire, de préférence le noyau transitoire comprend :
- une étape de séparation de l'ensemble fractionné amont entre :
   - un ensemble fractionné aval comprenant au moins une couche H1 constituée de H1'≥1 élément(s) filaire(s) métallique(s) enroulé(s) en hélice autour du noyau transitoire, le ou les H1' élément(s) filaire(s) métallique(s) étant issu(s) de la couche interne G1 constituée des G1' éléments filaires métalliques de l'ensemble fractionné amont,
   - le deuxième assemblage fractionné, et
- une étape de séparation de l'ensemble fractionné aval entre :
   - l'ensemble précurseur, et
   - le noyau transitoire ou un ou plusieurs ensembles comprenant le noyau transitoire, de préférence le noyau transitoire.

Dans la première variante de la première version de la première forme de réalisation, on a ainsi avantageusement G1'≥H1'+E1', G2'≥E2' et H1'≥I1'.

Dans cette première variante, l'ensemble fractionné aval comprend la couche H1 constituée par le ou les H1' élément(s) filaire(s) métallique(s) et le noyau transitoire, le ou les H1' élément(s) filaire(s) métallique(s) étant enroulés en hélice autour du noyau transitoire. De préférence, dans un mode de réalisation permettant de fabriquer un assemblage final constitué de deux couches d'éléments filaires métalliques, l'ensemble fractionné aval est constitué de la couche H1 constituée par le ou les H1' élément(s) filaire(s) métallique(s) et du noyau transitoire, le ou les H1' élément(s) filaire(s) métallique(s) étant enroulés en hélice autour du noyau transitoire.

Dans cette première variante, l'étape de séparation de l'ensemble fractionné amont entre l'ensemble fractionné aval et le deuxième assemblage fractionné a lieu en amont de l'étape de séparation de l'ensemble fractionné aval entre l'ensemble précurseur et le noyau transitoire ou un ou plusieurs ensembles comprenant le noyau transitoire, de préférence le noyau transitoire.

Avantageusement, dans cette première variante, l'étape de séparation de l'ensemble fractionné amont entre l'ensemble fractionné aval et le deuxième assemblage fractionné comprend une étape de fractionnement de l'ensemble fractionné amont en :
- l'ensemble fractionné aval, et
- le deuxième assemblage fractionné.

Ainsi, on a avantageusement G1'=H1'+E1' et G2'=E2'.

Avantageusement, dans cette première variante, l'étape de séparation de l'ensemble fractionné aval entre l'ensemble précurseur et le noyau transitoire ou un ou plusieurs ensembles comprenant le noyau transitoire, de préférence le noyau transitoire comprend une étape de fractionnement de l'ensemble fractionné aval en :
- l'ensemble précurseur, et
- le noyau transitoire ou un ou plusieurs ensembles comprenant le noyau transitoire, de préférence le noyau transitoire.

Ainsi, on a avantageusement, H1'=I1' dans le cas d'une étape de fractionnement de l'ensemble fractionné aval en l'ensemble précurseur et le noyau transitoire.

Dans une deuxième variante de la première forme de réalisation dans laquelle le noyau transitoire est séparé avec le deuxième assemblage fractionné, l'étape de séparation de l'ensemble fractionné amont entre l'ensemble précurseur, le deuxième assemblage fractionné et le noyau transitoire ou un ou plusieurs ensembles comprenant le noyau transitoire, de préférence le noyau transitoire comprend:
- une étape de séparation de l'ensemble fractionné amont entre :
   - un ensemble fractionné aval comprenant au moins deux couches comprenant une couche interne H1 constituée de H1'≥1 élément(s) filaire(s) métallique(s) enroulé(s) en hélice autour du noyau transitoire et une couche externe H2 constituée de H2'≥1 élément(s) filaire(s) métallique(s) enroulé(s) en hélice autour de la couche interne H1, le ou les H1' élément(s) filaire(s) métallique(s) étant issu(s) de la couche interne G1 constituée de G1'>1 éléments filaires métalliques de l'ensemble fractionné amont et le ou les H2' élément(s) filaire(s) métallique(s) étant issu(s) de la couche externe G2 constituée de G2'>1 éléments filaires métalliques de l'ensemble fractionné amont, et
   - l'ensemble précurseur, et
- une étape de séparation de l'ensemble fractionné aval entre :
   - le deuxième assemblage fractionné, et
   - le noyau transitoire ou un ou plusieurs ensembles comprenant le noyau transitoire, de préférence le noyau transitoire.

Dans la deuxième variante de la première forme de réalisation, on a ainsi avantageusement G1'≥H1'+I1', G2'≥E2', H1'≥E1' et H2'≥E2'.

Dans cette deuxième variante, l'ensemble fractionné aval comprend la couche interne H1 constituée du ou des H1' élément(s) filaire(s) métallique(s), la couche externe H2 constituée de H2' élément(s) filaire(s) métallique(s) enroulés en hélice autour de la couche interne H1 et le noyau transitoire, le ou les H1' élément(s) filaire(s) métallique(s) étant enroulés en hélice autour du noyau transitoire. De préférence, dans un mode de réalisation permettant de fabriquer un assemblage final constitué de deux couches d'éléments filaires métalliques, l'ensemble fractionné aval est constitué de la couche interne H1 constituée du ou des H1' élément(s) filaire(s) métallique(s), de la couche externe H2 constituée du ou des H2' élément(s) filaire(s) métallique(s) enroulés en hélice autour de la couche interne H1 et du noyau transitoire, le ou les H1' élément(s) filaire(s) métallique(s) étant enroulés en hélice autour du noyau transitoire.

Dans cette deuxième variante, l'étape de séparation de l'ensemble fractionné amont entre l'ensemble fractionné aval et l'ensemble précurseur a lieu en amont de l'étape de séparation de l'ensemble fractionné aval entre le deuxième assemblage fractionné et le noyau transitoire ou un ou plusieurs ensembles comprenant le noyau transitoire, de préférence le noyau transitoire.

Avantageusement, dans cette deuxième variante, l'étape de séparation de l'ensemble fractionné amont entre l'ensemble fractionné aval et l'ensemble précurseur comprend une étape de fractionnement de l'ensemble fractionné amont en :
- l'ensemble fractionné aval, et
- l'ensemble précurseur.

Ainsi, on a avantageusement G1'=H1'+I1', G2'=E2'.

Avantageusement, dans cette deuxième variante, l'étape de séparation de l'ensemble fractionné aval entre le deuxième assemblage fractionné et le noyau transitoire ou un ou plusieurs ensembles comprenant le noyau transitoire, de préférence le noyau transitoire, comprend une étape de fractionnement de l'ensemble fractionné aval en :
- le deuxième assemblage fractionné, et
- le noyau transitoire ou un ou plusieurs ensembles comprenant le noyau transitoire, de préférence le noyau transitoire.

Ainsi, on a avantageusement H1'=E1' et H2'=E2' dans le cas d'une étape de fractionnement de l'ensemble fractionné aval en le deuxième assemblage fractionné et le noyau transitoire.

Dans des variantes d'une deuxième version de la première forme de réalisation compatibles avec la première configuration des premier, deuxième et troisième assemblages fractionnés décrites ci-dessus, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprend:
- une étape de séparation de l'assemblage transitoire entre :
   - un ensemble fractionné intermédiaire comprenant une couche Q1 constituée de Q1'>1 éléments filaires métalliques enroulés en hélice autour du noyau transitoire, les Q1' éléments filaires métalliques étant issus de la couche interne A1 constituée de A1'>1 éléments filaires métalliques de l'assemblage transitoire, et
   - le deuxième assemblage fractionné,
   - le troisième assemblage fractionné, et
- une étape de séparation de l'ensemble fractionné intermédiaire entre :
   - un ensemble dérivé comprenant au moins une couche Z1 constituée de Z1'≥1 élément(s) filaire(s) métallique(s) enroulé(s) en hélice, le ou les Z1' élément(s) filaire(s) métallique(s) étant issu(s) de la couche interne Q1 constituée des Q1'>1 éléments filaires métalliques de l'ensemble fractionné intermédiaire,
   - le premier assemblage fractionné, et
   - le noyau transitoire ou un ou plusieurs ensembles comprenant le noyau transitoire, de préférence le noyau transitoire.

Dans ces variantes de la deuxième version de la première forme de réalisation, on a A1'≥Q1', A2'≥E2'+F2' et Q1'≥Z1'+D1'.

Dans ces variantes, l'ensemble fractionné intermédiaire comprend la couche Q1 constituée des Q1' éléments filaires métalliques et le noyau transitoire, les Q1' éléments filaires métalliques étant enroulés en hélice autour du noyau transitoire. De préférence, dans un mode de réalisation permettant de fabriquer un assemblage final constitué de deux couches d'éléments filaires métalliques, l'ensemble fractionné intermédiaire est constitué de la couche Q1 constituée des Q1' éléments filaires métalliques et du noyau transitoire, les Q1' éléments filaires métalliques étant enroulés en hélice autour du noyau transitoire.

De préférence, dans un mode de réalisation permettant de fabriquer un assemblage final constitué de deux couches d'éléments filaires métalliques, l'ensemble dérivé est constituée de la couche Z1 constituée de Z1'≥1 élément(s) filaire(s) métallique(s).

Dans ces variantes de la deuxième version de la première forme de réalisation, l'étape de séparation de l'assemblage transitoire entre l'ensemble fractionné intermédiaire, le deuxième assemblage fractionné et le troisième assemblage fractionné a lieu en amont de l'étape de séparation de l'ensemble fractionné intermédiaire entre l'ensemble dérivé, le premier assemblage fractionné et le noyau transitoire ou un ou plusieurs ensembles comprenant le noyau transitoire, de préférence le noyau transitoire.

Avantageusement, dans ces variantes de la première forme de réalisation, l'étape de séparation de l'ensemble fractionné intermédiaire entre l'ensemble dérivé, le premier assemblage fractionné et le noyau transitoire ou un ou plusieurs ensembles comprenant le noyau transitoire, de préférence le noyau transitoire comprend :
- une étape de séparation de l'ensemble fractionné intermédiaire entre :
   - un premier ensemble séparé comprenant au moins une couche W1 constituée de W1'≥1 élément(s) filaire(s) métallique(s) enroulé(s) en hélice, le ou les W1' élément(s) filaire(s) métallique(s) étant issu(s) de la couche Q1 constituée des Q1' éléments filaires métalliques de l'ensemble fractionné intermédiaire,
   - un deuxième ensemble séparé comprenant au moins une couche X1 constituée de X1'≥1 élément(s) filaire(s) métallique(s) enroulé(s) en hélice, le ou les X1' élément(s) filaire(s) métallique(s) étant issu(s) de la couche Q1 constituée des Q1' éléments filaires métalliques de l'ensemble fractionné intermédiaire,
- l'ensemble dérivé,
- le noyau transitoire ou un ou plusieurs ensembles comprenant le noyau transitoire, de préférence le noyau transitoire,
- une étape de réassemblage du premier ensemble séparé et du deuxième ensemble séparé ensemble pour former le premier assemblage fractionné.

Ainsi, avantageusement, on a Q1'≥W1'+X1'+Z1' et W1'+X1'=D1'

De préférence, dans un mode de réalisation permettant de fabriquer un assemblage final constitué de deux couches d'éléments filaires métalliques, le premier ensemble séparé est constitué de la couche W1 constituée du ou des W1' élément(s) filaire(s) métallique(s), le deuxième ensemble dérivé est constitué de la couche X1 constituée du ou des X1' élément(s) filaire(s) métallique(s).

Dans ces variantes de la première forme de réalisation, l'étape de séparation de l'ensemble fractionné intermédiaire entre le premier ensemble séparé, le deuxième ensemble séparé, l'ensemble dérivé, le noyau transitoire ou un ou plusieurs ensembles comprenant le noyau transitoire, de préférence le noyau transitoire a lieu en amont de l'étape de réassemblage du premier ensemble séparé et du deuxième ensemble séparé ensemble pour former le premier assemblage fractionné.

Dans ces variantes de la deuxième version de la première forme de réalisation, selon une première option mettant en oeuvre une séquence d'étapes de séparation successives, l'étape de séparation de l'ensemble fractionné intermédiaire entre le premier ensemble séparé, le deuxième ensemble séparé, l'ensemble dérivé, le noyau transitoire ou un ou plusieurs ensembles comprenant le noyau transitoire, de préférence le noyau transitoire comprend :
- une étape de séparation de l'ensemble fractionné intermédiaire entre :
   - l'ensemble dérivé, et
   - un ensemble fractionné aval comprenant une couche H1 constituée de H1'≥1 élément(s) filaire(s) métallique(s) enroulé(s) en hélice autour du noyau transitoire, le ou les H1' élément(s) filaire(s) métallique(s) étant issu(s) de la couche Q1 constituée des Q1'>1 éléments filaires métalliques de l'ensemble fractionné intermédiaire, et
   - une étape de séparation de l'ensemble fractionné aval entre :
      - le premier ensemble séparé,
      - le deuxième ensemble séparé,
      - le noyau transitoire ou un ou plusieurs ensembles comprenant le noyau transitoire, de préférence le noyau transitoire.

Ainsi, avantageusement, on a Q1'≥H1'+Z1' et H1'≥W1'+X1'.

De préférence, dans un mode de réalisation permettant de fabriquer un assemblage final constitué de deux couches d'éléments filaires métalliques, l'ensemble fractionné aval est constitué de la couche H1 constituée du ou des H1' élément(s) filaire(s) métallique(s) et du noyau transitoire, le ou les H1' élément(s) filaire(s) métallique(s) étant enroulés autour du noyau transitoire.

Dans ces variantes de la première forme de réalisation, l'étape de séparation de l'ensemble fractionné intermédiaire entre l'ensemble dérivé et l'ensemble fractionné aval a lieu en amont de l'étape de séparation de l'ensemble fractionné aval entre le premier ensemble séparé, le deuxième ensemble séparé et le noyau transitoire ou un ou plusieurs ensembles comprenant le noyau transitoire, de préférence le noyau transitoire.

Avantageusement, dans cette première option, l'étape de séparation de l'ensemble fractionné intermédiaire entre l'ensemble dérivé et l'ensemble fractionné aval comprend une étape de fractionnement de l'ensemble fractionné intermédiaire en l'ensemble dérivé et l'ensemble fractionné aval.

Ainsi, on a avantageusement Q1'=Z1'+H1'.

Avantageusement, dans cette première option, l'étape de séparation de l'ensemble fractionné aval entre le premier ensemble séparé, le deuxième ensemble séparé et le noyau transitoire ou un ou plusieurs ensembles comprenant le noyau transitoire, de préférence le noyau transitoire comprend une étape de fractionnement de l'ensemble fractionné aval en le premier ensemble séparé, le deuxième ensemble séparé et le noyau transitoire ou un ou plusieurs ensembles comprenant le noyau transitoire, de préférence le noyau transitoire.

Ainsi, on a avantageusement H1'=W1'+X1' dans le cas d'une étape de fractionnement de l'ensemble fractionné aval en le premier ensemble séparé, le deuxième ensemble séparé et le noyau transitoire.

Dans ces variantes de la deuxième version de la première forme de réalisation, selon une deuxième option mettant en oeuvre une étape de séparation simultanée, l'étape de séparation de l'ensemble fractionné intermédiaire entre le premier ensemble séparé, le deuxième ensemble séparé, l'ensemble dérivé, le noyau transitoire ou un ou plusieurs ensembles comprenant le noyau transitoire, de préférence le noyau transitoire comprend une étape de fractionnement de l'ensemble fractionné intermédiaire en le premier ensemble séparé, le deuxième ensemble séparé, l'ensemble dérivé, le noyau transitoire ou un ou plusieurs ensembles comprenant le noyau transitoire, de préférence le noyau transitoire.

Dans une deuxième forme de réalisation permettant un réassemblage total des A1' éléments filaires métalliques de la couche interne A1, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire et l'étape de réassemblage d'au moins le premier assemblage fractionné, le deuxième assemblage fractionné et le troisième assemblage fractionné ensemble pour former l'assemblage final sont réalisées de sorte que C1'=A1' et C2'≤A2'.

Dans des variantes d'une première version de la deuxième forme de réalisation compatibles avec la deuxième configuration des premier, deuxième et troisième assemblages fractionnés décrites ci-dessus, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprend :
- une étape de séparation de l'assemblage transitoire entre :
   - un ensemble fractionné amont comprenant au moins deux couches comprenant une couche interne G1 constituée de G1'≥1 élément(s) filaire(s) métallique(s) enroulé(s) en hélice autour du noyau transitoire et une couche externe G2 constituée de G2'≥1 élément(s) filaire(s) métallique(s) enroulé(s) en hélice autour de la couche interne G1, le ou les G1' élément(s) filaire(s) métallique(s) étant issu(s) de la couche interne A1 constituée de A1'>1 éléments filaires métalliques de l'assemblage transitoire et le ou les G2' élément(s) filaire(s) métallique(s) étant issu(s) de la couche externe A2 constituée de A2'>1 éléments filaires métalliques de l'assemblage transitoire, et
   - le troisième assemblage fractionné, et
- une étape de séparation de l'ensemble fractionné amont entre :
   - le premier assemblage fractionné,
   - le deuxième assemblage fractionné, et
   - le noyau transitoire.

Dans ces variantes de la deuxième forme de réalisation, on a A1'≥G1', A2'≥F2'+G2', G1'≥D1' et G2'≥E2'.

Dans ces variantes, l'ensemble fractionné amont comprend la couche interne G1 constituée du ou des G1' élément(s) filaire(s) métallique(s), la couche externe G2 constituée de G2' élément(s) filaire(s) métallique(s) enroulés en hélice autour de la couche interne G1 et le noyau transitoire, le ou les G1' élément(s) filaire(s) métallique(s) étant enroulés en hélice autour du noyau transitoire. De préférence, dans un mode de réalisation permettant de fabriquer un assemblage final constitué de deux couches d'éléments filaires métalliques, l'ensemble fractionné amont est constitué de la couche interne G1 constituée du ou des G1' élément(s) filaire(s) métallique(s), de la couche externe G2 constituée du ou des G2' élément(s) filaire(s) métallique(s) enroulés en hélice autour de la couche interne G1 et du noyau transitoire, le ou les G1' élément(s) filaire(s) métallique(s) étant enroulés en hélice autour du noyau transitoire.

Dans ces variantes de la première version de la deuxième forme de réalisation, l'étape de séparation de l'assemblage transitoire entre l'ensemble fractionné amont et le troisième assemblage fractionné a lieu en amont de l'étape de séparation de l'ensemble fractionné amont entre le premier assemblage fractionné, le deuxième assemblage fractionné et le noyau transitoire ou un ou plusieurs ensembles comprenant le noyau transitoire, de préférence le noyau transitoire.

Dans une première variante de la première version de la deuxième forme de réalisation dans laquelle le noyau transitoire est séparé avec le premier assemblage fractionné, l'étape de séparation de l'ensemble fractionné amont entre le premier assemblage fractionné, le deuxième assemblage fractionné et le noyau transitoire comprend :
- une étape de séparation de l'ensemble fractionné amont entre :
   - un ensemble fractionné aval comprenant au moins une couche H1 constituée de H1'≥1 élément(s) filaire(s) métallique(s) enroulé(s) en hélice autour du noyau transitoire, le ou les H1' élément(s) filaire(s) métallique(s) étant issu(s) de la couche interne G1 constituée des G1' éléments filaires métalliques de l'ensemble fractionné amont,
   - le deuxième assemblage fractionné, et
- une étape de séparation de l'ensemble fractionné aval entre :
   - le premier assemblage fractionné, et
   - le noyau transitoire .

Dans la première variante de la première version de la deuxième forme de réalisation, on a ainsi avantageusement G1'=H1'+E1', G2'≥E2' et H1'=D1'.

Dans cette première variante, l'ensemble fractionné aval comprend la couche H1 constituée du ou des H1' élément(s) filaire(s) métallique(s) et le noyau transitoire, le ou les H1' élément(s) filaire(s) métallique(s) étant enroulés en hélice autour du noyau transitoire. De préférence, dans un mode de réalisation permettant de fabriquer un assemblage final constitué de deux couches d'éléments filaires métalliques, l'ensemble fractionné aval est constitué de la couche H1 constituée du ou des H1' élément(s) filaire(s) métallique(s) et du noyau transitoire, le ou les H1' élément(s) filaire(s) métallique(s) étant enroulés en hélice autour du noyau transitoire.

Dans cette première variante de la première version de la deuxième forme de réalisation, l'étape de séparation de l'ensemble fractionné amont entre l'ensemble fractionné aval et le deuxième assemblage fractionné a lieu en amont de l'étape de séparation de l'ensemble fractionné aval entre le premier assemblage fractionné et le noyau transitoire.

Avantageusement, l'étape de séparation de l'ensemble fractionné amont entre l'ensemble fractionné aval et le deuxième assemblage fractionné comprend une étape de fractionnement de l'ensemble fractionné amont en :
- l'ensemble fractionné aval, et
- le deuxième assemblage fractionné.

Ainsi, on a avantageusement, G1'=H1'+E1' et G2'=E2'.

Avantageusement, l'étape de séparation de l'ensemble fractionné aval entre le premier assemblage fractionné et le noyau transitoire comprend une étape de fractionnement de l'ensemble fractionné aval en :
- le premier assemblage fractionné, et
- le noyau transitoire.

Ainsi, on a avantageusement, H1'=D1'.

Dans une deuxième variante de la première version de la deuxième forme de réalisation dans laquelle le noyau transitoire est séparé avec le deuxième assemblage fractionné, l'étape de séparation de l'ensemble fractionné amont entre le premier assemblage fractionné, le deuxième assemblage fractionné et le noyau transitoire comprend :
- une étape de séparation de l'ensemble fractionné amont entre :
   - un ensemble fractionné aval comprenant au moins deux couches comprenant une couche interne H1 constituée de H1'≥1 élément(s) filaire(s) métallique(s) enroulé(s) en hélice autour du noyau transitoire et une couche externe H2 constituée de H2'≥1 élément(s) filaire(s) métallique(s) enroulé(s) en hélice autour de la couche interne H1, le ou les H1' élément(s) filaire(s) métallique(s) étant issu(s) de la couche interne G1 constituée de G1'>1 éléments filaires métalliques de l'ensemble fractionné amont et le ou les H2' élément(s) filaire(s) métallique(s) étant issu(s) de la couche externe G2 constituée de G2'>1 éléments filaires métalliques de l'ensemble fractionné amont, et
   - le premier assemblage fractionné, et
- une étape de séparation de l'ensemble fractionné aval entre :
   - le deuxième assemblage fractionné, et
   - le noyau transitoire.

Dans la deuxième variante de la première version de la deuxième forme de réalisation, on a ainsi avantageusement G1'=H1'+D1', G2'≥H2', H1'=E1' et H2'≥E2'.

Dans cette deuxième variante, l'ensemble fractionné aval comprend la couche interne H1 constituée du ou des H1' élément(s) filaire(s) métallique(s), la couche externe H2 constituée de H2' élément(s) filaire(s) métallique(s) enroulés en hélice autour de la couche interne H1 et le noyau transitoire, le ou les H1' élément(s) filaire(s) métallique(s) étant enroulés en hélice autour du noyau transitoire. De préférence, dans un mode de réalisation permettant de fabriquer un assemblage final constitué de deux couches d'éléments filaires métalliques, l'ensemble fractionné aval est constitué de la couche interne H1 constituée du ou des H1' élément(s) filaire(s) métallique(s), de la couche externe H2 constituée du ou des H2' élément(s) filaire(s) métallique(s) enroulés en hélice autour de la couche interne H1 et du noyau transitoire, le ou les H1' élément(s) filaire(s) métallique(s) étant enroulés en hélice autour du noyau transitoire.

Dans cette deuxième variante, l'étape de séparation de l'ensemble fractionné amont entre l'ensemble fractionné aval et le premier assemblage fractionné a lieu en amont de l'étape de séparation de l'ensemble fractionné aval entre le deuxième assemblage fractionné et le noyau transitoire.

Avantageusement, dans cette deuxième variante, l'étape de séparation de l'ensemble fractionné amont entre l'ensemble fractionné aval et le premier assemblage fractionné comprend une étape de fractionnement de l'ensemble fractionné amont en :
- l'ensemble fractionné aval, et
- le premier assemblage fractionné.

Ainsi, on a avantageusement G1'=H1'+D1', G2'=H2'.

Avantageusement, dans cette deuxième variante, l'étape de séparation de l'ensemble fractionné aval entre le deuxième assemblage fractionné et le noyau transitoire comprend une étape de fractionnement de l'ensemble fractionné aval en :
- le deuxième assemblage fractionné, et
- le noyau transitoire.

Ainsi, on a avantageusement H1'=E1' et H2'=E2'.

Dans des variantes d'une deuxième version de la deuxième forme de réalisation compatibles avec la première configuration des premier, deuxième et troisième assemblages fractionnés décrites ci-dessus, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprend:
- une étape de séparation de l'assemblage transitoire entre :
   - un ensemble fractionné intermédiaire comprenant une couche Q1 constituée de Q1'>1 éléments filaires métalliques enroulés en hélice autour du noyau transitoire, les Q1' éléments filaires métalliques étant issus de la couche interne A1 constituée de A1'>1 éléments filaires métalliques de l'assemblage transitoire, et
   - le deuxième assemblage fractionné,
   - le troisième assemblage fractionné, et
- une étape de séparation de l'ensemble fractionné intermédiaire entre :
   - le premier assemblage fractionné, et
   - le noyau transitoire ou un ou plusieurs ensembles comprenant le noyau transitoire, de préférence le noyau transitoire.

Dans ces variantes de la deuxième version de la première forme de réalisation, on a A1'≥Q1', A2'≥E2'+F2' et Q1'≥D1'.

Dans ces variantes, l'ensemble fractionné intermédiaire comprend la couche Q1 constituée des Q1' éléments filaires métalliques et le noyau transitoire, les Q1' éléments filaires métalliques étant enroulés en hélice autour du noyau transitoire. De préférence, dans un mode de réalisation permettant de fabriquer un assemblage final constitué de deux couches d'éléments filaires métalliques, l'ensemble fractionné intermédiaire est constitué de la couche Q1 constituée du ou des Q1' éléments filaires métalliques et du noyau transitoire, les Q1' éléments filaires métalliques étant enroulés en hélice autour du noyau transitoire.

Dans ces variantes de la deuxième version de la première forme de réalisation, l'étape de séparation de l'assemblage transitoire entre l'ensemble fractionné intermédiaire, le deuxième assemblage fractionné et le troisième assemblage fractionné a lieu en amont de l'étape de séparation de l'ensemble fractionné intermédiaire entre le premier assemblage fractionné et le noyau transitoire ou un ou plusieurs ensembles comprenant le noyau transitoire, de préférence le noyau transitoire.

Avantageusement, dans ces variantes de la deuxième forme de réalisation, l'étape de séparation de l'ensemble fractionné intermédiaire entre le premier assemblage fractionné et le noyau transitoire ou un ou plusieurs ensembles comprenant le noyau transitoire, de préférence le noyau transitoire comprend :
- une étape de séparation de l'ensemble fractionné intermédiaire entre :
   - un premier ensemble séparé comprenant au moins une couche W1 constituée de W1'≥1 élément(s) filaire(s) métallique(s) enroulé(s) en hélice, le ou les W1' élément(s) filaire(s) métallique(s) étant issu(s) de la couche Q1 constituée des Q1' éléments filaires métalliques de l'ensemble fractionné intermédiaire,
   - un deuxième ensemble séparé comprenant au moins une couche X1 constituée de X1'≥1 élément(s) filaire(s) métallique(s) enroulé(s) en hélice, le ou les X1' élément(s) filaire(s) métallique(s) étant issu(s) de la couche Q1 constituée des Q1' éléments filaires métalliques de l'ensemble fractionné intermédiaire,
- le noyau transitoire ou un ou plusieurs ensembles comprenant le noyau transitoire, de préférence le noyau transitoire,
- une étape de réassemblage du premier ensemble séparé et du deuxième ensemble séparé ensemble pour former le premier assemblage fractionné.

Ainsi, avantageusement, on a Q1'≥W1'+X1' et W1'+X1'=D1'.

De préférence, dans un mode de réalisation permettant de fabriquer un assemblage final constitué de deux couches d'éléments filaires métalliques, le premier ensemble séparé est constitué de la couche W1 constituée du ou des W1' élément(s) filaire(s) métallique(s), le deuxième ensemble dérivé est constitué de la couche X1 constituée du ou des X1' élément(s) filaire(s) métallique(s).

Dans ces variantes de la deuxième forme de réalisation, l'étape de séparation de l'ensemble fractionné intermédiaire entre le premier ensemble séparé, le deuxième ensemble séparé, le noyau transitoire ou un ou plusieurs ensembles comprenant le noyau transitoire, de préférence le noyau transitoire a lieu en amont de l'étape de réassemblage du premier ensemble séparé et du deuxième ensemble séparé ensemble pour former le premier assemblage fractionné.

Avantageusement, dans ces variantes de la deuxième forme de réalisation, l'étape de séparation de l'ensemble fractionné intermédiaire entre le premier ensemble séparé, le deuxième ensemble séparé et le noyau transitoire ou un ou plusieurs ensembles comprenant le noyau transitoire, de préférence le noyau transitoire comprend une étape de fractionnement de l'ensemble fractionné intermédiaire en le premier ensemble séparé, le deuxième ensemble séparé et le noyau transitoire ou un ou plusieurs ensembles comprenant le noyau transitoire, de préférence le noyau transitoire.

Ainsi, on a avantageusement Q1'=W1'+X1' dans le cas d'une étape de fractionnement de l'ensemble fractionné intermédiaire en le premier ensemble séparé, le deuxième ensemble séparé et le noyau transitoire.

Dans une première configuration des premier et deuxième modes de réalisation mettant en oeuvre avantageusement les variantes décrites précédemment et permettant un réassemblage partiel des A2' éléments filaires métalliques de la couche externe A2, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire et l'étape de réassemblage d'au moins le premier assemblage fractionné, le deuxième assemblage fractionné et le troisième assemblage fractionné ensemble pour former l'assemblage final sont réalisées de sorte que C2'<A2'.

Dans des variantes d'une première version de cette première configuration compatibles avec la deuxième configuration des premier, deuxième et troisième assemblages fractionnés décrites ci-dessus, l'étape de séparation de l'assemblage transitoire entre l'ensemble fractionné amont et le troisième assemblage fractionné comprend:
- une étape de séparation de l'assemblage transitoire entre:
   o un ensemble précurseur comprenant au moins une couche I2 constituée de I2'>1 éléments filaires métalliques enroulés en hélice, les I2' éléments filaires métalliques étant issus de la couche externe A2 constituée des A2' éléments filaires métalliques de l'assemblage transitoire,
   o l'ensemble fractionné amont, et
- une étape de séparation de l'ensemble précurseur entre:
   o un ensemble principal comprenant une couche J2 constituée de J2'≥1 élément(s) filaire(s) métallique(s) enroulé(s) en hélice, le ou les J2'≥1 élément(s) filaire(s) métallique(s) étant issus de la couche I2 constituée des I2' éléments filaires métalliques de l'ensemble précurseur, l'ensemble principal formant le troisième assemblage fractionné, et
   o un ensemble complémentaire comprenant une couche K2 constituée de K2'≥1 élément(s) filaire(s) métallique(s) enroulé(s) en hélice, le ou les K2'≥1 élément(s) filaire(s) métallique(s) étant issus de la couche I2 constituée des I2' éléments filaires métalliques de l'ensemble précurseur.

L'ensemble principal formant le troisième assemblage fractionné, on a J2'=F2'.

Dans ces variantes de la première version de la première configuration, on a A1'≥G1', A2'≥I2'+G2', I2'≥J2'+K2'.

De préférence, dans un mode de réalisation permettant de fabriquer un assemblage final constitué de deux couches d'éléments filaires métalliques, l'ensemble précurseur est constitué de la couche I2 constituée des I2' éléments filaires métalliques enroulés en hélice, l'ensemble principal est constitué de la couche J2 constituée des J2' élément(s) filaire(s) métallique(s) enroulé(s) en hélice et l'ensemble complémentaire est constitué de la couche K2 constituée des K2' élément(s) filaire(s) métallique(s) enroulé(s) en hélice.

Dans ces variantes de la première version de cette première configuration, l'étape de séparation de l'assemblage transitoire entre l'ensemble fractionné amont et l'ensemble précurseur a lieu en amont de l'étape de séparation de l'ensemble précurseur entre l'ensemble principal formant le troisième assemblage fractionné et l'ensemble complémentaire.

Avantageusement, l'étape de séparation de l'assemblage transitoire entre l'ensemble fractionné amont et l'ensemble précurseur comprend une étape de fractionnement de l'assemblage transitoire en :
- l'ensemble fractionné amont, et
- l'ensemble précurseur.

Ainsi, on a avantageusement, A1'=G1' et A2'=I2'+G2'.

Avantageusement, l'étape de séparation de l'ensemble précurseur entre l'ensemble principal formant le troisième assemblage fractionné et l'ensemble complémentaire comprend une étape de fractionnement de l'ensemble précurseur en :
- l'ensemble principal formant le troisième assemblage fractionné, et
- l'ensemble complémentaire.

Ainsi, on a avantageusement, I2'=J2'+K2'.

Dans des variantes d'une deuxième version de cette première configuration compatibles avec la première configuration des premier, deuxième et troisième assemblages fractionnés décrites ci-dessus, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprend:
- une étape de séparation de l'assemblage transitoire entre :
   - un ensemble dérivé comprenant au moins une couche Z2 constituée de Z2'≥1 élément(s) filaire(s) métallique(s) enroulé(s) en hélice, le ou les Z2' élément(s) filaire(s) métallique(s) étant issu(s) de la couche externe A2 constituée des A2'>1 éléments filaires métalliques de l'assemblage transitoire,
   - un ensemble fractionné amont comprenant au moins deux couches comprenant une couche interne G1 constituée de G1'>1 éléments filaires métalliques enroulés en hélice autour du noyau transitoire et une couche externe G2 constituée de G2'>1 éléments filaires métalliques enroulés en hélice autour de la couche interne G1, les G1' éléments filaires métalliques étant issus de la couche interne A1 constituée de A1'>1 éléments filaires métalliques de l'assemblage transitoire et les G2' éléments filaires métalliques étant issus de la couche externe A2 constituée de A2'>1 éléments filaires métalliques de l'assemblage transitoire,
- une étape de séparation de l'ensemble fractionné amont entre :
   - le premier assemblage fractionné,
   - le deuxième assemblage fractionné,
   - le troisième assemblage fractionné, et
- le noyau transitoire ou un ou plusieurs ensembles comprenant le noyau transitoire, de préférence le noyau transitoire.

Dans ces variantes de la deuxième version de cette première configuration, on a A1'≥G1' et A2'≥Z2'+G2'.

Dans ces variantes, l'ensemble fractionné amont comprend la couche interne G1 constituée des G1' éléments filaires métalliques, la couche externe G2 constituée des G2' éléments filaires métalliques et le noyau transitoire, les G1' éléments filaires métalliques étant enroulés en hélice autour du noyau transitoire. De préférence, dans un mode de réalisation permettant de fabriquer un assemblage final constitué de deux couches d'éléments filaires métalliques, l'ensemble fractionné amont est constitué de la couche interne G1 constituée des G1' éléments filaires métalliques, de la couche externe G2 constituée des G2' éléments filaires métalliques et du noyau transitoire, les G1' éléments filaires métalliques étant enroulés en hélice autour du noyau transitoire.

Dans ces variantes de la deuxième version de cette première configuration, l'étape de séparation de l'assemblage transitoire entre l'ensemble dérivé et l'ensemble fractionné amont a lieu en amont de l'étape de séparation de l'ensemble fractionné amont entre le premier assemblage fractionné, le deuxième assemblage fractionné, le troisième assemblage fractionné et le noyau transitoire ou un ou plusieurs ensembles comprenant le noyau transitoire, de préférence le noyau transitoire.

Avantageusement, dans ces variantes de la deuxième version de cette première configuration, l'étape de séparation de l'assemblage transitoire entre l'ensemble dérivé et l'ensemble fractionné amont comprend une étape de fractionnement de l'assemblage transitoire en l'ensemble dérivé et l'ensemble fractionné amont.

Ainsi, on a avantageusement A1'=G1' et A2'=Z2'+G2'.

Avantageusement, dans ces variantes de la deuxième version de cette première configuration, l'étape de séparation de l'ensemble fractionné amont entre le premier assemblage fractionné, le deuxième assemblage fractionné, le troisième assemblage fractionné et le noyau transitoire ou un ou plusieurs ensembles comprenant le noyau transitoire, de préférence le noyau transitoire comprend :
- une étape de séparation de l'ensemble fractionné amont entre :
   - un ensemble fractionné intermédiaire comprenant au moins une couche Q1 constituée de Q1'>1 éléments filaires métalliques enroulés en hélice autour du noyau transitoire, les Q1' éléments filaires métalliques étant issus de la couche G1 constituée des G1' éléments filaires métalliques de l'ensemble fractionné amont,
   - le deuxième assemblage fractionné,
   - le troisième assemblage fractionné,
- une étape de séparation de l'ensemble fractionné intermédiaire entre :
   - le premier assemblage fractionné, et
   - le noyau transitoire ou un ou plusieurs ensembles comprenant le noyau transitoire, de préférence le noyau transitoire.

Ainsi, avantageusement, on a G1'≥Q1' et Q1'≥D1'.

De préférence, dans un mode de réalisation permettant de fabriquer un assemblage final constitué de deux couches d'éléments filaires métalliques, l'ensemble fractionné intermédiaire est constitué de la couche Q1 constituée des Q1' éléments filaires métalliques et du noyau transitoire.

Dans ces variantes de la deuxième version de cette première configuration, l'étape de séparation de l'ensemble fractionné amont entre l'ensemble fractionné intermédiaire, le deuxième assemblage fractionné et le troisième assemblage fractionné a lieu en amont de l'étape de séparation de l'ensemble fractionné intermédiaire entre le premier ensemble fractionné et le noyau transitoire ou un ou plusieurs ensembles comprenant le noyau transitoire, de préférence le noyau transitoire.

Avantageusement, dans ces variantes de la deuxième version de cette première configuration, l'étape de séparation de l'ensemble fractionné amont entre l'ensemble fractionné intermédiaire, le deuxième assemblage fractionné et le troisième assemblage fractionné comprend une étape de fractionnement de l'ensemble fractionné amont en l'ensemble fractionné intermédiaire, le deuxième assemblage fractionné et le troisième assemblage fractionné.

Ainsi, on a avantageusement, G1'=Q1' et G2'=E2'+F2'.

Dans une deuxième configuration des premier et deuxième modes de réalisation mettant en oeuvre avantageusement les variantes décrites précédemment et permettant un réassemblage total des A2' éléments filaires métalliques de la couche externe A2, l'étape de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire et l'étape de réassemblage d'au moins le premier assemblage fractionné, le deuxième assemblage fractionné et le troisième assemblage fractionné ensemble pour former l'assemblage final sont réalisées de sorte que C2'=A2'.

Dans des variantes d'une première version de cette deuxième configuration compatibles avec la deuxième configuration des premier, deuxième et troisième assemblages fractionnés décrites ci-dessus, l'étape de séparation de l'assemblage transitoire entre l'ensemble fractionné amont et le troisième assemblage fractionné comprend une étape de fractionnement de l'assemblage transitoire en l'ensemble fractionné amont et le troisième assemblage fractionné.

Dans des variantes d'une deuxième version de cette deuxième configuration compatibles avec la première configuration des premier, deuxième et troisième assemblages fractionnés décrites ci-dessus, l'étape de séparation de l'assemblage transitoire entre l'ensemble fractionné intermédiaire, le deuxième assemblage fractionné et le troisième assemblage fractionné comprend une étape de fractionnement de l'assemblage transitoire en l'ensemble fractionné intermédiaire, le deuxième assemblage fractionné et le troisième assemblage fractionné.

Dans un mode de réalisation particulièrement préféré, l'assemblage final étant constitué de la couche interne C1 constituée de C1' éléments filaires métalliques enroulés en hélice et de la couche externe C2 constituée de C2' éléments filaires métalliques enroulés en hélice autour de la couche interne C1, le procédé comprend :
- une étape de fourniture d'un assemblage transitoire constitué d'une couche interne A1 constituée de A1'>1 éléments filaires métalliques, d'une couche externe A2 constituée de A2'>1 éléments filaires métalliques enroulés en hélice autour de la couche interne A1 et d'un noyau transitoire, les A1' éléments filaires métalliques étant enroulés en hélice autour du noyau transitoire
- une étape de séparation de l'assemblage transitoire entre au moins :
   - un premier assemblage fractionné constitué d'une couche D1 constituée de D1'≥1 élément(s) filaire(s) métallique(s) enroulé(s) en hélice, le ou les D1' élément(s) filaire(s) métallique(s) étant issu(s) de la couche interne A1 constituée de A1'>1 éléments filaires métalliques de l'assemblage transitoire,
   - un deuxième assemblage fractionné comprenant au moins une couche E2 constituée de E2'≥1 élément(s) filaire(s) métallique(s) enroulé(s) en hélice, le ou les E2' élément(s) filaire(s) métallique(s) étant issu(s) de la couche externe A2 constituée de A2'>1 éléments filaires métalliques de l'assemblage transitoire,
   - un troisième assemblage fractionné constitué d'une couche F2 constituée de F2'≥ 1 élément(s) filaire(s) métallique(s) enroulé(s) en hélice, le ou les F2' élément(s) filaire(s) métallique(s) étant issu(s) de la couche externe A2 constituée de A2'>1 éléments filaires métalliques de l'assemblage transitoire,
   - le noyau transitoire ou un ou plusieurs ensembles comprenant le noyau transitoire,
   le procédé comprenant une étape de réassemblage d'au moins le premier assemblage fractionné, le deuxième assemblage fractionné et le troisième assemblage fractionné ensemble
pour former l'assemblage final.

Dans ce mode de réalisation particulièrement préféré, l'assemblage final est constitué de deux couches de C1' et C2' éléments filaires métalliques enroulés en hélice et est donc dépourvu d'âme centrale autour de laquelle seraient enroulés les C1' et C2' éléments filaires métalliques.

Avantageusement, A1' va de 2 à 10 et A2' va de 6 à 20.

De façon très préférentielle, l'étape de fourniture de l'assemblage transitoire comprend une étape d'assemblage par retordage des A1' éléments filaires métalliques enroulés en hélice autour du noyau transitoire et une étape d'assemblage par retordage des A2' éléments filaires métalliques enroulés en hélice autour de la couche interne A1.

Avantageusement, l'étape de fourniture de l'assemblage transitoire comprend une étape d'équilibrage de l'assemblage transitoire. Ainsi, l'étape d'équilibrage étant réalisée sur l'assemblage transitoire comprenant les A1', A2' éléments filaires métalliques et le noyau transitoire, l'étape d'équilibrage est implicitement réalisée en amont de l'étape de séparation entre les premier, deuxième et troisième assemblages fractionnés. On évite d'avoir à gérer la torsion résiduelle imposée lors de l'étape d'assemblage de l'assemblage transitoire lors du trajet des différents assemblages en aval de l'étape d'assemblage, notamment dans les moyens de guidage, par exemple les poulies.

Avantageusement, le procédé comprend une étape d'équilibrage de l'assemblage final en aval de l'étape de réassemblage.

Avantageusement, le procédé comprend une étape d'entretien de la rotation de l'assemblage final autour de sa direction de défilement. On réalise cette étape d'entretien de la rotation en aval de l'étape de séparation de l'assemblage transitoire et en amont de l'étape d'équilibrage de l'assemblage final.

De préférence, le procédé est dépourvu d'étapes de préformation individuelle de chacun des éléments filaires métalliques. Dans les procédés de l'état de la technique utilisant une étape de préformation individuelle de chacun des éléments filaires métalliques, ces derniers se voient imposés une forme par des outils de préformation, par exemple des galets, ces outils créant des défauts à la surface des éléments filaires métalliques. Ces défauts réduisent notablement l'endurance des éléments filaires métalliques et donc de l'assemblage final.

De façon très préférée, le noyau transitoire est un élément filaire métallique. Dans un mode de réalisation préféré, le noyau transitoire est un monofilament métallique. Ainsi, on contrôle très précisément le diamètre de l'espace entre les éléments filaire métalliques et donc les caractéristiques géométriques de l'assemblage final au contraire d'un noyau transitoire réalisé dans un matériau textile, par exemple polymérique, dont la compressibilité peut engendrer des variations des caractéristiques géométriques de l'assemblage final.

Dans d'autres modes de réalisation également avantageux, le noyau transitoire est un élément filaire textile. Un tel élément filaire textile comprend au moins un brin textile multifilamentaires ou, en variante, est constitué d'un monofilament textile. Les filaments textiles pouvant être utilisés sont choisis parmi les polyesters, les polycétones, les polyamides aliphatiques ou aromatiques et les mélanges de filaments textiles de ces matériaux. Ainsi, on réduit les risques de casse du noyau transitoire engendrés par les frottements des éléments filaires métalliques sur le noyau transitoire ainsi que par les torsions imposées au noyau transitoire.

L'invention a également pour objet un assemblage final comprenant au moins deux couches comprenant une couche interne C1 constituée de C1'>1 éléments filaires métalliques (14) enroulés en hélice et une couche externe C2 constituée de C2'>1 éléments filaires métalliques enroulés en hélice autour de la couche interne obtenu par le procédé tel que défini ci-dessus et dans lequel chaque élément filaire métallique de chaque une couche interne C1 et externe C2 est dépourvu de marques de préformation.

L'invention a encore pour autre objet un pneumatique comprenant un assemblage final tel que défini ci-dessus.

Un tel pneumatique est notamment destiné à équiper des véhicules à moteur de type tourisme, SUV ("*Sport Utility Vehicles*")*,* deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

Avantageusement, le pneumatique comprend un sommet comprenant une bande de roulement et une armature de sommet, le pneumatique comprenant deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement. Dans un mode de réalisation, l'armature de sommet comprend un assemblage final tel que défini ci-dessus.

L'invention a également pour objet une installation de fabrication d'un assemblage final comprenant au moins deux couches comprenant une couche interne C1 constituée de C1'>1 éléments filaires métalliques enroulés en hélice et une couche externe C2 constituée de C2'>1 éléments filaires métalliques enroulés en hélice autour de la couche interne C1. L'installation comprend:
- des moyens de fourniture d'un assemblage transitoire comprenant au moins deux couches comprenant une couche interne A1 constituée de A1'>1 éléments filaires métalliques enroulés en hélice autour d'un noyau transitoire et une couche externe A2 constituée de A2'>1 éléments filaires métalliques enroulés en hélice autour de la couche interne A1,
- des moyens de séparation de l'assemblage transitoire entre au moins:
   o un premier assemblage fractionné comprenant au moins une couche D1 constituée de D1'≥1 élément(s) filaire(s) métallique(s) enroulé(s) en hélice, le ou les D1' élément(s) filaire(s) métallique(s) étant issu(s) de la couche interne A1 constituée de A1'>1 éléments filaires métalliques de l'assemblage transitoire,
   o un deuxième assemblage fractionné comprenant au moins une couche comprenant une couche E2 constituée de E2'≥1 élément(s) filaire(s) métallique(s) enroulé(s) en hélice, le ou les E2' élément(s) filaire(s) métallique(s) étant issu(s) de la couche externe A2 constituée de A2'>1 éléments filaires métalliques de l'assemblage transitoire,
   o un troisième assemblage fractionné comprenant au moins une couche F2 constituée de F2'≥ 1 élément(s) filaire(s) métallique(s) enroulé(s) en hélice, le ou les F2' élément(s) filaire(s) métallique(s) étant issu(s) de la couche externe A2 constituée de A2'>1 éléments filaires métalliques de l'assemblage transitoire,
   o le noyau transitoire ou un ou plusieurs ensembles comprenant le noyau transitoire.

L'installation selon l'invention comprend également des moyens de réassemblage d'au moins le premier assemblage fractionné, le deuxième assemblage fractionné et le troisième assemblage fractionné ensemble pour former l'assemblage final. D'une façon analogue au procédé décrit ci-dessus, les moyens de séparation et les moyens de réassemblage sont agencés de sorte que A1'≥ C1' et A2'≥ C2'.

Dans la présente invention, des moyens de fractionnement d'un objet initial en plusieurs objets finaux signifient que, en mettant en œuvre ces moyens de fractionnement, l'objet initial est divisé en les objets finaux et seulement ces objets finaux de sorte que l'objet initial se retrouve intégralement dans les objets finaux. De plus, en utilisant des moyens de fractionnement, l'objet initial est divisé en les objets finaux de façon simultanée, c'est-à-dire que les objets finaux sont séparés en un même point de fractionnement. En particulier, dans le cas d'un objet initial fractionné en au moins trois objets finaux, les trois objets finaux sont, en utilisant des moyens de fractionnement, séparés simultanément les uns des autres et en un même point.

Dans la présente invention, des moyens de séparation d'un objet initial entre plusieurs objets finaux signifient que, pour obtenir ces objets finaux, au moins des moyens de fractionnement sont nécessaires. Ainsi, pour obtenir les objets finaux, les moyens de séparation comprennent des moyens de fractionnement de l'objet initial en les objets finaux ou bien comprennent des moyens de fractionnement de l'objet initial en des objets intermédiaires et des moyens de fractionnement des objets intermédiaires en les objets finaux. En utilisant les moyens de séparation, l'objet initial ne se retrouve pas nécessairement intégralement dans les objets finaux, des ensembles ou assemblages ayant pu être extraits du procédé lors de leur passage dans des moyens de fractionnement et non utilisés lors de leur passage dans des moyens de fractionnement ultérieurs.. Enfin, des moyens de séparation peuvent comprendre des moyens de réassemblage entre plusieurs objets intermédiaires issus de moyens de fractionnement des moyens de séparation pour obtenir d'autres objets intermédiaires ou bien les objets finaux.

Dans un mode de réalisation dans lequel les moyens de réassemblage pour former l'assemblage final sont agencés successivement d'amont en aval, les moyens de réassemblage comprennent, d'amont en aval:
o des moyens de réassemblage amont de l'un des premier, deuxième et troisième assemblages fractionnés avec un autre des premier, deuxième et troisième assemblages fractionnés pour former un assemblage transitoire aval,
o des moyens de réassemblage aval de l'assemblage transitoire aval avec l'assemblage restant entre les premier, deuxième et troisième assemblages fractionnés pour former l'assemblage final.

Dans une première variante du mode de réalisation dans lequel les moyens de réassemblage pour former l'assemblage final à partir des assemblages fractionnés des première et cinquième configurations décrites ci-dessus sont agencés successivement d'amont en aval, les moyens de réassemblage comprennent, d'amont en aval :
o des moyens de réassemblage amont du premier assemblage fractionné avec le deuxième assemblage fractionné pour former un assemblage transitoire aval,
o des moyens de réassemblage aval de l'assemblage transitoire aval avec le troisième assemblage fractionné pour former l'assemblage final,
   ou
o des moyens de réassemblage amont du premier assemblage fractionné avec le troisième assemblage fractionné pour former un assemblage transitoire aval,
o des moyens de réassemblage aval de l'assemblage transitoire aval avec le deuxième assemblage fractionné pour former l'assemblage final.

Dans une deuxième variante du mode de réalisation dans lequel les moyens de réassemblage pour former l'assemblage final à partir des assemblages fractionnés des deuxième et sixième configurations décrites ci-dessus sont agencés successivement d'amont en aval, les moyens de réassemblage comprennent, d'amont en aval:
o des moyens de réassemblage amont du premier assemblage fractionné avec le deuxième assemblage fractionné pour former un assemblage transitoire aval,
o des moyens de réassemblage aval de l'assemblage transitoire aval avec le troisième assemblage fractionné pour former l'assemblage final.

Dans une troisième variante du mode de réalisation dans lequel les moyens de réassemblage pour former l'assemblage final à partir des assemblages fractionnés des troisième et septième configurations décrites ci-dessus sont agencés successivement d'amont en aval, les moyens de réassemblage comprennent, d'amont en aval:
o des moyens de réassemblage amont du premier assemblage fractionné avec le troisième assemblage fractionné pour former un assemblage transitoire aval,
o des moyens de réassemblage aval de l'assemblage transitoire aval avec le deuxième assemblage fractionné pour former l'assemblage final.

Dans une quatrième variante du mode de réalisation dans lequel les moyens de réassemblage pour former l'assemblage final à partir des assemblages fractionnés des quatrième et huitième configurations décrites ci-dessus sont agencés successivement d'amont en aval, les moyens de réassemblage comprennent, d'amont en aval:
o des moyens de réassemblage amont du premier assemblage fractionné avec le deuxième assemblage fractionné pour former un assemblage transitoire aval,
o des moyens de réassemblage aval de l'assemblage transitoire aval avec le troisième assemblage fractionné pour former l'assemblage final,
   ou
o des moyens de réassemblage amont du premier assemblage fractionné avec le troisième assemblage fractionné pour former un assemblage transitoire aval,
o des moyens de réassemblage aval de l'assemblage transitoire aval avec le deuxième assemblage fractionné pour former l'assemblage final.

Dans un autre mode de réalisation, les moyens de réassemblage comprennent des moyens de réassemblage simultané des premier, deuxième et troisième assemblages fractionnés pour former l'assemblage final.

Dans une première forme de réalisation permettant un réassemblage partiel des A1' éléments filaires métalliques de la couche interne A1, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire et les moyens de réassemblage du premier assemblage fractionné, du deuxième assemblage fractionné et du troisième assemblage fractionné ensemble pour former l'assemblage final sont agencés de sorte que C1'<A1' et C2'≤A2'.

Dans des variantes d'une première version de la première forme de réalisation compatibles avec la deuxième configuration des premier, deuxième et troisième assemblages fractionnés décrites ci-dessus, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprennent:
- des moyens de séparation de l'assemblage transitoire entre :
   - un ensemble fractionné amont comprenant au moins deux couches comprenant une couche interne G1 constituée de G1'≥1 élément(s) filaire(s) métallique(s) enroulé(s) en hélice autour du noyau transitoire et une couche externe G2 constituée de G2'≥1 élément(s) filaire(s) métallique(s) enroulé(s) en hélice autour de la couche interne G1, le ou les G1' élément(s) filaire(s) métallique(s) étant issu(s) de la couche interne A1 constituée de A1'>1 éléments filaires métalliques de l'assemblage transitoire et le ou les G2' élément(s) filaire(s) métallique(s) étant issu(s) de la couche externe A2 constituée de A2'>1 éléments filaires métalliques de l'assemblage transitoire, et
   - le troisième assemblage fractionné, et
- des moyens de séparation de l'ensemble fractionné amont entre :
   - le premier assemblage fractionné,
   - le deuxième assemblage fractionné, et
   - le noyau transitoire ou un ou plusieurs ensembles comprenant le noyau transitoire, de préférence le noyau transitoire.

Dans ces variantes de la première version de la première forme de réalisation, les moyens de séparation de l'assemblage transitoire entre l'ensemble fractionné amont et le troisième assemblage fractionné sont agencés en amont des moyens de séparation de l'ensemble fractionné amont entre le premier assemblage fractionné, le deuxième assemblage fractionné et le noyau transitoire ou un ou plusieurs ensembles comprenant le noyau transitoire, de préférence le noyau transitoire.

Avantageusement, dans ces première et deuxième variantes de la première version de la première forme de réalisation, les moyens de séparation de l'ensemble fractionné amont entre le premier assemblage fractionné, le deuxième assemblage fractionné, et le noyau transitoire ou un ou plusieurs ensembles comprenant le noyau transitoire, de préférence le noyau transitoire comprennent :
- des moyens de séparation de l'ensemble fractionné amont entre :
   - un ensemble précurseur comprenant au moins une couche I1 constituée de I1'>1 éléments filaires métalliques enroulés en hélice, les I1' éléments filaires métalliques étant issus de la couche interne G1 constituée des G1' éléments filaires métalliques de l'ensemble fractionné amont,
   - le deuxième assemblage fractionné,
   - le noyau transitoire ou un ou plusieurs ensembles comprenant le noyau transitoire, de préférence le noyau transitoire, et
- des moyens de séparation de l'ensemble précurseur entre :
   - un ensemble principal comprenant au moins une couche J1 constituée de J1'≥1 élément(s) filaire(s) métallique(s) enroulé(s) en hélice, le ou les J1'≥1 élément(s) filaire(s) métallique(s) étant issu(s) de la couche I1 constituée des I1'>1 éléments filaires métalliques de l'ensemble précurseur, l'ensemble principal formant le premier assemblage fractionné, et
   - un ensemble complémentaire comprenant au moins une couche K1 constituée de K1'≥1 élément(s) filaire(s) métallique(s) enroulé(s) en hélice, le ou les K1'≥1 élément(s) filaire(s) métallique(s) étant issu(s) de la couche I1 constituée des I1'>1 éléments filaires métalliques de l'ensemble précurseur.

Dans ces variantes de la première version de la première forme de réalisation, les moyens de séparation de l'ensemble fractionné amont entre l'ensemble précurseur, le deuxième assemblage fractionné et le noyau transitoire ou un ou plusieurs ensembles comprenant le noyau transitoire, de préférence le noyau transitoire sont agencés en amont des moyens de séparation de l'ensemble précurseur entre l'ensemble principal formant le premier assemblage fractionné et l'ensemble complémentaire.

Avantageusement, les moyens de séparation de l'ensemble précurseur entre l'ensemble principal formant le premier assemblage fractionné et l'ensemble complémentaire comprennent des moyens de fractionnement de l'ensemble précurseur en :
- l'ensemble principal formant le premier assemblage fractionné, et
- l'ensemble complémentaire.

Dans une première variante de la première version de la première forme de réalisation dans laquelle le noyau transitoire est séparé avec le premier assemblage fractionné, les moyens de séparation de l'ensemble fractionné amont entre l'ensemble précurseur, le deuxième assemblage fractionné et le noyau transitoire ou un ou plusieurs ensembles comprenant le noyau transitoire, de préférence le noyau transitoire comprennent :
- des moyens de séparation de l'ensemble fractionné amont entre :
   - un ensemble fractionné aval comprenant au moins une couche H1 constituée de H1'≥1 élément(s) filaire(s) métallique(s) enroulé(s) en hélice autour du noyau transitoire, le ou les H1' élément(s) filaire(s) métallique(s) étant issu(s) de la couche interne G1 constituée des G1' éléments filaires métalliques de l'ensemble fractionné amont,
   - le deuxième assemblage fractionné, et
- des moyens de séparation de l'ensemble fractionné aval entre :
   - l'ensemble précurseur, et
   - le noyau transitoire ou un ou plusieurs ensembles comprenant le noyau transitoire, de préférence le noyau transitoire.

Dans cette première variante, les moyens de séparation de l'ensemble fractionné amont entre l'ensemble fractionné aval et le deuxième assemblage fractionné sont agencés en amont des moyens de séparation de l'ensemble fractionné aval entre l'ensemble précurseur et le noyau transitoire ou un ou plusieurs ensembles comprenant le noyau transitoire, de préférence le noyau transitoire.

Avantageusement, dans cette première variante, les moyens de séparation de l'ensemble fractionné amont entre l'ensemble fractionné aval et le deuxième assemblage fractionné comprennent des moyens de fractionnement de l'ensemble fractionné amont en :
- l'ensemble fractionné aval, et
- le deuxième assemblage fractionné.

Avantageusement, dans cette première variante, les moyens de séparation de l'ensemble fractionné aval entre l'ensemble précurseur et le noyau transitoire ou un ou plusieurs ensembles comprenant le noyau transitoire, de préférence le noyau transitoire comprennent des moyens de fractionnement de l'ensemble fractionné aval en :
- l'ensemble précurseur, et
- le noyau transitoire ou un ou plusieurs ensembles comprenant le noyau transitoire, de préférence le noyau transitoire.

Dans une deuxième variante de la première version de la première forme de réalisation dans laquelle le noyau transitoire est séparé avec le deuxième assemblage fractionné, les moyens de séparation de l'ensemble fractionné amont entre l'ensemble précurseur, le deuxième assemblage fractionné et le noyau transitoire ou un ou plusieurs ensembles comprenant le noyau transitoire, de préférence le noyau transitoire comprennent:
- des moyens de séparation de l'ensemble fractionné amont entre :
   - un ensemble fractionné aval comprenant au moins deux couches comprenant une couche interne H1 constituée de H1'≥1 élément(s) filaire(s) métallique(s) enroulé(s) en hélice autour du noyau transitoire et une couche externe H2 constituée de H2'≥1 élément(s) filaire(s) métallique(s) enroulé(s) en hélice autour de la couche interne H1, le ou les H1' élément(s) filaire(s) métallique(s) étant issu(s) de la couche interne G1 constituée de G1'>1 éléments filaires métalliques de l'ensemble fractionné amont et le ou les H2' élément(s) filaire(s) métallique(s) étant issu(s) de la couche externe G2 constituée de G2'>1 éléments filaires métalliques de l'ensemble fractionné amont, et
   - l'ensemble précurseur, et
- des moyens de séparation de l'ensemble fractionné aval entre :
   - le deuxième assemblage fractionné, et
   - le noyau transitoire ou un ou plusieurs ensembles comprenant le noyau transitoire, de préférence le noyau transitoire.

Dans cette deuxième variante, les moyens de séparation de l'ensemble fractionné amont entre l'ensemble fractionné aval et l'ensemble précurseur sont agencés en amont des moyens de séparation de l'ensemble fractionné aval entre le deuxième assemblage fractionné et le noyau transitoire ou un ou plusieurs ensembles comprenant le noyau transitoire, de préférence le noyau transitoire.

Avantageusement, dans cette deuxième variante, les moyens de séparation de l'ensemble fractionné amont entre l'ensemble fractionné aval et l'ensemble précurseur comprennent des moyens de fractionnement de l'ensemble fractionné amont en :
- l'ensemble fractionné aval, et
- l'ensemble précurseur.

Avantageusement, dans cette deuxième variante, les moyens de séparation de l'ensemble fractionné aval entre le deuxième assemblage fractionné et le noyau transitoire ou un ou plusieurs ensembles comprenant le noyau transitoire, de préférence le noyau transitoire, comprennent des moyens de fractionnement de l'ensemble fractionné aval en :
- le deuxième assemblage fractionné, et
- le noyau transitoire ou un ou plusieurs ensembles comprenant le noyau transitoire, de préférence le noyau transitoire.

Dans des variantes d'une deuxième version de la première forme de réalisation compatibles avec la première configuration des premier, deuxième et troisième assemblages fractionnés décrites ci-dessus, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprennent:
- des moyens de séparation de l'assemblage transitoire entre :
   - un ensemble fractionné intermédiaire comprenant une couche Q1 constituée de Q1'>1 éléments filaires métalliques enroulés en hélice autour du noyau transitoire, les Q1' éléments filaires métalliques étant issus de la couche interne A1 constituée de A1'>1 éléments filaires métalliques de l'assemblage transitoire, et
   - le deuxième assemblage fractionné,
   - le troisième assemblage fractionné, et
- des moyens de séparation de l'ensemble fractionné intermédiaire entre :
   - un ensemble dérivé comprenant au moins une couche Z1 constituée de Z1'≥1 élément(s) filaire(s) métallique(s) enroulé(s) en hélice, le ou les Z1' élément(s) filaire(s) métallique(s) étant issu(s) de la couche interne Q1 constituée des Q1'>1 éléments filaires métalliques de l'ensemble fractionné intermédiaire,
   - le premier assemblage fractionné, et
   - le noyau transitoire ou un ou plusieurs ensembles comprenant le noyau transitoire, de préférence le noyau transitoire.

Dans ces variantes de la deuxième version de la première forme de réalisation, les moyens de séparation de l'assemblage transitoire entre l'ensemble fractionné intermédiaire, le deuxième assemblage fractionné et le troisième assemblage fractionné sont agencés en amont des moyens de séparation de l'ensemble fractionné intermédiaire entre l'ensemble dérivé, le premier assemblage fractionné et le noyau transitoire ou un ou plusieurs ensembles comprenant le noyau transitoire, de préférence le noyau transitoire.

Avantageusement, dans ces variantes de la première forme de réalisation, les moyens de séparation de l'ensemble fractionné intermédiaire entre l'ensemble dérivé, le premier assemblage fractionné et le noyau transitoire ou un ou plusieurs ensembles comprenant le noyau transitoire, de préférence le noyau transitoire comprennent:
- des moyens de séparation de l'ensemble fractionné intermédiaire entre :
   - un premier ensemble séparé comprenant au moins une couche W1 constituée de W1'≥1 élément(s) filaire(s) métallique(s) enroulé(s) en hélice, le ou les W1' élément(s) filaire(s) métallique(s) étant issu(s) de la couche Q1 constituée des Q1' éléments filaires métalliques de l'ensemble fractionné intermédiaire,
   - un deuxième ensemble séparé comprenant au moins une couche X1 constituée de X1'≥1 élément(s) filaire(s) métallique(s) enroulé(s) en hélice, le ou les X1' élément(s) filaire(s) métallique(s) étant issu(s) de la couche Q1 constituée des Q1' éléments filaires métalliques de l'ensemble fractionné intermédiaire,
- l'ensemble dérivé,
- le noyau transitoire ou un ou plusieurs ensembles comprenant le noyau transitoire, de préférence le noyau transitoire,
- des moyens de réassemblage du premier ensemble séparé et du deuxième ensemble séparé ensemble pour former le premier assemblage fractionné.

Dans ces variantes de la première forme de réalisation, les moyens de séparation de l'ensemble fractionné intermédiaire entre le premier ensemble séparé, le deuxième ensemble séparé, l'ensemble dérivé, le noyau transitoire ou un ou plusieurs ensembles comprenant le noyau transitoire, de préférence le noyau transitoire sont agencés en amont des moyens de réassemblage du premier ensemble séparé et du deuxième ensemble séparé ensemble pour former le premier assemblage fractionné.

Dans ces variantes de la deuxième version de la première forme de réalisation, selon une première option mettant en oeuvre des moyens successifs de séparation, les moyens de séparation de l'ensemble fractionné intermédiaire entre le premier ensemble séparé, le deuxième ensemble séparé, l'ensemble dérivé, le noyau transitoire ou un ou plusieurs ensembles comprenant le noyau transitoire, de préférence le noyau transitoire comprennent:
- des moyens de séparation de l'ensemble fractionné intermédiaire entre :
   - l'ensemble dérivé, et
   - un ensemble fractionné aval comprenant une couche H1 constituée de H1'≥1 élément(s) filaire(s) métallique(s) enroulé(s) en hélice autour du noyau transitoire, le ou les H1' élément(s) filaire(s) métallique(s) étant issu(s) de la couche Q1 constituée des Q1'>1 éléments filaires métalliques de l'ensemble fractionné intermédiaire, et
   - des moyens de séparation de l'ensemble fractionné aval entre :
      - le premier ensemble séparé,
      - le deuxième ensemble séparé,
      - le noyau transitoire ou un ou plusieurs ensembles comprenant le noyau transitoire, de préférence le noyau transitoire.

Dans ces variantes de la première forme de réalisation, les moyens de séparation de l'ensemble fractionné intermédiaire entre l'ensemble dérivé et l'ensemble fractionné aval sont agencés en amont des moyens de séparation de l'ensemble fractionné aval entre le premier ensemble séparé, le deuxième ensemble séparé et le noyau transitoire ou un ou plusieurs ensembles comprenant le noyau transitoire, de préférence le noyau transitoire.

Avantageusement, dans cette première option, les moyens de séparation de l'ensemble fractionné intermédiaire entre l'ensemble dérivé et l'ensemble fractionné aval comprennent des moyens de fractionnement de l'ensemble fractionné intermédiaire en l'ensemble dérivé et l'ensemble fractionné aval.

Avantageusement, dans cette première option, les moyens de séparation de l'ensemble fractionné aval entre le premier ensemble séparé, le deuxième ensemble séparé et le noyau transitoire ou un ou plusieurs ensembles comprenant le noyau transitoire, de préférence le noyau transitoire comprennent des moyens de fractionnement de l'ensemble fractionné aval en le premier ensemble séparé, le deuxième ensemble séparé et le noyau transitoire ou un ou plusieurs ensembles comprenant le noyau transitoire, de préférence le noyau transitoire.

Dans ces variantes de la deuxième version de la première forme de réalisation, selon une deuxième option, les moyens de séparation de l'ensemble fractionné intermédiaire entre le premier ensemble séparé, le deuxième ensemble séparé, l'ensemble dérivé, le noyau transitoire ou un ou plusieurs ensembles comprenant le noyau transitoire, de préférence le noyau transitoire comprennent des moyens de fractionnement de l'ensemble fractionné intermédiaire en le premier ensemble séparé, le deuxième ensemble séparé, l'ensemble dérivé, le noyau transitoire ou un ou plusieurs ensembles comprenant le noyau transitoire, de préférence le noyau transitoire.

Dans une deuxième forme de réalisation permettant un réassemblage total des A1' éléments filaires métalliques de la couche interne A1, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire et les moyens de réassemblage du premier assemblage fractionné, du deuxième assemblage fractionné et du troisième assemblage fractionné ensemble pour former l'assemblage final sont agencés de sorte que C1'=A1' et C2'≤A2'.

Dans des variantes d'une première version de la deuxième forme de réalisation compatibles avec la deuxième configuration des premier, deuxième et troisième assemblages fractionnés décrites ci-dessus, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprennent:
- des moyens de séparation de l'assemblage transitoire entre :
   - un ensemble fractionné amont comprenant au moins deux couches comprenant une couche interne G1 constituée de G1'≥1 élément(s) filaire(s) métallique(s) enroulé(s) en hélice autour du noyau transitoire et une couche externe G2 constituée de G2'≥1 élément(s) filaire(s) métallique(s) enroulé(s) en hélice autour de la couche interne G1, le ou les G1' élément(s) filaire(s) métallique(s) étant issu(s) de la couche interne A1 constituée de A1'>1 éléments filaires métalliques de l'assemblage transitoire et le ou les G2' élément(s) filaire(s) métallique(s) étant issu(s) de la couche externe A2 constituée de A2'>1 éléments filaires métalliques de l'assemblage transitoire, et
   - le troisième assemblage fractionné, et
- des moyens de séparation de l'ensemble fractionné amont entre :
   - le premier assemblage fractionné,
   - le deuxième assemblage fractionné, et
   - le noyau transitoire.

Dans ces variantes de la première version de la deuxième forme de réalisation, les moyens de séparation de l'assemblage transitoire entre l'ensemble fractionné amont et le troisième assemblage fractionné sont agencés en amont des moyens de séparation de l'ensemble fractionné amont entre le premier assemblage fractionné, le deuxième assemblage fractionné et le noyau transitoire ou un ou plusieurs ensembles comprenant le noyau transitoire, de préférence le noyau transitoire.

Dans une première variante de la première version de la deuxième forme de réalisation dans laquelle le noyau transitoire est séparé avec le premier assemblage fractionné, les moyens de séparation de l'ensemble fractionné amont entre le premier assemblage fractionné, le deuxième assemblage fractionné et le noyau transitoire comprennent:
- des moyens de séparation de l'ensemble fractionné amont entre :
   - un ensemble fractionné aval comprenant au moins une couche H1 constituée de H1'≥1 élément(s) filaire(s) métallique(s) enroulé(s) en hélice autour du noyau transitoire, le ou les H1' élément(s) filaire(s) métallique(s) étant issu(s) de la couche interne G1 constituée des G1' éléments filaires métalliques de l'ensemble fractionné amont,
   - le deuxième assemblage fractionné, et
- des moyens de séparation de l'ensemble fractionné aval entre :
   - le premier assemblage fractionné, et
   - le noyau transitoire.

Dans cette première variante de la première version de la deuxième forme de réalisation, les moyens de séparation de l'ensemble fractionné amont entre l'ensemble fractionné aval et le deuxième assemblage fractionné sont agencés en amont des moyens de séparation de l'ensemble fractionné aval entre le premier assemblage fractionné et le noyau transitoire.

Avantageusement, les moyens de séparation de l'ensemble fractionné amont entre l'ensemble fractionné aval et le deuxième assemblage fractionné comprennent des moyens de fractionnement de l'ensemble fractionné amont en :
- l'ensemble fractionné aval, et
- le deuxième assemblage fractionné.

Avantageusement, les moyens de séparation de l'ensemble fractionné aval entre le premier assemblage fractionné et le noyau transitoire comprennent des moyens de fractionnement de l'ensemble fractionné aval en :
- le premier assemblage fractionné, et
- le noyau transitoire.

Dans une deuxième variante de la première version de la deuxième forme de réalisation dans laquelle le noyau transitoire est séparé avec le deuxième assemblage fractionné, les moyens de séparation de l'ensemble fractionné amont entre le premier assemblage fractionné, le deuxième assemblage fractionné et le noyau transitoire comprennent:
- des moyens de séparation de l'ensemble fractionné amont entre :
   - un ensemble fractionné aval comprenant au moins deux couches comprenant une couche interne H1 constituée de H1'≥1 élément(s) filaire(s) métallique(s) enroulé(s) en hélice autour du noyau transitoire et une couche externe H2 constituée de H2'≥1 élément(s) filaire(s) métallique(s) enroulé(s) en hélice autour de la couche interne H1, le ou les H1' élément(s) filaire(s) métallique(s) étant issu(s) de la couche interne G1 constituée de G1'>1 éléments filaires métalliques de l'ensemble fractionné amont et le ou les H2' élément(s) filaire(s) métallique(s) étant issu(s) de la couche externe G2 constituée de G2'>1 éléments filaires métalliques de l'ensemble fractionné amont, et
   - le premier assemblage fractionné, et
- des moyens de séparation de l'ensemble fractionné aval entre :
   - le deuxième assemblage fractionné, et
   - le noyau transitoire.

Dans cette deuxième variante, les moyens de séparation de l'ensemble fractionné amont entre l'ensemble fractionné aval et le premier assemblage fractionné sont agencés en amont des moyens de séparation de l'ensemble fractionné aval entre le deuxième assemblage fractionné et le noyau transitoire.

Avantageusement, dans cette deuxième variante, les moyens de séparation de l'ensemble fractionné amont entre l'ensemble fractionné aval et le premier assemblage fractionné comprennent des moyens de fractionnement de l'ensemble fractionné amont en :
- l'ensemble fractionné aval, et
- le premier assemblage fractionné.

Avantageusement, dans cette deuxième variante, les moyens de séparation de l'ensemble fractionné aval entre le deuxième assemblage fractionné et le noyau transitoire comprennent des moyens de fractionnement de l'ensemble fractionné aval en :
- le deuxième assemblage fractionné, et
- le noyau transitoire.

Dans des variantes d'une deuxième version de la deuxième forme de réalisation compatibles avec la première configuration des premier, deuxième et troisième assemblages fractionnés décrites ci-dessus, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprennent:
- des moyens de séparation de l'assemblage transitoire entre :
   - un ensemble fractionné intermédiaire comprenant une couche Q1 constituée de Q1'>1 éléments filaires métalliques enroulés en hélice autour du noyau transitoire, les Q1' éléments filaires métalliques étant issus de la couche interne A1 constituée de A1'>1 éléments filaires métalliques de l'assemblage transitoire, et
   - le deuxième assemblage fractionné,
   - le troisième assemblage fractionné, et
- des moyens de séparation de l'ensemble fractionné intermédiaire entre :
   - le premier assemblage fractionné, et
   - le noyau transitoire ou un ou plusieurs ensembles comprenant le noyau transitoire, de préférence le noyau transitoire.

Dans ces variantes de la deuxième version de la première forme de réalisation, les moyens de séparation de l'assemblage transitoire entre l'ensemble fractionné intermédiaire, le deuxième assemblage fractionné et le troisième assemblage fractionné sont agencés en amont des moyens de séparation de l'ensemble fractionné intermédiaire entre le premier assemblage fractionné et le noyau transitoire ou un ou plusieurs ensembles comprenant le noyau transitoire, de préférence le noyau transitoire.

Avantageusement, dans ces variantes de la première forme de réalisation, les moyens de séparation de l'ensemble fractionné intermédiaire entre le premier assemblage fractionné et le noyau transitoire ou un ou plusieurs ensembles comprenant le noyau transitoire, de préférence le noyau transitoire comprennent :
- des moyens de séparation de l'ensemble fractionné intermédiaire entre :
   - un premier ensemble séparé comprenant au moins une couche W1 constituée de W1'≥1 élément(s) filaire(s) métallique(s) enroulé(s) en hélice, le ou les W1' élément(s) filaire(s) métallique(s) étant issu(s) de la couche Q1 constituée des Q1' éléments filaires métalliques de l'ensemble fractionné intermédiaire,
   - un deuxième ensemble séparé comprenant au moins une couche X1 constituée de X1'≥1 élément(s) filaire(s) métallique(s) enroulé(s) en hélice, le ou les X1' élément(s) filaire(s) métallique(s) étant issu(s) de la couche Q1 constituée des Q1' éléments filaires métalliques de l'ensemble fractionné intermédiaire,
- le noyau transitoire ou un ou plusieurs ensembles comprenant le noyau transitoire, de préférence le noyau transitoire,
- des moyens de réassemblage du premier ensemble séparé et du deuxième ensemble séparé ensemble pour former le premier assemblage fractionné.

Dans ces variantes de la première forme de réalisation, les moyens de séparation de l'ensemble fractionné intermédiaire entre le premier ensemble séparé, le deuxième ensemble séparé, le noyau transitoire ou un ou plusieurs ensembles comprenant le noyau transitoire, de préférence le noyau transitoire sont agencés en amont des moyens de réassemblage du premier ensemble séparé et du deuxième ensemble séparé ensemble pour former le premier assemblage fractionné.

Avantageusement, dans ces variantes de la première forme de réalisation, les moyens de séparation de l'ensemble fractionné intermédiaire entre le premier ensemble séparé, le deuxième ensemble séparé et le noyau transitoire ou un ou plusieurs ensembles comprenant le noyau transitoire, de préférence le noyau transitoire comprennent des moyens de fractionnement de l'ensemble fractionné intermédiaire en le premier ensemble séparé, le deuxième ensemble séparé et le noyau transitoire ou un ou plusieurs ensembles comprenant le noyau transitoire, de préférence le noyau transitoire.

Dans une première configuration des première et deuxième formes de réalisation mettant en oeuvre avantageusement les variantes décrites précédemment et permettant un réassemblage partiel des A2' éléments filaires métalliques de la couche externe A2, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire et les moyens de réassemblage du premier assemblage fractionné, du deuxième assemblage fractionné et du troisième assemblage fractionné ensemble pour former l'assemblage final sont agencés de sorte que C2'<A2'.

Dans des variantes d'une première version de cette première configuration compatibles avec la deuxième configuration des premier, deuxième et troisième assemblages fractionnés décrites ci-dessus, les moyens de séparation de l'assemblage transitoire entre l'ensemble fractionné amont et le troisième assemblage fractionné comprennent:
- des moyens de séparation de l'assemblage transitoire entre:
   ∘ un ensemble précurseur comprenant au moins une couche I2 constituée de I2'>1 éléments filaires métalliques enroulés en hélice, les I2' éléments filaires métalliques étant issus de la couche externe A2 constituée des A2' éléments filaires métalliques de l'assemblage transitoire,
   ∘ l'ensemble fractionné amont, et
- des moyens de séparation de l'ensemble précurseur entre:
   ∘ un ensemble principal comprenant une couche J2 constituée de J2'≥1 élément(s) filaire(s) métallique(s) enroulé(s) en hélice, le ou les J2'≥1 élément(s) filaire(s) métallique(s) étant issus de la couche I2 constituée des I2' éléments filaires métalliques de l'ensemble précurseur, l'ensemble principal formant le troisième assemblage fractionné, et
   ∘ un ensemble complémentaire comprenant une couche K2 constituée de K2'≥1 élément(s) filaire(s) métallique(s) enroulé(s) en hélice, le ou les K2'≥1 élément(s) filaire(s) métallique(s) étant issus de la couche I2 constituée des I2' éléments filaires métalliques de l'ensemble précurseur.

Dans ces variantes de la première version de cette première configuration, les moyens de séparation de l'assemblage transitoire entre l'ensemble fractionné amont et l'ensemble précurseur sont agencés en amont des moyens de séparation de l'ensemble précurseur entre l'ensemble principal formant le troisième assemblage fractionné et l'ensemble complémentaire.

Avantageusement, les moyens de séparation de l'assemblage transitoire entre l'ensemble fractionné amont et l'ensemble précurseur comprennent des moyens de fractionnement de l'assemblage transitoire en :
- l'ensemble fractionné amont, et
- l'ensemble précurseur.

Avantageusement, les moyens de séparation de l'ensemble précurseur entre l'ensemble principal formant le troisième assemblage fractionné et l'ensemble complémentaire comprennent des moyens de fractionnement de l'ensemble précurseur en :
- l'ensemble principal formant le troisième assemblage fractionné, et
- l'ensemble complémentaire.

Dans des variantes d'une deuxième version de cette première configuration compatibles avec la première configuration des premier, deuxième et troisième assemblages fractionnés décrites ci-dessus, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire comprennent:
- des moyens de séparation de l'assemblage transitoire entre :
   - un ensemble dérivé comprenant au moins une couche Z2 constituée de Z2'≥1 élément(s) filaire(s) métallique(s) enroulé(s) en hélice, le ou les Z2' élément(s) filaire(s) métallique(s) étant issu(s) de la couche externe A2 constituée des A2'>1 éléments filaires métalliques de l'assemblage transitoire,
   - un ensemble fractionné amont comprenant au moins deux couches comprenant une couche interne G1 constituée de G1'>1 éléments filaires métalliques enroulés en hélice autour du noyau transitoire et une couche externe G2 constituée de G2'>1 éléments filaires métalliques enroulés en hélice autour de la couche interne G1, les G1' éléments filaires métalliques étant issus de la couche interne A1 constituée de A1'>1 éléments filaires métalliques de l'assemblage transitoire et les G2' éléments filaires métalliques étant issus de la couche externe A2 constituée de A2'>1 éléments filaires métalliques de l'assemblage transitoire,
- des moyens de séparation de l'ensemble fractionné amont entre :
   - le premier assemblage fractionné,
   - le deuxième assemblage fractionné,
   - le troisième assemblage fractionné, et
- le noyau transitoire ou un ou plusieurs ensembles comprenant le noyau transitoire, de préférence le noyau transitoire.

Dans ces variantes de la deuxième version de cette première configuration, les moyens de séparation de l'assemblage transitoire entre l'ensemble dérivé et l'ensemble fractionné amont sont agencés en amont des moyens de séparation de l'ensemble fractionné amont entre le premier assemblage fractionné, le deuxième assemblage fractionné, le troisième assemblage fractionné et le noyau transitoire ou un ou plusieurs ensembles comprenant le noyau transitoire, de préférence le noyau transitoire.

Avantageusement, dans ces variantes de la deuxième version de cette première configuration, les moyens de séparation de l'assemblage transitoire entre l'ensemble dérivé et l'ensemble fractionné amont comprennent des moyens de fractionnement de l'assemblage transitoire en l'ensemble dérivé et l'ensemble fractionné amont.

Avantageusement, dans ces variantes de la deuxième version de cette première configuration, les moyens de séparation de l'ensemble fractionné amont entre le premier assemblage fractionné, le deuxième assemblage fractionné, le troisième assemblage fractionné et le noyau transitoire ou un ou plusieurs ensembles comprenant le noyau transitoire, de préférence le noyau transitoire comprennent :
- des moyens de séparation de l'ensemble fractionné amont entre :
   - un ensemble fractionné intermédiaire comprenant au moins une couche Q1 constituée de Q1'>1 éléments filaires métalliques enroulés en hélice autour du noyau transitoire, les Q1' éléments filaires métalliques étant issus de la couche G1 constituée des G1' éléments filaires métalliques de l'ensemble fractionné amont,
   - le deuxième assemblage fractionné,
   - le troisième assemblage fractionné,
- des moyens de séparation de l'ensemble fractionné intermédiaire entre :
   - le premier assemblage fractionné, et
   - le noyau transitoire ou un ou plusieurs ensembles comprenant le noyau transitoire, de préférence le noyau transitoire.

Dans ces variantes de la deuxième version de cette première configuration, les moyens de séparation de l'ensemble fractionné amont entre l'ensemble fractionné intermédiaire, le deuxième assemblage fractionné et le troisième assemblage fractionné sont agencés en amont des moyens de séparation de l'ensemble fractionné intermédiaire entre le premier ensemble fractionné et le noyau transitoire ou un ou plusieurs ensembles comprenant le noyau transitoire, de préférence le noyau transitoire.

Avantageusement, dans ces variantes de la deuxième version de cette première configuration, les moyens de séparation de l'ensemble fractionné amont entre l'ensemble fractionné intermédiaire, le deuxième assemblage fractionné et le troisième assemblage fractionné comprennent des moyens de fractionnement de l'ensemble fractionné amont en l'ensemble fractionné intermédiaire, le deuxième assemblage fractionné et le troisième assemblage fractionné.

Dans une deuxième configuration des premier et deuxième modes de réalisation mettant en oeuvre avantageusement les variantes décrites précédemment et permettant un réassemblage total des A2' éléments filaires métalliques de la couche externe A2, les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire et les moyens de réassemblage du premier assemblage fractionné, du deuxième assemblage fractionné et du troisième assemblage fractionné ensemble pour former l'assemblage final sont agencés de sorte que C2'=A2'.

Dans des variantes d'une première version de cette deuxième configuration compatibles avec la deuxième configuration des premier, deuxième et troisième assemblages fractionnés décrites ci-dessus, les moyens de séparation de l'assemblage transitoire entre l'ensemble fractionné amont et le troisième assemblage fractionné comprennent des moyens de fractionnement de l'assemblage transitoire en l'ensemble fractionné amont et le troisième assemblage fractionné.

Dans des variantes d'une deuxième version de cette deuxième configuration compatibles avec la première configuration des premier, deuxième et troisième assemblages fractionnés décrites ci-dessus, les moyens de séparation de l'assemblage transitoire entre l'ensemble fractionné intermédiaire, le deuxième assemblage fractionné et le troisième assemblage fractionné comprennent des moyens de fractionnement de l'assemblage transitoire en l'ensemble fractionné intermédiaire, le deuxième assemblage fractionné et le troisième assemblage fractionné.

De façon très préférentielle, les moyens de fourniture de l'assemblage transitoire comprennent des moyens d'assemblage par retordage des A1' éléments filaires métalliques enroulés en hélice autour du noyau transitoire et des moyens d'assemblage par retordage des A2' éléments filaires métalliques enroulés en hélice autour de la couche interne C1.

Avantageusement, les moyens de fourniture de l'assemblage transitoire comprennent des moyens d'équilibrage de l'assemblage transitoire.

L'invention sera mieux comprise à la lecture de la description qui va suivre, donnée uniquement à titre d'exemple non limitatif et faite en se référant aux dessins dans lesquels:
- la figure 1 est un schéma d'une installation selon un premier mode de réalisation de l'invention permettant de mettre en œuvre un procédé selon un premier mode de réalisation de l'invention et de fabriquer le câble de la figure 14 ;
- la figure 2 est une représentation schématique de l'installation et du procédé illustrés sur la figure 1 ;
- les figures 3 et 4 sont des schémas de moyens de fractionnement et de réassemblage de l'installation de la figure 1 ;
- la figure 5 est une vue en coupe perpendiculaire à l'axe de l'assemblage (supposé rectiligne et au repos) d'un assemblage transitoire du procédé illustré sur les figures 1 et 2;
- la figure 6 est une vue en coupe perpendiculaire à l'axe de l'assemblage (supposé rectiligne et au repos) d'un ensemble précurseur issu de l'assemblage transitoire de la figure 5;
- la figure 7 est une vue en coupe perpendiculaire à l'axe de l'assemblage (supposé rectiligne et au repos) d'un ensemble fractionné amont issu de l'assemblage transitoire de la figure 5;
- la figure 8 est une vue en coupe perpendiculaire à l'axe de l'assemblage (supposé rectiligne et au repos) d'un ensemble fractionné aval issu de l'ensemble fractionné amont de la figure 7;
- la figure 9 est une vue en coupe perpendiculaire à l'axe de l'assemblage (supposé rectiligne et au repos) d'un premier assemblage fractionné issu de l'ensemble fractionné aval de la figure 8;
- la figure 10 est une vue en coupe perpendiculaire à l'axe de l'assemblage (supposé rectiligne et au repos) d'un deuxième assemblage fractionné issu de l'ensemble fractionné amont de la figure 7;
- la figure 11 est une vue en coupe perpendiculaire à l'axe de l'assemblage (supposé rectiligne et au repos) d'une partie principale formant le troisième assemblage fractionné issu de l'ensemble précurseur de la figure 6;
- la figure 12 est une vue en coupe perpendiculaire à l'axe de l'assemblage (supposé rectiligne et au repos) d'une partie complémentaire issue de l'ensemble précurseur de la figure 6;
- la figure 13 est une vue en coupe perpendiculaire à l'axe de l'assemblage (supposé rectiligne et au repos) d'un assemblage transitoire aval issu du réassemblage des premier et deuxième assemblages fractionnés des figures 9 et 10;
- la figure 14 est une vue en coupe perpendiculaire à l'axe de l'assemblage (supposé rectiligne et au repos) d'un assemblage final issu du réassemblage de l'assemblage transitoire aval de la figure 13 et du troisième assemblage fractionné de la figure 11;
- les figures 15 et 16 sont des représentations analogues à celles des figures 1 et 2 d'une installation et d'un procédé selon un deuxième mode de réalisation de l'invention;
- les figures 17 à 24 sont des représentations schématiques d'installation et de procédé de fabrication analogues à celles des figures 2 et 16 d'autres modes de réalisation de l'invention.

### INSTALLATION ET PROCEDE SELON UN PREMIER MODE DE REALISATION DE L'INVENTION

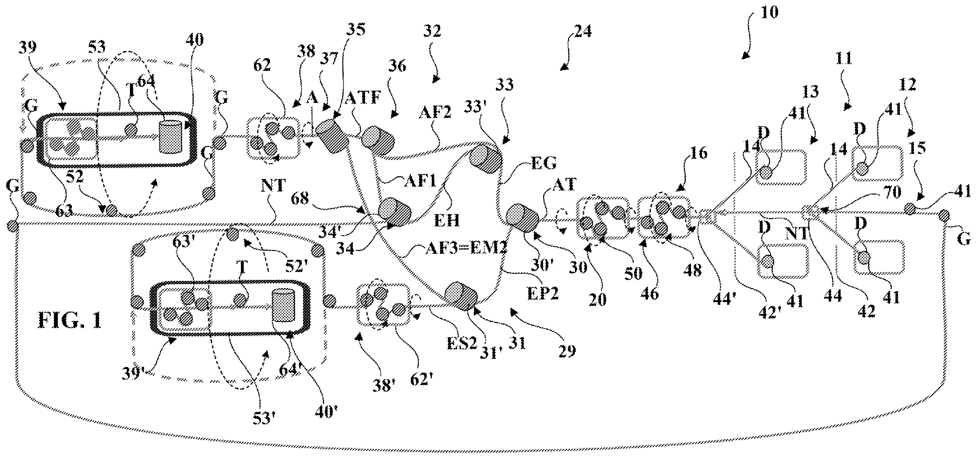

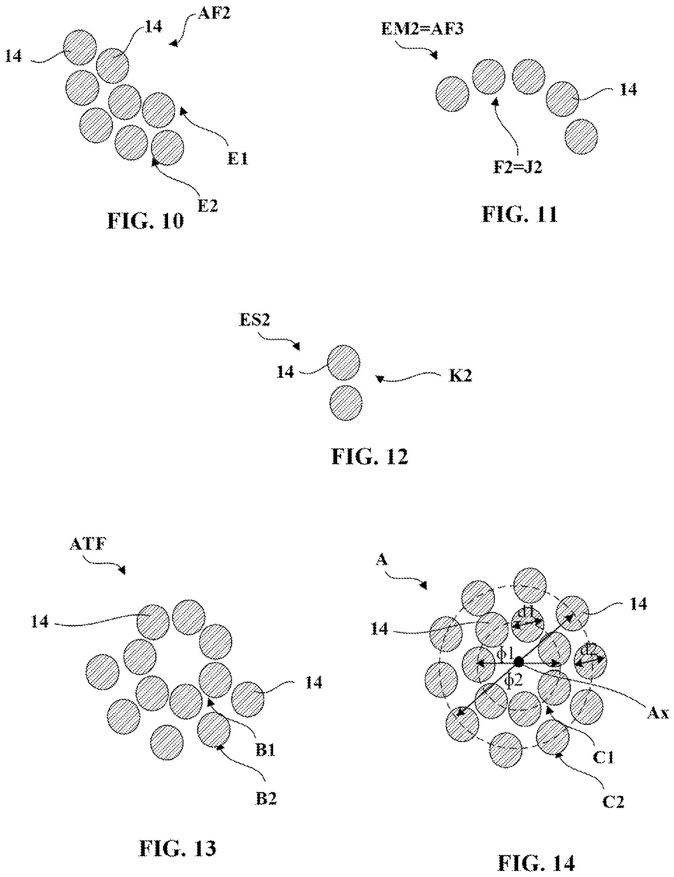

On a représenté sur la figure 1 une installation de fabrication d'un assemblage final A comprenant au moins deux couches et comprenant ici une couche interne C1 constituée de C1'>1 éléments filaires métalliques 14 enroulés en hélice et une couche externe C2 constituée de C2'>1 éléments filaires métalliques 14 enroulés en hélice autour de la couche interne C1. En l'espèce, l'assemblage final A, représenté sur la figure 14, est constitué des deux couches C1, C2 avec C1'=7 et C2'=10. Ainsi, l'assemblage final A est constitué des couches C1 et C2, autrement dit l'assemblage final A ne comprend pas d'autre élément filaire métallique que ceux des couches C1 et C2. L'assemblage final A présente un axe principal Ax s'étendant sensiblement parallèlement à la direction selon laquelle l'assemblage final A s'étend selon sa plus grande longueur. Chaque élément filaire métallique 14 de chaque couche C1, C2 décrit, lorsque l'assemblage final A, s'étend selon une direction sensiblement rectiligne, une trajectoire en forme d'hélice autour de l'axe principal Ax sensiblement parallèle à la direction sensiblement rectiligne, de sorte que, dans un plan de coupe sensiblement perpendiculaire à l'axe principal Ax, la distance entre le centre de chaque élément filaire métallique 14 de la couche interne C1 et l'axe principal Ax est sensiblement constante et égale pour tous les éléments filaires métalliques 14 de la couche interne C1 et chaque élément filaire métallique 14 de la couche externe C2 et l'axe principal Ax est sensiblement constante et égale pour tous les éléments filaires métalliques 14 de la couche externe C2. Cette distance constante entre le centre de chaque élément filaire métallique 14 de chaque couche C1, C2 et l'axe principal Ax est égale à la moitié de chaque diamètre d'hélice de chaque élément filaire métallique 14 de chaque couche C1, C2.

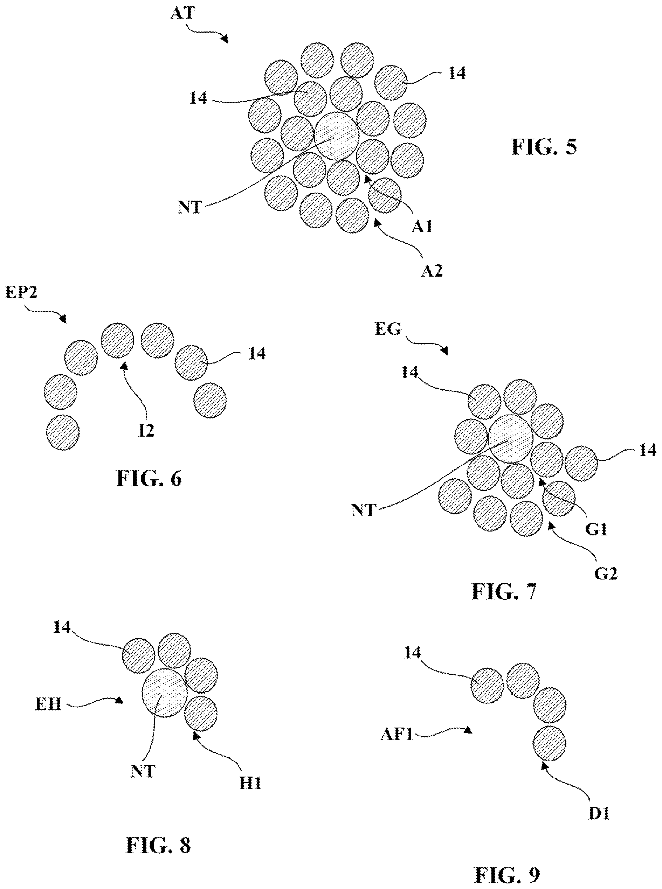

L'installation est désignée par la référence générale 10. L'installation 10 comprend tout d'abord des moyens 11 de fourniture d'un assemblage transitoire AT comprenant au moins deux couches et comprenant ici une couche interne A1 constituée de A1'>1 éléments filaires métalliques 14 enroulés en hélice autour d'un noyau transitoire NT et une couche externe A2 constituée de A2'>1 éléments filaires métalliques 14 enroulés en hélice autour de la couche interne A1. En l'espèce, l'assemblage transitoire AT illustré sur la figure 5 comprend la couche interne A1, la couche externe A2 et le noyau transitoire NT, les A1' éléments filaires métalliques 14 étant enroulés en hélice autour du noyau transitoire NT. Ici, l'assemblage transitoire AT est constitué de la couche interne A1, de la couche externe A2 et du noyau transitoire NT.

Avantageusement, A1' va de 2 à 10 et A2' va de 6 à 20. Ici, A1'=7 et A2'=12.

Chaque élément filaire métallique 14 comprend, ici est constitué d'un unique monofilament élémentaire métallique de section circulaire, ici en acier au carbone, présentant un diamètre d1=d2 allant de 0,05 mm à 0,50 mm, de préférence de 0,10 mm à 0,48 mm et plus préférentiellement de 0,15 mm à 0,45 mm et ici d1=d2=0,32 mm. Le noyau transitoire est ici un élément filaire textile, plus particulièrement est ici un brin textile multifilamentaire en polyester présentant un titre de 334 tex et de diamètre égal à 0,60 mm.

Les moyens 11 de fourniture comprennent des moyens 12 d'alimentation des A1' éléments filaires métalliques 14, des moyens d'alimentation 13 des A2' éléments filaires métalliques 14 et des moyens d'alimentation 15 du noyau transitoire NT. Les moyens de fourniture 11 comprennent également des moyens 16 d'assemblage par retordage des A1' et A2' éléments filaires métalliques 14 ensemble en les couche A1 et A2 d'éléments filaires métalliques 14 autour du noyau transitoire NT pour former l'assemblage transitoire AT. En outre, les moyens de fourniture 11 comprennent des moyens 20 d'équilibrage de l'assemblage transitoire AT. En sortie des moyens 20, chaque élément filaire métallique 14 de la couche interne A1 de l'assemblage transitoire AT est ici assemblé à un pas transitoire égal à 5,8 mm et chaque élément filaire métallique 14 de la couche externe A2 de l'assemblage transitoire AT est ici assemblé à un pas transitoire égal à 5,8 mm. Le diamètre d'hélice transitoire de chaque élément filaire métallique 14 de la couche interne A1 de l'assemblage transitoire AT est ici sensiblement égal à 0,92 mm et le diamètre d'hélice transitoire de chaque élément filaire métallique 14 de la couche externe A2 de l'assemblage transitoire AT est ici sensiblement égal à 1,56 mm.

En aval des moyens de fourniture 11 en considérant le sens de défilement des éléments filaires métalliques, l'installation 10 comprend des moyens 24 de séparation de l'assemblage transitoire AT entre un premier assemblage fractionné AF1, un deuxième assemblage fractionné AF2, un troisième assemblage fractionné AF3 et le noyau transitoire NT ou un ou plusieurs ensembles comprenant le noyau transitoire NT, ici le noyau transitoire NT.

Le premier assemblage fractionné AF1 représenté sur la figure 9 comprend au moins une couche D1 constituée de D1'≥1 élément(s) filaire(s) métallique(s) 14 enroulé(s) en hélice, le ou les D1' élément(s) filaire(s) métallique(s) 14 étant issu(s) de la couche interne A1 constituée de A1'>1 éléments filaires métalliques 14 de l'assemblage transitoire AT. En l'espèce, le premier assemblage fractionné AF1 est constitué de la couche D1 constituée de D1'=4 éléments filaires métalliques 14 enroulés en hélice.

Le deuxième assemblage fractionné AF2 représenté sur la figure 10 comprend au moins deux couches E1, E2 comprenant une couche interne E1 constituée de E1'≥1 éléments filaires métalliques 14 enroulés en hélice et une couche externe E2 constituée de E2'≥1 éléments filaires métalliques 14 enroulés en hélice autour de la couche interne E1. Ici E1'=3 et E2'=5. Les E1' éléments filaires métalliques 14 sont issus de la couche interne A1 de l'assemblage transitoire AT et les E2' éléments filaires métalliques 14 sont issus de la couche externe A2 de l'assemblage transitoire AT. En l'espèce, le deuxième assemblage fractionné 27 est constitué des couches E1 et E2.

Le troisième assemblage fractionné AF3 représenté sur la figure 11 comprend au moins une couche F2 constituée de F2'≥ 1 élément(s) filaire(s) métallique(s) 14 enroulé(s) en hélice, le ou les F2' éléments filaires métalliques 14 étant issus de la couche externe A2 constituée de A2'>1 éléments filaires métalliques 14 de l'assemblage transitoire AT. En l'espèce, le troisième assemblage fractionné AF3 est constitué de la couche F2 constituée de F2'=5 éléments filaires métalliques 14 enroulés en hélice.

En aval des moyens de fourniture 11, les moyens de séparation 24 de l'assemblage transitoire AT entre le premier assemblage fractionné AF1, le deuxième assemblage fractionné AF2, le troisième assemblage fractionné AF3 et le noyau transitoire NT comprennent des moyens 29 de séparation de l'assemblage transitoire AT entre un ensemble fractionné amont EG et le troisième assemblage fractionné AF3.

L'ensemble fractionné amont EG illustré sur la figure 7 comprend au moins deux couches G1, G2 comprenant une couche interne G1 constituée de G1'≥1 élément(s) filaire(s) métallique(s) 14 enroulé(s) en hélice autour du noyau transitoire NT et une couche externe G2 constituée de G2'≥1 élément(s) filaire(s) métallique(s) 14 enroulé(s) en hélice autour de la couche interne G1. Le ou les G1' élément(s) filaire(s) métallique(s) 14 sont issus de la couche interne A1 constituée de A1'>1 éléments filaires métalliques 14 de l'assemblage transitoire AT. Le ou les G2' élément(s) filaire(s) métallique(s) 14 sont issus de la couche externe A2 constituée de A2'>1 éléments filaires métalliques 14 de l'assemblage transitoire AT. L'ensemble fractionné EG comprend ici la couche interne G1, la couche externe G2 et le noyau transitoire NT, le ou les G1'≥1 élément(s) filaire(s) métallique(s) 14 étant enroulé(s) en hélice autour du noyau transitoire NT. En l'espèce, l'ensemble fractionné amont EG est constitué des deux couches G1, G2 avec G1'=7 et G2'=5 et du noyau transitoire NT, les G1'≥1 éléments filaires métalliques 14 étant enroulés en hélice autour du noyau transitoire NT.

Les moyens de séparation 29 de l'assemblage transitoire AT entre l'ensemble fractionné amont EG et le troisième assemblage fractionné AF3 comprennent des moyens 30 de séparation de l'assemblage transitoire AT entre un ensemble précurseur EP2 et l'ensemble fractionné amont EG. En l'espèce, les moyens de séparation 30 comprennent des moyens 30' de fractionnement de l'assemblage transitoire AT en l'ensemble précurseur EP2 et l'ensemble fractionné amont EG

L'ensemble précurseur EP2 illustré sur la figure 6 comprend au moins une couche I2 constituée de I2'>1 éléments filaires métalliques 14 enroulés en hélice, les I2' éléments filaires métalliques 14 étant issus de la couche externe A2 constituée des A2' éléments filaires métalliques 14 de l'assemblage transitoire AT. En l'espèce, l'ensemble précurseur EP2 est constitué de la couche I2 constituée de I2'=7 éléments filaires métalliques 14 enroulés en hélice.

Les moyens de séparation 29 de l'assemblage transitoire AT entre l'ensemble fractionné amont EG et le troisième assemblage fractionné AF3 comprennent également des moyens 31 de séparation de l'ensemble précurseur EP2 entre un ensemble principal EM2 formant le troisième assemblage fractionné AF3 et un ensemble complémentaire ES2. En l'espèce, les moyens de séparation 31 comprennent des moyens 31' de fractionnement de l'ensemble précurseur EP2 en l'ensemble principal EM2 formant le troisième assemblage fractionné AF3 et l'ensemble complémentaire ES2.

L'ensemble principal EM2 illustré sur la figure 11 comprend une couche J2 constituée de J2'≥1 élément(s) filaire(s) métallique(s) 14 enroulé(s) en hélice, le ou les J2'≥1 élément(s) filaire(s) métallique(s) 14 étant issus de la couche I2 constituée des I2' éléments filaires métalliques 14 de l'ensemble précurseur EP2. En l'espèce, l'ensemble principal EM2 est constitué de la couche J2 constituée de F2'=J2'=5 éléments filaires métalliques 14 enroulés en hélice.

L'ensemble complémentaire ES2 illustré sur la figure 12 comprend une couche K2 constituée de K2'≥1 élément(s) filaire(s) métallique(s) 14 enroulé(s) en hélice, le ou les K2'≥1 élément(s) filaire(s) métallique(s) étant issus de la couche I2 constituée des I2' éléments filaires métalliques 14 de l'ensemble précurseur EP2. En l'espèce, l'ensemble complémentaire ES2 est constitué de la couche K2 constituée de K2'=2 éléments filaires métalliques 14 enroulés en hélice.

En aval des moyens de fourniture 11, les moyens de séparation 24 de l'assemblage transitoire AT entre le premier assemblage fractionné AF1, le deuxième assemblage fractionné AF2, le troisième assemblage fractionné AF3 et le noyau transitoire NT comprennent également des moyens 32 de séparation de l'ensemble fractionné amont EG entre le premier assemblage fractionné AF1, le deuxième assemblage fractionné AF2 et le noyau transitoire NT.

Les moyens de séparation 32 de l'ensemble fractionné amont EG entre le premier assemblage fractionné AF1, le deuxième assemblage fractionné AF2 et le noyau transitoire NT comprennent des moyens 33 de séparation de l'ensemble fractionné amont EG entre un ensemble fractionné aval EH et le deuxième assemblage fractionné AF2. En l'espèce, les moyens de séparation 33 comprennent des moyens 33' de fractionnement de l'ensemble fractionné amont EG en l'ensemble fractionné aval EH et le deuxième assemblage fractionné AF2.

L'ensemble fractionné aval EH illustré sur la figure 8 comprend au moins une couche H1 constituée de H1'≥1 élément(s) filaire(s) métallique(s) 14 enroulé(s) en hélice autour du noyau transitoire NT, le ou les H1' élément(s) filaire(s) métallique(s) 14 étant issu(s) de la couche interne G1 constituée des G1' éléments filaires métalliques 14 de l'ensemble fractionné amont EG. L'ensemble fractionné aval EH comprend la couche interne G1 et le noyau transitoire NT, le ou les H1'≥1 élément(s) filaire(s) métallique(s) 14 étant enroulé(s) en hélice autour du noyau transitoire NT. En l'espèce, l'ensemble fractionné aval EH est constitué de la couche H1 constituée de H1'=4 éléments filaires métalliques 14 et du noyau transitoire NT, les H1'≥1 éléments filaires métalliques 14 étant enroulés en hélice autour du noyau transitoire NT.

Les moyens de séparation 32 de l'ensemble fractionné amont EG entre le premier assemblage fractionné AF1, le deuxième assemblage fractionné AF2 et le noyau transitoire NT comprennent également des moyens 34 de séparation de l'ensemble fractionné aval EH entre le premier assemblage fractionné AF1 et le noyau transitoire NT. En l'espèce, les moyens de séparation 34 comprennent des moyens 34' de fractionnement de l'ensemble fractionné aval EH en le premier assemblage fractionné AF1 et le noyau transitoire NT.

On notera que les moyens 29 de séparation de l'assemblage transitoire AT entre l'ensemble fractionné amont EG et le troisième assemblage fractionné AF3 sont agencés en amont des moyens 32 de séparation de l'ensemble fractionné amont entre le premier assemblage fractionné AF1, le deuxième assemblage fractionné AF3 et le noyau transitoire NT. Les moyens 33 de séparation de l'ensemble fractionné amont EG entre l'ensemble fractionné aval EH et le deuxième assemblage fractionné AF2 sont agencés en amont des moyens 34 de séparation de l'ensemble fractionné aval EH entre le premier assemblage fractionné AF1 et le noyau transitoire NT. Les moyens 30 de séparation de l'assemblage transitoire AT entre l'ensemble fractionné amont EG et l'ensemble précurseur EP2 sont agencés en amont des moyens 31 de séparation de l'ensemble précurseur EP2 entre l'ensemble principal EM2 formant le troisième assemblage fractionné AF3 et l'ensemble complémentaire ES2.

En aval des moyens de séparation 29, 30, 31, 32, 33 et 34, l'installation 10 comprend des moyens 35 de réassemblage du premier assemblage fractionné AF1, du deuxième assemblage fractionné AF2 et du troisième assemblage fractionné AF3 ensemble pour former l'assemblage final A..

Les moyens de réassemblage 35 comprennent des moyens 36 de réassemblage amont du premier assemblage fractionné AF1 avec le deuxième assemblage fractionné AF2 pour former un assemblage transitoire aval ATF.

L'assemblage transitoire aval ATF illustré sur la figure 13 comprend au moins deux couches B1, B2 comprenant une couche interne B1 constituée de C1'=B1'>1 éléments filaires métalliques 14 enroulés en hélice formant la couche interne C1 constituée de C1' éléments filaires métalliques 14 enroulés en hélice et une couche externe B2 constituée de B2'>1 éléments filaires métalliques 14 enroulés en hélice formant une partie de la couche externe C2 constituée de C2' éléments filaires métalliques 14 enroulés en hélice. En l'espèce, l'assemblage transitoire aval ATF est constitué de la couche interne B1 et de la couche externe B2.

Les moyens de réassemblage 35 comprennent également des moyens 37 de réassemblage aval de l'assemblage transitoire aval ATF avec le troisième assemblage fractionné AF3 pour former l'assemblage final A.

En l'espèce, en raison du retour élastique de chaque élément filaire métallique 14 en réponse à l'étape de retordage, le pas de chaque élément filaire métallique 14 de la couche interne C1 de l'assemblage transitoire AT passe du pas transitoire égal à 5,8 mm au pas p1 égal ici à 7,8 mm et le pas de chaque élément filaire métallique 14 de la couche externe C2 de l'assemblage transitoire AT passe du pas transitoire égal à 5,8 mm au pas p2 égal au pas p1 soit 7,8 mm. L'homme du métier saura déterminer quels pas transitoires appliquer afin d'obtenir les pas p1, p2 désirés.

Chaque diamètre d'hélice ϕ1, ϕ2 de chaque élément filaire métallique 14 dans l'assemblage final est ici sensiblement supérieur au diamètre d'hélice transitoire de chaque élément filaire 14 dans l'assemblage transitoire AT et ce en raison du retour élastique. Chaque diamètre d'hélice ϕ1, ϕ2 de chaque élément filaire métallique 14 dans l'assemblage final est d'autant plus supérieur au diamètre d'hélice transitoire de chaque élément filaire 14 dans l'assemblage transitoire AT que le taux de retordage est important. L'homme du métier saura déterminer quel diamètre d'hélice transitoire appliquer afin d'obtenir chaque diamètre d'hélice ϕ1, ϕ2 désiré, et ce en fonction du taux de retordage et de la nature du noyau transitoire.

Les moyens de fourniture 11, les moyens de séparation 24 et les moyens de réassemblage 35 sont agencés de sorte que, d'une part, tous les C1' éléments filaires métalliques 14 présentent le même diamètre d1=0,32 mm, sont enroulés en hélice selon le même pas p1=7,8 mm et présentent un même diamètre d'hélice ϕ1=0,95 mm et d'autre part, tous les C2' éléments filaires métalliques présentent un même diamètre d2=0,32 mm, sont enroulés en hélice selon un même pas p2=7,8 mm et présentent un même diamètre d'hélice ϕ2=1,62 mm .Ainsi, dans ce premier mode de réalisation, les moyens de séparation 24 et les moyens 35 de réassemblage sont agencés de sorte que D1'+E1'=A1' et E2'+F2'≤A2' et ici de sorte que E2'+F2'<A2'. En particulier, dans ce premier mode de réalisation, les moyens de séparation 24 et les moyens 35 de réassemblage sont agencés de sorte que C1'=A1' et C2'≤A2' et ici de sorte que C2'<A2'.

En aval des moyens de réassemblage 35, 36 et 37 en considérant le sens de défilement des éléments filaires métalliques 14, l'installation 10 comprend des moyens 38, 38' d'entretien de la rotation respectivement de l'assemblage final A et de l'ensemble complémentaire ES2 autour de leur direction de défilement.

En aval des moyens d'entretien de la rotation 38, 38' en considérant le sens de défilement des éléments filaires métalliques 14, l'installation 10 comprend des moyens d'équilibrage 39, 39' respectivement de l'assemblage final A et de l'ensemble complémentaire ES2.

En aval des moyens d'équilibrage 39, 39' en considérant le sens de défilement des éléments filaires métalliques 14, l'installation 10 comprend des moyens 40, 40' de stockage respectivement de l'assemblage final A et de l'ensemble complémentaire ES2.

L'installation 10 comprend également des moyens de guidage G, de déroulage D et de traction T des éléments filaires, des ensembles et des assemblages classiquement utilisés par l'homme du métier, par exemple des poulies et des cabestans.

Les moyens d'alimentation 12 comprennent ici sept bobines 41 de stockage des A1' éléments filaires métalliques. Les moyens d'alimentation 13 comprennent ici douze bobines 41 de stockage des A2' éléments filaires métalliques. Les moyens d'alimentation 15 comprennent une bobine 41 de stockage du noyau transitoire NT. Sur la figure 1, seules quatre des sept et douze bobines 41 sont représentées à des fins de clarté de la figure.

Les moyens d'assemblage 16 comprennent des répartiteurs 42, 42' et des grains d'assemblage 44, 44'. Les moyens d'assemblage 16 comprennent des moyens 46 de retordage des A1' et A2' éléments filaires 14 et du noyau transitoire NT. Les moyens de retordage 46 comprennent un retordeur 48, également appelé communément « twister » par l'homme du métier, par exemple un twister à quatre poulies. En aval de ces moyens de retordage 46, les moyens d'équilibrage 20 comprennent un twister 50, par exemple un twister à quatre poulies. Enfin, en aval du retordeur 48, les moyens d'assemblage 16 comprennent une lyre 52 ainsi qu'une nacelle 53 portant les moyens d'équilibrage 39 final et les moyens 40 de stockage. La lyre 52 et la nacelle 53 sont montées mobiles en rotation de façon à conserver le pas d'assemblage de l'assemblage final A. L'installation 10 comprend également une lyre 52' et une nacelle 53' pour l'ensemble complémentaire ES2.

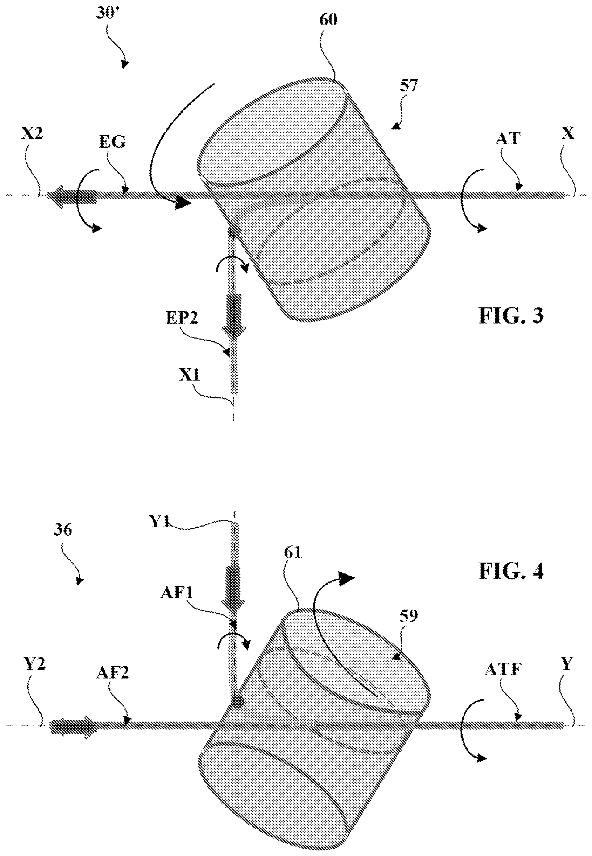

On a représenté sur la figure 3 les moyens de fractionnement 30'. L'assemblage transitoire AT défile selon une direction de défilement amont X. Après le passage dans les moyens de fractionnement 30', l'ensemble fractionné amont EG défile selon une direction de défilement aval X2 et l'ensemble précurseur EP2 selon une direction aval X1. Les moyens de fractionnement 30' comprennent des moyens 57 de guidage permettant d'une part, la translation des ensemble fractionné amont EG et précurseur EP2 respectivement selon les directions avals X2, X1 et d'autre part, la rotation des ensemble fractionné amont EG et précurseur EP2 respectivement autour des directions avals X2, X1. En l'espèce, les moyens 57 comprennent un rouleau 60 rotatif incliné. Les moyens de fractionnement 31', 33' et 34' sont analogues aux moyens de fractionnement 30' décrits ci-dessus. Lors du procédé, l'ensemble précurseur EP2 entre en contact avec le rouleau 60 en aval du point de fractionnement entre les ensembles fractionné amont EG et précurseur EP2.

On a représenté sur la figure 4 les moyens de réassemblage 36. Le premier assemblage fractionné AF1 défile selon une direction de défilement amont Y1. Le deuxième assemblage fractionné AF2 défile selon une direction de défilement amont Y2. L'assemblage transitoire aval ATF défile selon une direction de défilement aval Y. Les moyens de réassemblage 36 comprennent des moyens 59 de guidage permettant d'une part, la translation des premier et deuxième assemblages fractionnés AF1, AF2 respectivement selon les directions avals Y1, Y2 et d'autre part, la rotation des premier et deuxième assemblages fractionnés AF1, AF2 respectivement autour des directions avals Y1, Y2. En l'espèce, les moyens 59 comprennent un rouleau 61 rotatif incliné. Lors du procédé, le premier assemblage fractionné AF1 entre en contact avec le rouleau 61 en amont du point de réassemblage des premier et deuxième assemblages fractionnés AF1, AF2 entre eux. Les moyens de réassemblage 37 sont analogues aux moyens de réassemblage 36 décrits ci-dessus.

Les moyens 38, 38' d'entretien de la rotation comprennent des twisters 62, 62', par exemple des twisters à quatre poulies permettant d'entretenir la rotation de l'assemblage final A respectivement autour de la direction aval. Les moyens d'équilibrage 39, 39' final comprennent également des twister 63, 63' par exemple des twisters à quatre poulies. Les moyens de stockage 40, 40' comprennent ici des bobines 64, 64' de stockage respectivement de l'assemblage final A et de la partie complémentaire ES2.

Afin de recycler le noyau transitoire NT, l'installation 10 comprend des moyens de guidage G du noyau transitoire NT entre, d'une part, une sortie 68 des moyens de séparation 24, ici en aval des moyens de fractionnement 34, et d'autre part, une entrée 70 dans les moyens d'assemblage 16.

On notera que l'installation 10 est dépourvue de moyens de préformation, en particulier des moyens de préformation individuelle des éléments filaires 14 agencés en amont des moyens d'assemblage 16.

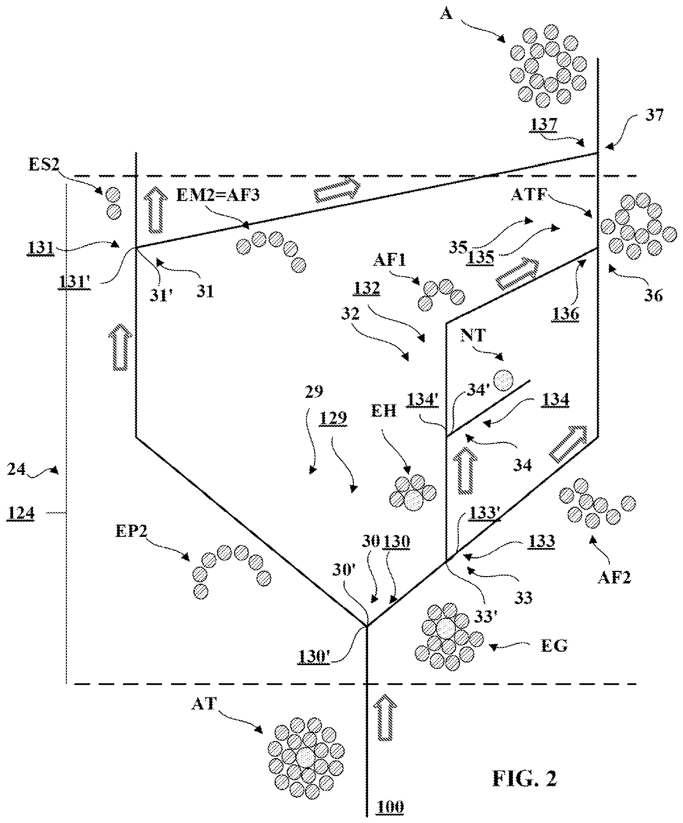

Les différents moyens 24, 29, 30, 30', 31, 31', 32, 33, 33', 34, 34', 35, 36, 37 ainsi que les différents assemblages et ensembles A, AT, ATF, AF1, AF2, AF3, EG, EH, EP2, EM2, ES2, NT sont représentés de façon schématique sur la figure 2 sur laquelle les flèches indiquent le sens de défilement de ces assemblages et ensembles d'aval vers l'amont.

On va maintenant décrire le procédé selon le premier mode de réalisation permettant de mettre en oeuvre l'installation 10 décrite ci-dessus. Le procédé permet de fabriquer l'assemblage final A décrit ci-dessus.

Tout d'abord, on déroule les éléments filaires 14 et le noyau transitoire NT depuis les moyens d'alimentation 12, 13 et 15, ici les bobines 41.

Puis, le procédé comprend une étape 100 de fourniture de l'assemblage transitoire AT comprenant d'une part une étape d'assemblage par retordage des A1', A2' éléments filaires métalliques 14 en deux couche A1, A2 autour du noyau transitoire NT et d'autre part, une étape d'équilibrage de l'assemblage transitoire AT réalisée grâce au twister 50.

Le procédé comprend une étape 124 de séparation de l'assemblage transitoire NT entre le premier assemblage fractionné AF1, le deuxième assemblage fractionné AF2, le troisième assemblage fractionné AF3 et le noyau transitoire NT ou un ou plusieurs ensembles comprenant le noyau transitoire NT, ici le noyau transitoire NT.

En aval de l'étape de fourniture 100, l'étape de séparation 124 de l'assemblage transitoire AT entre le premier assemblage fractionné AF1, le deuxième assemblage fractionné AF2, le troisième assemblage fractionné AF3 et le noyau transitoire NT comprend une étape 129 de séparation de l'assemblage transitoire AT entre l'ensemble fractionné amont EG et le troisième assemblage fractionné AF3.

L'étape de séparation 129 de l'assemblage transitoire AT entre l'ensemble fractionné amont EG et le troisième assemblage fractionné AF3 comprend une étape 130 de séparation de l'assemblage transitoire AT entre l'ensemble précurseur EP2 et l'ensemble fractionné amont EG. En l'espèce, l'étape de séparation 130 comprend une étape 130' de fractionnement de l'assemblage transitoire AT en l'ensemble précurseur EP2 et l'ensemble fractionné amont EG

L'étape de séparation 129 de l'assemblage transitoire AT entre l'ensemble fractionné amont EG et le troisième assemblage fractionné AF3 comprend également une étape 131 de séparation de l'ensemble précurseur EP2 entre l'ensemble principal EM2 formant le troisième assemblage fractionné AF3 et l'ensemble complémentaire ES2. En l'espèce, l'étape de séparation 131 comprend une étape 131' de fractionnement de l'ensemble précurseur EP2 en l'ensemble principal EM2 formant le troisième assemblage fractionné AF3 et l'ensemble complémentaire ES2.

En aval de l'étape de fourniture 100, l'étape de séparation 124 de l'assemblage transitoire AT entre le premier assemblage fractionné AF1, le deuxième assemblage fractionné AF2, le troisième assemblage fractionné AF3 et le noyau transitoire NT comprend également une étape 132 de séparation de l'ensemble fractionné amont EG entre le premier assemblage fractionné AF1, le deuxième assemblage fractionné AF2 et le noyau transitoire NT.

L'étape de séparation 132 de l'ensemble fractionné amont EG entre le premier assemblage fractionné AF1, le deuxième assemblage fractionné AF2 et le noyau transitoire NT comprend une étape 133 de séparation de l'ensemble fractionné amont EG entre un ensemble fractionné aval EH et le deuxième assemblage fractionné AF2. En l'espèce, l'étape de séparation 133 comprend une étape 133' de fractionnement de l'ensemble fractionné amont EG en l'ensemble fractionné aval EH et le deuxième assemblage fractionné AF2.

L'étape de séparation 132 de l'ensemble fractionné amont EG entre le premier assemblage fractionné AF1, le deuxième assemblage fractionné AF2 et le noyau transitoire NT comprend également une étape 134 de séparation de l'ensemble fractionné aval EH entre le premier assemblage fractionné AF1 et le noyau transitoire NT. En l'espèce, l'étape de séparation 134 comprend une étape 134' de fractionnement de l'ensemble fractionné aval EH en le premier assemblage fractionné AF1 et le noyau transitoire NT.

On notera que l'étape 129 de séparation de l'assemblage transitoire AT entre l'ensemble fractionné amont EG et le troisième assemblage fractionné AF3 a lieu en amont de l'étape 132 de séparation de l'ensemble fractionné amont entre le premier assemblage fractionné AF1, le deuxième assemblage fractionné AF3 et le noyau transitoire NT. L'étape 133 de séparation de l'ensemble fractionné amont EG entre l'ensemble fractionné aval EH et le deuxième assemblage fractionné AF2 a lieu en amont de l'étape 134 de séparation de l'ensemble fractionné aval EH entre le premier assemblage fractionné AF1 et le noyau transitoire NT. L'étape 130 de séparation de l'assemblage transitoire AT entre l'ensemble fractionné amont EG et l'ensemble précurseur EP2 a lieu en amont de l'étape 131 de séparation de l'ensemble précurseur EP2 entre l'ensemble principal EM2 formant le troisième assemblage fractionné AF3 et l'ensemble complémentaire ES2.

En aval de chaque étape de séparation 129, 130, 131, 132, 133 et 134, le procédé comprend une étape 135 de réassemblage du premier assemblage fractionné AF1, du deuxième assemblage fractionné AF2 et du troisième assemblage fractionné ensemble pour former l'assemblage final A.

L'étape de réassemblage 135 comprend une étape 136 de réassemblage amont du premier assemblage fractionné AF1 avec le deuxième assemblage fractionné AF2 pour former l'assemblage transitoire aval ATF. L'étape de réassemblage 135 comprend également une étape 137 de réassemblage aval de l'assemblage transitoire aval ATF avec le troisième assemblage fractionné AF3 pour former l'assemblage final A.

Dans ce mode de réalisation, l'étape de fourniture 100, l'étape de séparation 124 et l'étape de réassemblage 135 sont réalisées de sorte que, d'une part, tous les C1' éléments filaires métalliques 14 présentent le même diamètre d1=0,32 mm, sont enroulés en hélice selon le même pas p1=7,8 mm et présentent le même diamètre d'hélice ϕ1=0,95 mm et d'autre part, tous les C2' éléments filaires métalliques présentent le même diamètre d2=0,32 mm, sont enroulés en hélice selon le même pas p2=7,8 mm et présentent le même diamètre d'hélice ϕ2=1,62 mm.

Ainsi, dans ce premier mode de réalisation permettant un réassemblage total des A1' éléments filaires métalliques et un réassemblage partiel des A2' éléments filaires métalliques, l'étape 124 de séparation et l'étape 135 de réassemblage sont réalisées de sorte que D1'+E1'=A1' et E2'+F2'≤A2' et ici de sorte que E2'+F2'<A2'. En particulier, dans ce premier mode de réalisation, l'étape 124 de séparation et l'étape 135 de réassemblage sont réalisées de sorte que C1'=A1' et C2'≤A2' et ici de sorte que C2'<A2'.

En outre, on notera que A1'≥G1', A2'≥F2'+G2', A2'≥I2'+G2', G1'≥D1', G2'≥E2', G1'≥H1'+E1', H1'≥D1', J2'=F2' et I2'≥J2'+K2'. En l'espèce, G1'=H1'+E1', G2'=E2', H1'=D1', A1'=G1', A2'=I2'+G2' et I2'=J2'+K2'.

On notera enfin que, afin de faciliter la sortie du noyau transitoire, D1'=1 ou 2 dans les cas où A1'=4 ou A1'=5 et D1' ≤ 0,75 x A1' et de préférence D1' ≤ 0,70 x A1' dans les cas où A1'≥6. Ici A1'=7, et D1'=4<0,7 x 4=4,2.

En outre, le procédé comprend des étapes d'entretien de la rotation de l'assemblage final A et de l'ensemble complémentaire ES2 autour de leurs directions de défilement respectives. On réalise ces étapes d'entretien en aval de l'étape de séparation de l'assemblage transitoire AT grâce aux moyens 38 et 38'.

On réalise une étape d'équilibrage final grâce aux moyens 39 et 39'.

Enfin, on stocke l'assemblage final A et l'ensemble complémentaire ES2 dans les bobines de stockage 64, 64'.

Concernant le noyau transitoire NT, le procédé comprend une étape de recyclage du noyau transitoire NT. Durant cette étape de recyclage, on récupère le noyau transitoire NT en aval de l'étape de séparation 124, ici en aval de l'étape de séparation 134, et on introduit le noyau transitoire NT récupéré précédemment en amont de l'étape d'assemblage. Cette étape de recyclage est continue.

On notera que le procédé ainsi décrit est dépourvu d'étapes de préformation individuelle de chacun des éléments filaires métalliques 14.

### INSTALLATION ET PROCEDE SELON UN DEUXIEME MODE DE REALISATION DE L'INVENTION

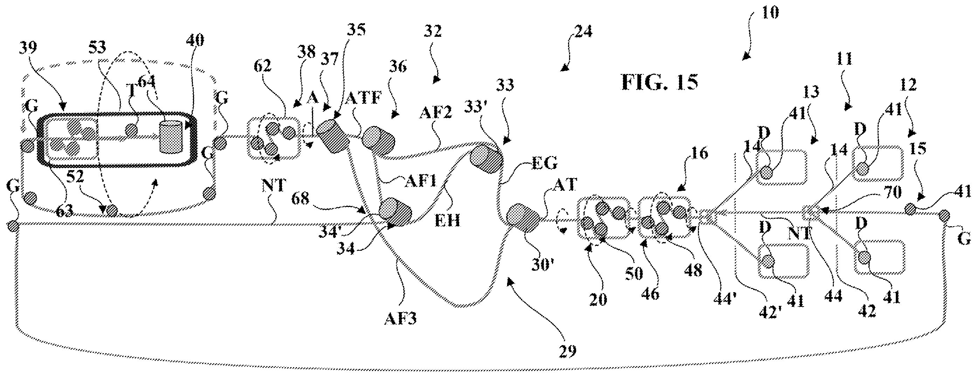

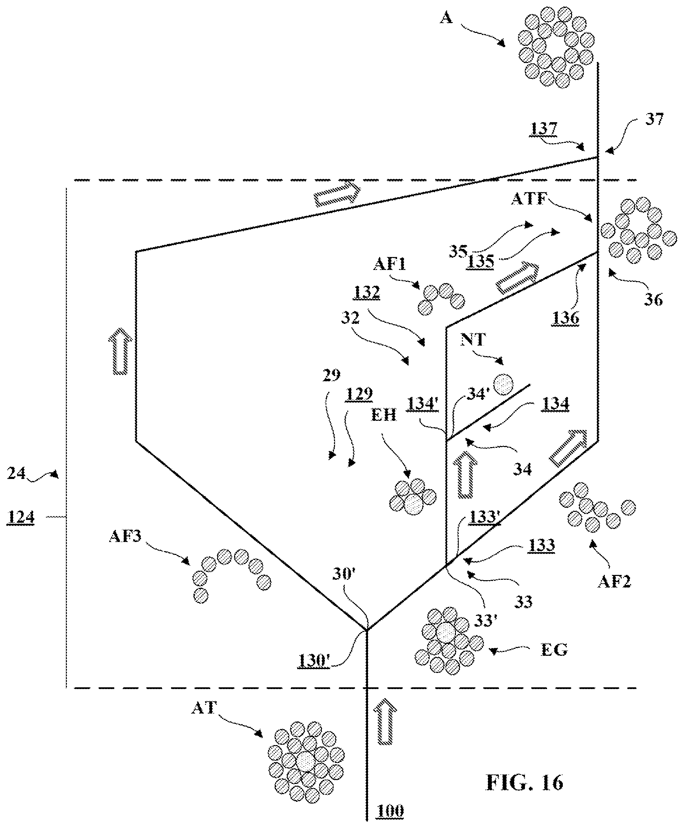

On va maintenant décrire une installation et un procédé selon le deuxième mode de réalisation de l'invention en référence aux figures 15 et 16. Les éléments analogues à ceux du premier mode de réalisation sont désignés par des références identiques.

A la différence du premier mode de réalisation, les moyens 24 de séparation de l'assemblage transitoire AT entre le premier assemblage fractionné AF1, le deuxième assemblage fractionné AF2, le troisième assemblage fractionné AF3 et le noyau transitoire NT et les moyens 35 de réassemblage du premier assemblage fractionné AF1 avec le deuxième assemblage fractionné AF2 et le troisième assemblage fractionné AF3 sont agencés de sorte que E2'+F2'=A2' et ici de sorte que C2'=A2'. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT et l'étape 135 de réassemblage du premier assemblage fractionné AF1 avec le deuxième assemblage fractionné AF2 et le troisième assemblage fractionné AF3 sont réalisées de sorte que E2'+F2'=A2' et ici de sorte que C2'=A2'.

En l'espèce, les moyens 29 de séparation de l'assemblage transitoire AT entre l'ensemble fractionné amont EG et le troisième assemblage fractionné AF3 comprennent des moyens 30' de fractionnement de l'assemblage transitoire AT en l'ensemble fractionné amont EG et le troisième assemblage fractionné AF3. De façon analogue, l'étape de séparation 129 de l'assemblage transitoire AT entre l'ensemble fractionné amont EG et le troisième assemblage fractionné AF3 comprend une étape 130' de fractionnement de l'assemblage transitoire AT en l'ensemble fractionné amont EG et le troisième assemblage fractionné AF3.

Les autres moyens et étapes se déduisent *mutatis mutandis* de ceux et celles du premier mode de réalisation.

### INSTALLATION ET PROCEDE SELON UN TROISIEME MODE DE REALISATION DE L'INVENTION

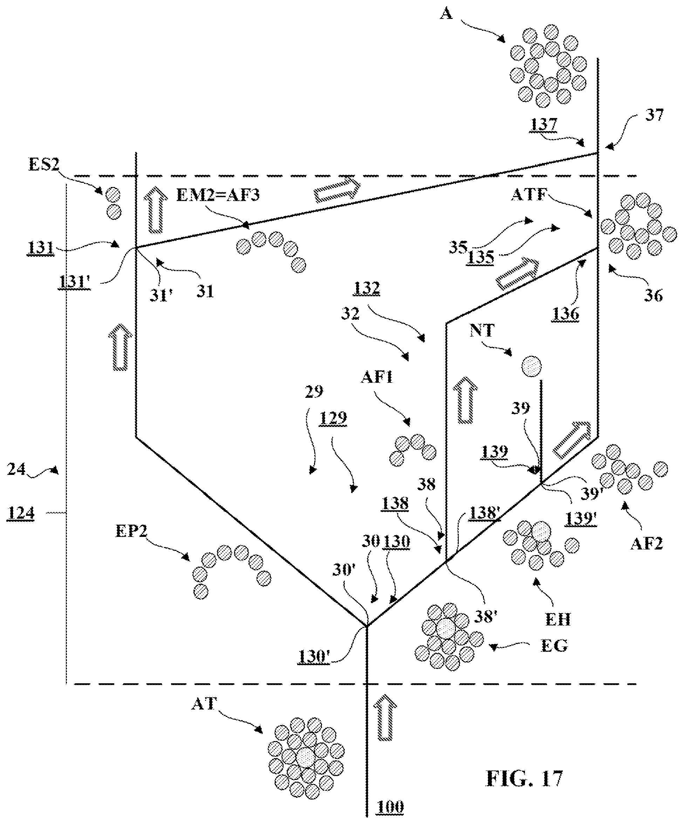

On va maintenant décrire une installation et un procédé selon le troisième mode de réalisation de l'invention en référence à la figure 17. Les éléments analogues à ceux des modes de réalisation précédents sont désignés par des références identiques.

A la différence du premier mode de réalisation, les moyens 32 de séparation de l'ensemble fractionné amont EG entre le premier assemblage fractionné AF1, le deuxième assemblage fractionné AF2 et le noyau transitoire NT comprennent des moyens 38 de séparation de l'ensemble fractionné amont EG entre un ensemble fractionné aval EH et le premier assemblage fractionné AF1. En l'espèce, les moyens de séparation 38 comprennent des moyens 38' de fractionnement de l'ensemble fractionné amont EG en un ensemble fractionné aval EH et le premier assemblage fractionné AF1. De façon analogue, l'étape 132 de séparation de l'ensemble fractionné amont EG entre le premier assemblage fractionné AF1, le deuxième assemblage fractionné AF2 et le noyau transitoire NT comprend une étape 138 de séparation de l'ensemble fractionné amont EG entre l'ensemble fractionné aval EH et le premier assemblage fractionné AF1. En l'espèce, l'étape de séparation 138 comprend une étape 138' de fractionnement de l'ensemble fractionné amont EG en l'ensemble fractionné aval EH et le premier assemblage fractionné AF1.

L'ensemble fractionné aval EH comprend au moins deux couches H1, H2 comprenant une couche interne H1 constituée de H1'≥1 élément(s) filaire(s) métallique(s) 14 enroulé(s) en hélice autour du noyau transitoire NT et une couche externe H2 constituée de H2'≥1 élément(s) filaire(s) métallique(s) 14 enroulé(s) en hélice autour de la couche interne H1. Le ou les H1' élément(s) filaire(s) métallique(s) 14 sont issu(s) de la couche interne G1 constituée de G1'>1 éléments filaires métalliques 14 de l'ensemble fractionné amont EG et le ou les H2' élément(s) filaire(s) métallique(s) 14 sont issu(s) de la couche externe G2 constituée de G2'>1 éléments filaires métalliques 14 de l'ensemble fractionné amont EG. L'ensemble fractionné aval comprend la couche interne H1, la couche externe H2 et le noyau transitoire, le ou les H1' élément(s) filaire(s) métallique(s) étant enroulés en hélice autour du noyau transitoire. Ici, l'ensemble fractionné aval EH est constitué de la couche interne H1, de la couche externe H2 et du noyau transitoire, le ou les H1' élément(s) filaire(s) métallique(s) étant enroulés en hélice autour du noyau transitoire. En l'espèce, H1'=3 et H2'=5.

A la différence du premier mode de réalisation, les moyens 32 de séparation de l'ensemble fractionné amont EG entre le premier assemblage fractionné AF1, le deuxième assemblage fractionné AF2 et le noyau transitoire NT comprennent également des moyens 39 de séparation de l'ensemble fractionné aval EH entre le deuxième assemblage fractionné AF2 et le noyau transitoire NT. En l'espèce, les moyens de séparation 39 comprennent des moyens 39' de fractionnement de l'ensemble fractionné aval EH en le deuxième assemblage fractionné AF2 et le noyau transitoire NT. De façon analogue, l'étape 132 de séparation de l'ensemble fractionné amont EG entre le premier assemblage fractionné AF1, le deuxième assemblage fractionné AF2 et le noyau transitoire NT comprend également une étape 139 de séparation de l'ensemble fractionné aval EH entre le deuxième assemblage fractionné AF2 et le noyau transitoire NT. En l'espèce, l'étape de séparation 139 comprend une étape 139' de fractionnement de l'ensemble fractionné aval EH en le deuxième assemblage fractionné AF2 et le noyau transitoire NT.

Les moyens 38 de séparation de l'ensemble fractionné amont EG entre l'ensemble fractionné aval EH et le premier assemblage fractionné AF1 sont agencés en amont des moyens 39 de séparation de l'ensemble fractionné aval EH entre le deuxième assemblage fractionné AF2 et le noyau transitoire NT. De façon analogue, l'étape 138 de séparation de l'ensemble fractionné amont EG entre l'ensemble fractionné aval EH et le premier assemblage fractionné AF1 a lieu en amont de l'étape 139 de séparation de l'ensemble fractionné aval EH entre le deuxième assemblage fractionné AF2 et le noyau transitoire NT.

On notera que dans ce troisième mode de réalisation, on a G1'≥H1'+D1', G2'≥H2', H1'≥E1', H2'≥E2' et ici G1'=H1'+D1', G2'=H2', H1'=E1' et H2'=E2'.

Les autres moyens et étapes se déduisent *mutatis mutandis* de ceux et celles des modes de réalisation précédents.

### INSTALLATION ET PROCEDE SELON UN QUATRIEME MODE DE REALISATION DE L'INVENTION

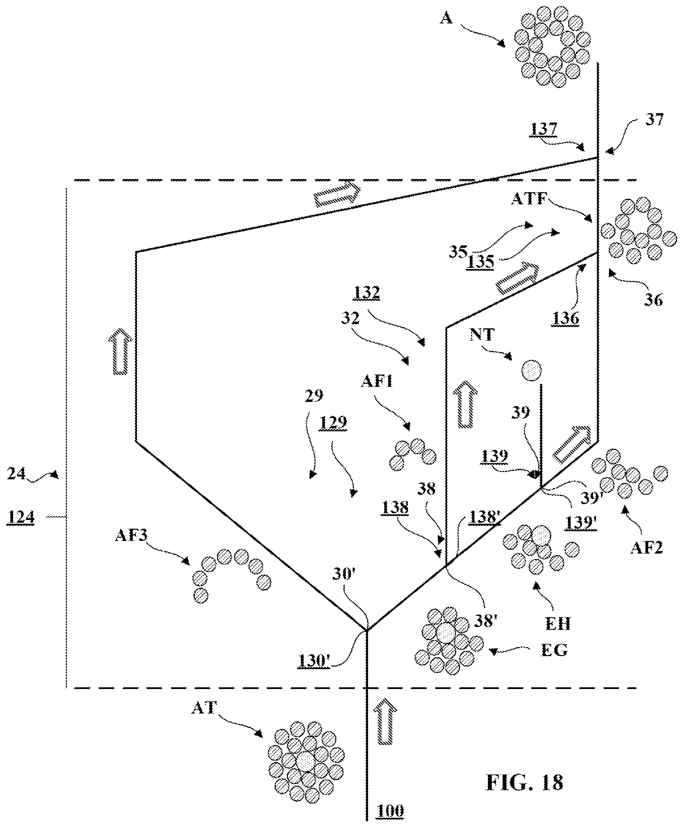

On va maintenant décrire une installation et un procédé selon le quatrième mode de réalisation de l'invention en référence à la figure 18. Les éléments analogues à ceux des modes de réalisation précédents sont désignés par des références identiques.

Les différences entre le quatrième mode de réalisation et le deuxième mode de réalisation sont les mêmes différences qu'entre le troisième mode de réalisation et le premier mode de réalisation. Les moyens et étapes se déduisent donc *mutatis mutandis* de ceux et celles des modes de réalisation précédents.

### INSTALLATION ET PROCEDE SELON UN CINQUIEME MODE DE REALISATION DE L'INVENTION

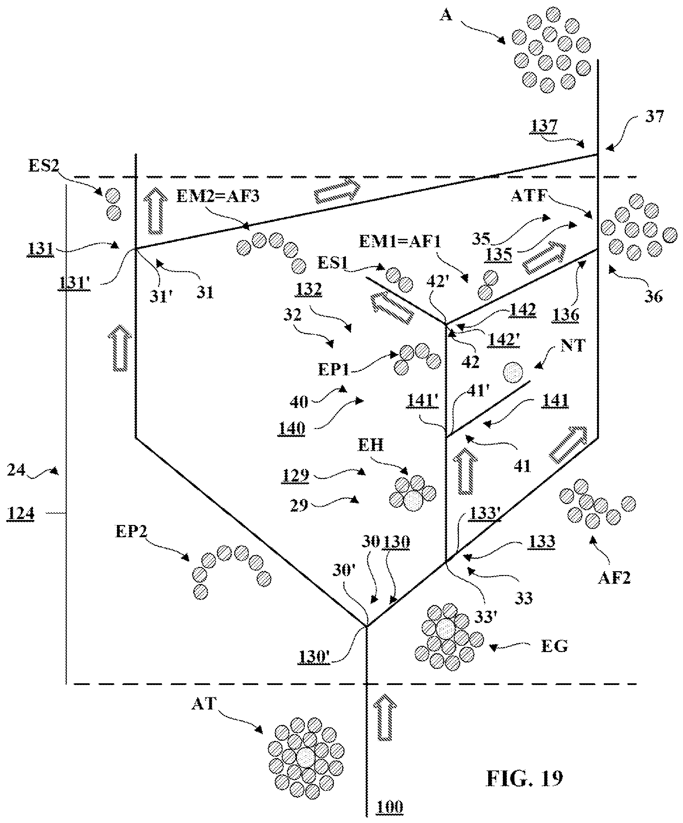

On va maintenant décrire une installation et un procédé selon le cinquième mode de réalisation de l'invention en référence à la figure 19. Les éléments analogues à ceux des modes de réalisation précédents sont désignés par des références identiques.

A la différence du premier mode de réalisation, les moyens 24 de séparation de l'assemblage transitoire AT entre le premier assemblage fractionné AF1, le deuxième assemblage fractionné AF2, le troisième assemblage fractionné AF3 et le noyau transitoire NT et les moyens 35 de réassemblage du premier assemblage fractionné AF1 avec le deuxième assemblage fractionné AF2 et le troisième assemblage fractionné AF3 sont agencés de sorte que D1'+E1'<A1' et E2'+F2'≤A2' et ici de sorte que D1'+E1'<A1' et E2'+F2'<A2'. En particulier, les moyens 24 de séparation et les moyens 35 de réassemblage sont agencés de sorte que C1'<A1' et C2'≤A2' et ici de sorte que C1'<A1' et C2'<A2'. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT et l'étape 135 de réassemblage du premier assemblage fractionné AF1 avec le deuxième assemblage fractionné AF2 et le troisième assemblage fractionné AF3 sont réalisées de sorte que D1'+E1'<A1' et E2'+F2'≤A2' et ici de sorte que D1'+E1'<A1' et E2'+F2'<A2'. En particulier, l'étape 124 de séparation et l'étape 135 de réassemblage sont réalisées de sorte que C1'<A1' et C2'≤A2' et ici de sorte que C1'<A1' et C2'<A2'.

A la différence du premier mode de réalisation, les moyens 32 de séparation de l'ensemble fractionné amont EG entre le premier assemblage fractionné AF1, le deuxième assemblage fractionné AF2 et le noyau transitoire NT comprennent des moyens 40 de séparation de l'ensemble fractionné amont EG entre un ensemble précurseur EP1, le deuxième assemblage fractionné AF2 et le noyau transitoire NT. De façon analogue, l'étape 132 de séparation de l'ensemble fractionné amont EG entre le premier assemblage fractionné AF1, le deuxième assemblage fractionné AF2 et le noyau transitoire NT comprend une étape 140 de séparation de l'ensemble fractionné amont E entre l'ensemble précurseur EP1, le deuxième assemblage fractionné AF2 et le noyau transitoire NT.

L'ensemble précurseur EP1 comprend au moins une couche I1 constituée de I1'>1 éléments filaires métalliques 14 enroulés en hélice. Les I1' éléments filaires métalliques 14 sont issus de la couche interne G1 constituée des G1' éléments filaires métalliques 14 de l'ensemble fractionné amont EG. Ici, l'ensemble précurseur EP1 est constitué de la couche I1 constituée des I1'=4 éléments filaires métalliques.

A la différence du premier mode de réalisation, les moyens 32 de séparation de l'ensemble fractionné amont EG entre le premier assemblage fractionné AF1, le deuxième assemblage fractionné AF2 et le noyau transitoire NT comprennent également des moyens 42 de séparation de l'ensemble précurseur EP1 entre un ensemble principal EM1 formant le premier assemblage fractionné AF1 et un ensemble complémentaire ES1. En l'espèce, les moyens de séparation 42 comprennent des moyens 42' de fractionnement de l'ensemble précurseur EP1 en l'ensemble principal EM1 formant le premier assemblage fractionné AF1 et l'ensemble complémentaire ES1. De façon analogue, l'étape 132 de séparation de l'ensemble fractionné amont EG entre le premier assemblage fractionné AF1, le deuxième assemblage fractionné AF2 et le noyau transitoire NT comprend également une étape 142 de séparation de l'ensemble précurseur EP1 entre l'ensemble principal EM1 formant le premier assemblage fractionné AF1 et l'ensemble complémentaire ES1. En l'espèce, l'étape de séparation 132 comprend une étape 142' de fractionnement de l'ensemble précurseur EP1 en l'ensemble principal EM1 formant le premier assemblage fractionné AF1 et l'ensemble complémentaire ES1.

L'ensemble principal EM1 comprend au moins une couche J1 constituée de J1'≥1 élément(s) filaire(s) métallique(s) 14 enroulé(s) en hélice. Le ou les J1'≥1 élément(s) filaire(s) métallique(s) 14 sont issu(s) de la couche I1 constituée des I1'>1 éléments filaires métalliques 14 de l'ensemble précurseur EP1. Ici, l'ensemble principal EM1 formant le premier assemblage fractionné AF1 est constitué de la couche J1 constituée des J1'=2 élément(s) filaire(s) métallique(s).

L'ensemble complémentaire ES1 comprend au moins une couche K1 constituée de K1'≥1 élément(s) filaire(s) métallique(s) 14 enroulé(s) en hélice. Le ou les K1'≥1 élément(s) filaire(s) métallique(s) 14 sont issu(s) de la couche I1 constituée des I1'>1 éléments filaires métalliques 14 de l'ensemble précurseur EP1. L'ensemble complémentaire ES1 est constitué de la couche K1 constituée des K1'=2 élément(s) filaire(s) métallique(s).

Les moyens 40 de séparation de l'ensemble fractionné amont EG entre l'ensemble précurseur EP1, le deuxième assemblage fractionné AF2 et le noyau transitoire NT comprennent les moyens 33 de séparation de l'ensemble fractionné amont EG entre l'ensemble fractionné aval EH et le deuxième assemblage fractionné AF2. En l'espèce, les moyens de séparation 33 comprennent les moyens 33' de fractionnement de l'ensemble fractionné amont EG en l'ensemble fractionné aval EH et le deuxième assemblage fractionné AF2. De façon analogue, l'étape 140 de séparation de l'ensemble fractionné amont EG entre l'ensemble précurseur EP1, le deuxième assemblage fractionné AF2 et le noyau transitoire NT comprend une étape 133 de séparation de l'ensemble fractionné amont EG entre l'ensemble fractionné aval EH et le deuxième assemblage fractionné AF2. En l'espèce, l'étape de séparation 133 comprend une étape 133' de fractionnement de l'ensemble fractionné amont EG entre l'ensemble fractionné aval EH et le deuxième assemblage fractionné AF2.

Les moyens 40 de séparation de l'ensemble fractionné amont EG entre l'ensemble précurseur EP1, le deuxième assemblage fractionné AF2 et le noyau transitoire NT comprennent également des moyens 41 de séparation de l'ensemble fractionné aval EH entre l'ensemble précurseur EP1 et le noyau transitoire NT. En l'espèce, les moyens de séparation 41 comprennent des moyens 41' de fractionnement de l'ensemble fractionné aval EH en l'ensemble précurseur EP1 et le noyau transitoire NT. De façon analogue, l'étape 140 de séparation de l'ensemble fractionné amont EG entre l'ensemble précurseur EP1, le deuxième assemblage fractionné AF2 et le noyau transitoire NT comprend une étape 141 de séparation de l'ensemble fractionné aval EH entre l'ensemble précurseur EP1 et le noyau transitoire NT. En l'espèce, l'étape de séparation 141 comprend une étape 141' de fractionnement de l'ensemble fractionné aval EH en l'ensemble précurseur EP1 et le noyau transitoire NT.

Les moyens 29 de séparation de l'assemblage transitoire AT entre l'ensemble fractionné amont EG et le troisième assemblage fractionné AF3 sont agencés en amont des moyens 32 de séparation de l'ensemble fractionné amont EG entre le premier assemblage fractionné AF1, le deuxième assemblage fractionné AF2 et le noyau transitoire NT. De façon analogue, l'étape 129 de séparation de l'assemblage transitoire AT entre l'ensemble fractionné amont EG et le troisième assemblage fractionné AF3 a lieu en amont de l'étape 132 de séparation de l'ensemble fractionné amont EG entre le premier assemblage fractionné AF1, le deuxième assemblage fractionné AF2 et le noyau transitoire NT.

Les moyens 40 de séparation de l'ensemble fractionné amont EG entre l'ensemble précurseur EP1, le deuxième assemblage fractionné AF2 et le noyau transitoire NT sont agencés en amont des moyens 42 de séparation de l'ensemble précurseur EP1 entre l'ensemble principal EM1 formant le premier assemblage fractionné AF1 et l'ensemble complémentaire ES1. De façon analogue, l'étape 140 de séparation de l'ensemble fractionné amont EG entre l'ensemble précurseur EP1, le deuxième assemblage fractionné AF2 et le noyau transitoire NT a lieu en amont de l'étape 142 de séparation de l'ensemble précurseur EP1 entre l'ensemble principal EM1 formant le premier assemblage fractionné AF1 et l'ensemble complémentaire ES1.

Les moyens 33 de séparation de l'ensemble fractionné amont EG entre l'ensemble fractionné aval EH et le deuxième assemblage fractionné AF2 sont agencés en amont des moyens 41 de séparation de l'ensemble fractionné aval EH entre l'ensemble précurseur EP1 et le noyau transitoire NT. De façon analogue, l'étape 133 de séparation de l'ensemble fractionné amont EG entre l'ensemble fractionné aval EH et le deuxième assemblage fractionné AF2 a lieu en amont de l'étape 141 de séparation de l'ensemble fractionné aval EH entre l'ensemble précurseur EP1 et le noyau transitoire NT.

On notera que dans ce cinquième mode de réalisation, on a A1'≥G1', G1'≥D1',, D1'=J1', I1'=J1'+K1', H1'=I1', G1'=H1'+E1', A2'≥F2'+G2', A2'≥I2'+G2', I2'≥J2'+K2', G2'=E2', J2'=F2'.

Les autres moyens et étapes se déduisent *mutatis mutandis* de ceux et celles des modes de réalisation précédents.

### INSTALLATION ET PROCEDE SELON UN SIXIEME MODE DE REALISATION DE L'INVENTION

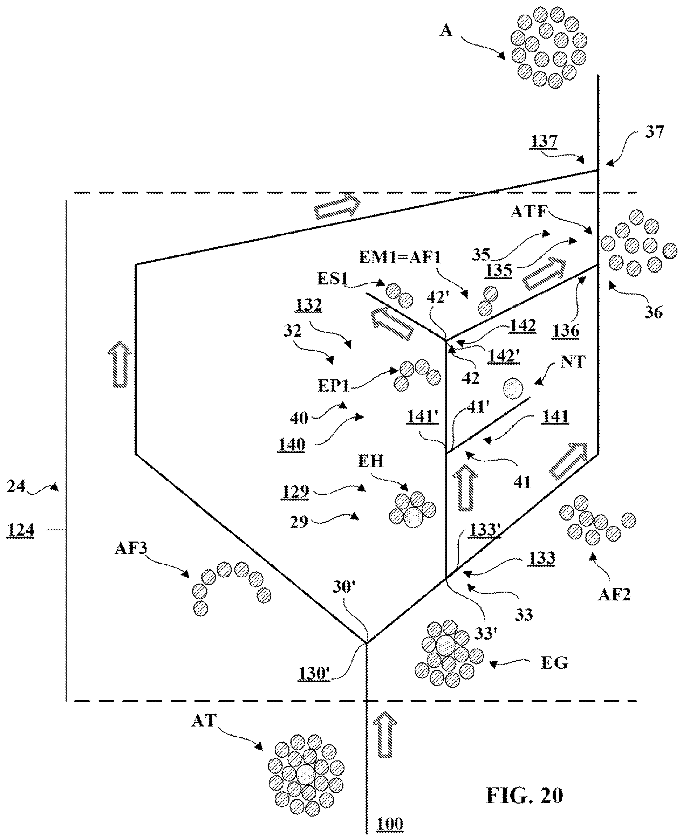

On va maintenant décrire une installation et un procédé selon le sixième mode de réalisation de l'invention en référence à la figure 20. Les éléments analogues à ceux des modes de réalisation précédents sont désignés par des références identiques.

A la différence du cinquième mode de réalisation, moyens 24 de séparation de l'assemblage transitoire AT entre le premier assemblage fractionné AF1, le deuxième assemblage fractionné AF2, le troisième assemblage fractionné AF3 et le noyau transitoire NT et les moyens 35 de réassemblage du premier assemblage fractionné AF1 avec le deuxième assemblage fractionné AF2 et le troisième assemblage fractionné AF3 sont agencés de sorte que E2'+F2'=A2'. En particulier, les moyens 24 de séparation et les moyens 35 de réassemblage sont agencés de sorte que C2'=A2'. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT et l'étape 135 de réassemblage du premier assemblage fractionné AF1 avec le deuxième assemblage fractionné AF2 et le troisième assemblage fractionné AF3 sont réalisées de sorte que E2'+F2'=A2'. En particulier, l'étape 124 de séparation et l'étape 135 de réassemblage sont réalisées de sorte que C2'=A2'.

En l'espèce, les moyens 29 de séparation de l'assemblage transitoire AT entre l'ensemble fractionné amont EG et le troisième assemblage fractionné AF3 comprennent des moyens 30' de fractionnement de l'assemblage transitoire AT en l'ensemble fractionné amont EG et le troisième assemblage fractionné AF3. De façon analogue, l'étape de séparation 129 de l'assemblage transitoire AT entre l'ensemble fractionné amont EG et le troisième assemblage fractionné AF3 comprend une étape 130' de fractionnement de l'assemblage transitoire AT en l'ensemble fractionné amont EG et le troisième assemblage fractionné AF3.

Les autres moyens et étapes se déduisent *mutatis mutandis* de ceux et celles du premier mode de réalisation.

### INSTALLATION ET PROCEDE SELON UN SEPTIEME MODE DE REALISATION DE L'INVENTION

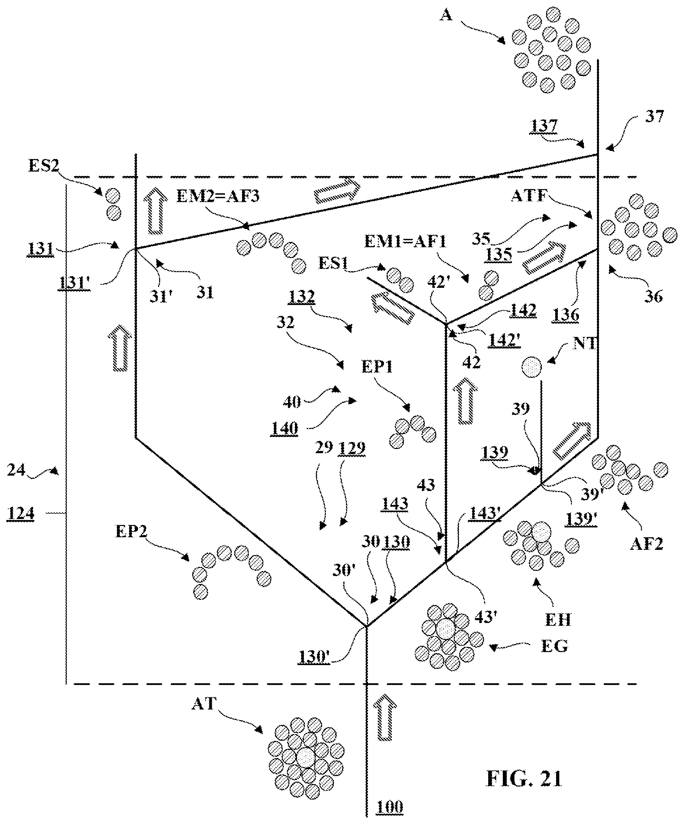

On va maintenant décrire une installation et un procédé selon le septième mode de réalisation de l'invention en référence à la figure 21. Les éléments analogues à ceux des modes de réalisation précédents sont désignés par des références identiques.

A la différence du cinquième mode de réalisation, les moyens 40 de séparation de l'ensemble fractionné amont EG entre l'ensemble précurseur EP1, le deuxième assemblage fractionné AF2 et le noyau transitoire NT comprennent des moyens 43 de séparation de l'ensemble fractionné amont EG entre un ensemble fractionné aval EH analogue à l'ensemble fractionné aval EH du troisième mode de réalisation de la figure 17 et l'ensemble précurseur EP1. En l'espèce, les moyens de séparation 43 comprennent des moyens 43' de fractionnement de l'ensemble fractionné amont EG en un ensemble fractionné aval EH et l'ensemble précurseur EP1. De façon analogue, l'étape 140 de séparation de l'ensemble fractionné amont EG entre l'ensemble précurseur EP1, le deuxième assemblage fractionné AF2 et le noyau transitoire NT comprend une étape 143 de séparation de l'ensemble fractionné amont EG entre un ensemble fractionné aval EH et l'ensemble précurseur EP1. En l'espèce, l'étape de séparation 43 comprend une étape 143' de fractionnement de l'ensemble fractionné amont EG en un ensemble fractionné aval EH et l'ensemble précurseur EP1.

A la différence du cinquième mode de réalisation, les moyens 40 de séparation de l'ensemble fractionné amont EG entre l'ensemble précurseur EP1, le deuxième assemblage fractionné AF2 et le noyau transitoire NT comprennent également des moyens 39 de séparation de l'ensemble fractionné aval EH entre le deuxième assemblage fractionné AF2 et le noyau transitoire NT. Ces moyens de séparation 39, les moyens de fractionnement 39' ainsi que les étapes de séparation 139 et de fractionnement 139' sont analogues à ceux et celles du troisième mode de réalisation de la figure 17.

Les autres moyens et étapes se déduisent *mutatis mutandis* de ceux et celles des modes de réalisation précédents.

### INSTALLATION ET PROCEDE SELON UN HUITIEME MODE DE REALISATION DE L'INVENTION

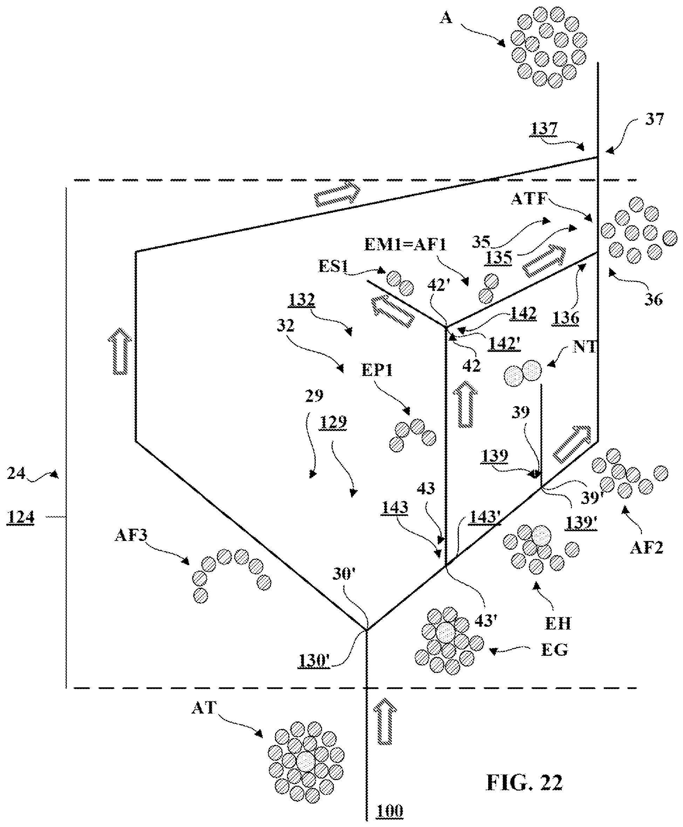

On va maintenant décrire une installation et un procédé selon le huitième mode de réalisation de l'invention en référence à la figure 22. Les éléments analogues à ceux des modes de réalisation précédents sont désignés par des références identiques.

Les différences entre le huitième mode de réalisation et le sixième mode de réalisation sont les mêmes différences qu'entre le septième mode de réalisation et le cinquième mode de réalisation. Les moyens et étapes se déduisent donc *mutatis mutandis* de ceux et celles des modes de réalisation précédents.

### INSTALLATION ET PROCEDE SELON UN NEUVIEME MODE DE REALISATION DE L'INVENTION

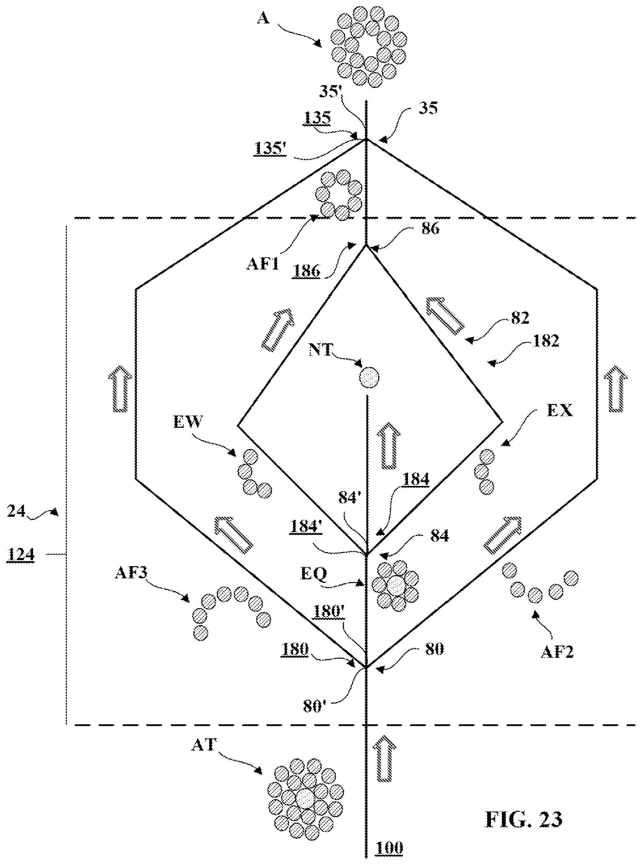

On va maintenant décrire une installation et un procédé selon le neuvième mode de réalisation de l'invention en référence à la figure 23. Les éléments analogues à ceux des modes de réalisation précédents sont désignés par des références identiques.

Tout comme dans les deuxième et quatrième modes de réalisation, les moyens 24 de séparation et les moyens 35 de réassemblage sont agencés de sorte que C1'=A1' et C2'=A2'. De façon analogue, l'étape 124 de séparation et l'étape 135 de réassemblage sont réalisées de sorte que C1'=A1' et C2'=A2'.

A la différence des modes de réalisation précédents, le premier assemblage fractionné est constitué de la couche D1 avec ici D1'=7, le deuxième assemblage fractionné est constitué de la couche E2 avec ici E2'=5 et le troisième assemblage fractionné est constitué de la couche F2 avec ici F2'=7. Dans ce neuvième mode de réalisation, on a donc D1'=C1' et E2'+F2'=C2'.

A la différence des modes de réalisation précédents, les moyens 35 de réassemblage comprennent des moyens 35' de réassemblage simultané des premier, deuxième et troisième assemblages fractionnés AF1, AF2, AF3 pour former l'assemblage final A. De façon analogue, l'étape de réassemblage 135 comprend une étape 135' de réassemblage simultané des premier, deuxième et troisième assemblages fractionnés AF1, AF2, AF3 pour former l'assemblage final A.

A la différence des modes de réalisation précédents, les moyens 24 de séparation de l'assemblage transitoire AT entre le premier assemblage fractionné AF1, le deuxième assemblage fractionné AF2, le troisième assemblage fractionné AF3 et le noyau transitoire NT comprennent des moyens 80 de séparation de l'assemblage transitoire AT entre un ensemble fractionné intermédiaire EQ, le deuxième assemblage fractionné AF2 et le troisième assemblage fractionné AF3. Ici, les moyens de séparation 80 comprennent des moyens 80' de fractionnement de l'assemblage transitoire AT en l'ensemble fractionné intermédiaire EQ, le deuxième assemblage fractionné AF2 et le troisième assemblage fractionné AF3. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT comprend une étape 180 de séparation de l'assemblage transitoire AT entre l'ensemble fractionné intermédiaire EQ, le deuxième assemblage fractionné AF2 et le troisième assemblage fractionné AF3. Ici, l'étape de séparation 180 comprend une étape 180' de fractionnement de l'assemblage transitoire AT en l'ensemble fractionné intermédiaire EQ, le deuxième assemblage fractionné AF2 et le troisième assemblage fractionné AF3.

Les moyens 24 de séparation de l'assemblage transitoire AT entre le premier assemblage fractionné AF1, le deuxième assemblage fractionné AF2, le troisième assemblage fractionné AF3 et le noyau transitoire NT comprennent également des moyens de séparation 82 de l'ensemble fractionné intermédiaire EQ entre le premier assemblage fractionné AF1 et le noyau transitoire NT. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT comprend une étape 182 de séparation de l'ensemble fractionné intermédiaire EQ entre le premier assemblage fractionné AF1 et le noyau transitoire NT.

L'ensemble fractionné intermédiaire EQ comprend une couche Q1 constituée de Q1'=7 éléments filaires métalliques 14 enroulés en hélice autour du noyau transitoire NT, les Q1' éléments filaires métalliques 14 étant issus de la couche interne A1 constituée de A1'=7 éléments filaires métalliques 14 de l'assemblage transitoire AT. En l'espèce, l'ensemble fractionné intermédiaire EQ est constitué de la couche Q1 et du noyau transitoire NT, les Q1' éléments filaires métalliques 14 étant enroulés en hélice autour du noyau transitoire NT.

Les moyens 80 de séparation de l'assemblage transitoire AT entre l'ensemble fractionné intermédiaire EQ, le deuxième assemblage fractionné AF2 et le troisième assemblage fractionné AF3 sont agencés en amont des moyens 82 de séparation de l'ensemble fractionné intermédiaire EQ entre le premier assemblage fractionné AF1 et le noyau transitoire NT. De façon analogue, l'étape 180 de séparation de l'assemblage transitoire AT entre l'ensemble fractionné intermédiaire EQ, le deuxième assemblage fractionné AF2 et le troisième assemblage fractionné AF3 a lieu en amont de l'étape 182 de séparation de l'ensemble fractionné intermédiaire EQ entre le premier assemblage fractionné AF1 et le noyau transitoire NT.

Avantageusement, les moyens 82 de séparation de l'ensemble fractionné intermédiaire EQ entre le premier assemblage fractionné AF1 et le noyau transitoire NT comprennent des moyens 84 de séparation de l'ensemble fractionné intermédiaire EQ entre un premier ensemble séparé EW, un deuxième ensemble séparé EX et le noyau transitoire NT. Ici, les moyens de séparation 84 comprennent des moyens 84' de fractionnement de l'ensemble fractionné intermédiaire EQ en le premier ensemble séparé EW, le deuxième ensemble séparé EX et le noyau transitoire NT. De façon analogue, l'étape 182 de séparation de l'ensemble fractionné intermédiaire EQ entre le premier assemblage fractionné AF1 et le noyau transitoire NT comprend une étape 184 de séparation de l'ensemble fractionné intermédiaire entre le premier ensemble séparé EW, le deuxième ensemble séparé EX et le noyau transitoire NT. Ici, l'étape de séparation 184 comprend une étape 184' de fractionnement de l'ensemble fractionné intermédiaire EQ en le premier ensemble séparé EW, le deuxième ensemble séparé EX et le noyau transitoire NT.

Les moyens 82 de séparation de l'ensemble fractionné intermédiaire EQ entre le premier assemblage fractionné AF1 et le noyau transitoire NT comprennent également des moyens 86 de réassemblage du premier ensemble séparé EW et du deuxième ensemble séparé EX ensemble pour former le premier assemblage fractionné AF1. De façon analogue, l'étape 182 de séparation de l'ensemble fractionné intermédiaire EQ entre le premier assemblage fractionné AF1 et le noyau transitoire NT comprend une étape 186 de réassemblage du premier ensemble séparé EW et du deuxième ensemble séparé EX ensemble pour former le premier assemblage fractionné A.

Le premier ensemble séparé EW comprend au moins une couche W1 constituée de W1'=4 éléments filaires métalliques 14 enroulés en hélice, les W1' éléments filaires métalliques étant issus de la couche Q1 constituée des Q1' éléments filaires métalliques 14 de l'ensemble fractionné intermédiaire EQ. Ici le premier ensemble séparé EW est constitué de la couche W1.

Le deuxième ensemble séparé EX comprend au moins une couche X1 constituée de X1'=3 éléments filaires métalliques 14 enroulés en hélice, les X1' éléments filaires métalliques étant issus de la couche Q1 constituée des Q1' éléments filaires métalliques 14 de l'ensemble fractionné intermédiaire EQ. Ici le deuxième ensemble séparé EX est constitué de la couche X1.

Les moyens 84 de séparation de l'ensemble fractionné intermédiaire EQ entre le premier ensemble séparé EW, le deuxième ensemble séparé EX et le noyau transitoire NT sont agencés en amont des moyens 86 de réassemblage du premier ensemble séparé EW et du deuxième ensemble séparé EX ensemble pour former le premier assemblage fractionné AF1. De façon analogue, l'étape 184 de séparation de l'ensemble fractionné intermédiaire EQ entre le premier ensemble séparé EW, le deuxième ensemble séparé EX et le noyau transitoire NT a lieu en amont de l'étape 186 de réassemblage du premier ensemble séparé EW et du deuxième ensemble séparé EX ensemble pour former le premier assemblage fractionné AF1.

On notera que dans ce neuvième mode de réalisation, on a C1'=A1', C2'=A2', A1'=Q1', A2'=E2'+F2', Q1'=D1' et Q1'=W1'+X1'=D1'.

### INSTALLATION ET PROCEDE SELON UN DIXIEME MODE DE REALISATION DE L'INVENTION

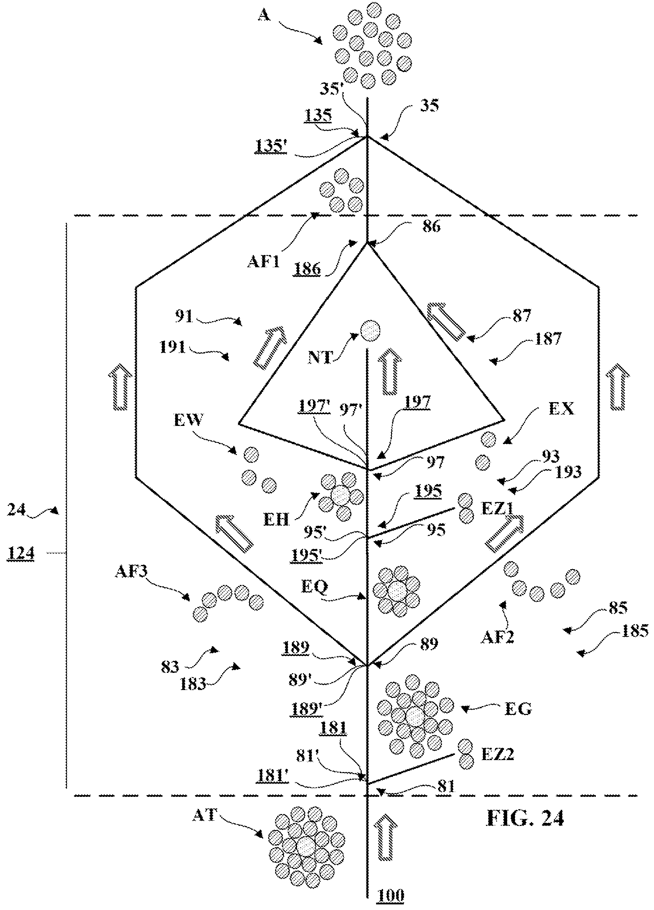

On va maintenant décrire une installation et un procédé selon le dixième mode de réalisation de l'invention en référence à la figure 24. Les éléments analogues à ceux des modes de réalisation précédents sont désignés par des références identiques.

A la différence du neuvième mode de réalisation, les moyens 24 de séparation et les moyens 35 de réassemblage sont agencés de sorte que C1'<A1' et C2'<A2'. De façon analogue, l'étape 124 de séparation et l'étape 135 de réassemblage sont réalisées de sorte que C1'<A1' et C2'<A2'.

A la différence des modes de réalisation précédents, les moyens 24 de séparation de l'assemblage transitoire AT entre le premier assemblage fractionné AF1, le deuxième assemblage fractionné AF2, le troisième assemblage fractionné AF3 et le noyau transitoire NT comprennent des moyens 81 de séparation de l'assemblage transitoire AT entre un ensemble dérivé EZ2 et un ensemble fractionné amont EG. Ici, les moyens de séparation 81 comprennent des moyens 81' de fractionnement de l'assemblage transitoire AT en l'ensemble dérivé EZ2 et l'ensemble fractionné amont EG. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT comprend une étape 181 de séparation de l'assemblage transitoire AT entre l'ensemble dérivé EZ2 et l'ensemble fractionné amont EG. Ici, l'étape de séparation 181 comprend une étape 181' de fractionnement de l'assemblage transitoire AT en l'ensemble dérivé EZ2 et l'ensemble fractionné amont EG.

L'ensemble dérivé EZ2 comprend au moins une couche Z2 constituée de Z2'=2 éléments filaires métalliques 14 enroulés en hélice, les Z2' éléments filaires métalliques 14 étant issus de la couche externe A2 constituée des A2' éléments filaires métalliques 14 de l'assemblage transitoire AT. Ici, l'ensemble dérivé EZ2 est constitué de la couche Z2. L'ensemble fractionné amont EG comprend au moins deux couches comprenant une couche interne G1 constituée de G1'=7 éléments filaires métalliques 14 enroulés en hélice autour du noyau transitoire NT et une couche externe G2 constituée de G2'=10 éléments filaires métalliques 14 enroulés en hélice autour de la couche interne G1. Les G1' éléments filaires métalliques 14 sont issus de la couche interne A1 constituée des A1' éléments filaires métalliques 14 de l'assemblage transitoire AT et les G2' éléments filaires métalliques 14 sont issus de la couche externe A2 constituée des A2' éléments filaires métalliques 14 de l'assemblage transitoire AT. Ici l'ensemble fractionné EG est constitué de la couche interne G1, de la couche externe G2 et du noyau transitoire NT.

Les moyens 24 de séparation de l'assemblage transitoire AT entre le premier assemblage fractionné AF1, le deuxième assemblage fractionné AF2, le troisième assemblage fractionné AF3 et le noyau transitoire NT comprennent des moyens 83 de séparation de l'assemblage transitoire AT entre un ensemble fractionné intermédiaire EQ, le deuxième assemblage fractionné AF2 et le troisième assemblage fractionné AF3. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT comprend une étape 183 de séparation de l'assemblage transitoire AT entre l'ensemble fractionné intermédiaire EQ, le deuxième assemblage fractionné AF2 et le troisième assemblage fractionné AF3.

L'ensemble fractionné intermédiaire EQ comprenant au moins une couche Q1 constituée de Q1'=7 éléments filaires métalliques 14 enroulés en hélice autour du noyau transitoire NT, les Q1' éléments filaires métalliques 14 étant issus de la couche G1 constituée des G1' éléments filaires métalliques 14 de l'ensemble fractionné amont EG. Ici, L'ensemble fractionné intermédiaire EQ est constitué de la couche Q1 et du noyau transitoire NT, les Q1' éléments filaires métalliques 14 étant enroulés en hélice autour du noyau transitoire NT.

Les moyens 24 de séparation de l'assemblage transitoire AT entre le premier assemblage fractionné AF1, le deuxième assemblage fractionné AF2, le troisième assemblage fractionné AF3 et le noyau transitoire NT comprennent également des moyens 85 de séparation de l'ensemble fractionné amont EG entre le premier assemblage fractionné AF1, le deuxième assemblage fractionné AF2, le troisième assemblage fractionné AF3 et le noyau transitoire NT. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT comprend une étape 185 de séparation de l'ensemble fractionné amont EG entre le premier assemblage fractionné AF1, le deuxième assemblage fractionné AF2, le troisième assemblage fractionné AF3 et le noyau transitoire NT.

Les moyens 24 de séparation de l'assemblage transitoire AT entre le premier assemblage fractionné AF1, le deuxième assemblage fractionné AF2, le troisième assemblage fractionné AF3 et le noyau transitoire NT comprennent également des moyens 87 de séparation de l'ensemble fractionné intermédiaire EQ entre un ensemble dérivé EZ1, le premier assemblage fractionné AF1 et le noyau transitoire NT. De façon analogue, l'étape 124 de séparation de l'assemblage transitoire AT entre le premier assemblage fractionné AF1, le deuxième assemblage fractionné AF2, le troisième assemblage fractionné AF3 et le noyau transitoire NT comprend une étape 187 de séparation de l'ensemble fractionné intermédiaire EQ entre l'ensemble dérivé EZ1, le premier assemblage fractionné AF1 et le noyau transitoire NT.

L'ensemble dérivé EZ1 comprend au moins une couche Z1 constituée de Z1'=2 éléments filaires métalliques 14 enroulés en hélice, les Z1' éléments filaires métalliques 14 étant issus de la couche interne Q1 constituée des Q1'=7 éléments filaires métalliques 14 de l'ensemble fractionné intermédiaire EQ. Ici, l'ensemble dérivé EZ1 est constitué de la couche Z1.

Les moyens 81 de séparation de l'assemblage transitoire AT entre l'ensemble dérivé EZ2 et l'ensemble fractionné amont EG sont agencés en amont des moyens 85 de séparation de l'ensemble fractionné amont EG entre le premier assemblage fractionné AF1, le deuxième assemblage fractionné AF2, le troisième assemblage fractionné AF3 et le noyau transitoire NT. De façon analogue, l'étape 181 de séparation de l'assemblage transitoire AT entre l'ensemble dérivé EZ2 et l'ensemble fractionné amont EG a lieu en amont de l'étape 185 de séparation de l'ensemble fractionné amont EG entre le premier assemblage fractionné AF1, le deuxième assemblage fractionné AF2, le troisième assemblage fractionné AF3 et le noyau transitoire NT.

Les moyens 83 de séparation de l'assemblage transitoire AT entre l'ensemble fractionné intermédiaire EQ, le deuxième assemblage fractionné AF2 et le troisième assemblage fractionné AF3 sont agencés en amont des moyens 87 de séparation de l'ensemble fractionné intermédiaire EQ entre l'ensemble dérivé EZ1, le premier assemblage fractionné AF1 et le noyau transitoire NT. De façon analogue, l'étape 183 de séparation de l'assemblage transitoire AT entre l'ensemble fractionné intermédiaire EQ, le deuxième assemblage fractionné AF2 et le troisième assemblage fractionné AF3 a lieu en amont de l'étape 187 de séparation de l'ensemble fractionné intermédiaire EQ entre l'ensemble dérivé EZ1, le premier assemblage fractionné AF1 et le noyau transitoire NT.

Les moyens 85 de séparation de l'ensemble fractionné amont EG entre le premier assemblage fractionné AF1, le deuxième assemblage fractionné AF2, le troisième assemblage fractionné AF3 et le noyau transitoire NT comprennent des moyens 89 de séparation de l'ensemble fractionné amont EG entre un ensemble fractionné intermédiaire EQ, le deuxième assemblage fractionné AF2 et le troisième assemblage fractionné AF3. Ici, les moyens de séparation 89 comprennent des moyens 89' de fractionnement de l'ensemble fractionné amont EG en l'ensemble fractionné intermédiaire EQ, le deuxième assemblage fractionné AF2 et le troisième assemblage fractionné AF3. De façon analogue, l'étape 185 de séparation de l'ensemble fractionné amont EG entre le premier assemblage fractionné AF1, le deuxième assemblage fractionné AF2, le troisième assemblage fractionné AF3 et le noyau transitoire NT comprend une étape 189 de séparation de l'ensemble fractionné amont EG entre l'ensemble fractionné intermédiaire EQ, le deuxième assemblage fractionné AF2 et le troisième assemblage fractionné AF3. Ici, l'étape de séparation 189 comprend une étape 189' de fractionnement de l'ensemble fractionné amont EG en l'ensemble fractionné intermédiaire EQ, le deuxième assemblage fractionné AF2 et le troisième assemblage fractionné AF3.

Les moyens 85 de séparation de l'ensemble fractionné amont EG entre le premier assemblage fractionné AF1, le deuxième assemblage fractionné AF2, le troisième assemblage fractionné AF3 et le noyau transitoire NT comprennent également des moyens 91 de séparation de l'ensemble fractionné intermédiaire EQ entre le premier assemblage fractionné AF1 et le noyau transitoire NT. De façon analogue, l'étape 185 de séparation de l'ensemble fractionné amont EG entre le premier assemblage fractionné AF1, le deuxième assemblage fractionné AF2, le troisième assemblage fractionné AF3 et le noyau transitoire NT comprend également une étape 191 de séparation de l'ensemble fractionné intermédiaire EQ entre le premier assemblage fractionné AF1 et le noyau transitoire NT.

Les moyens 89 de séparation de l'ensemble fractionné amont EG entre l'ensemble fractionné intermédiaire EQ, le deuxième assemblage fractionné AF2 et le troisième assemblage fractionné AF3 sont agencés en amont des moyens 91 de séparation de l'ensemble fractionné intermédiaire EQ entre le premier ensemble fractionné AF1 et le noyau transitoire NT. De façon analogue, l'étape 189 de séparation de l'ensemble fractionné amont EG entre l'ensemble fractionné intermédiaire EQ, le deuxième assemblage fractionné AF2 et le troisième assemblage fractionné AF3 a lieu en amont de l'étape 191 de séparation de l'ensemble fractionné intermédiaire EQ entre le premier ensemble fractionné AF1 et le noyau transitoire NT.

Les moyens 87 de séparation de l'ensemble fractionné intermédiaire EQ entre l'ensemble dérivé EZ1, le premier assemblage fractionné AF1 et le noyau transitoire comprennent des moyens 93 de séparation de l'ensemble fractionné intermédiaire EQ entre un premier ensemble séparé EW, un deuxième ensemble séparé EX, l'ensemble dérivé EZ1 et le noyau transitoire NT. Les ensembles séparés EW et EX sont analogues à ceux du neuvième mode de réalisation. De façon analogue, l'étape 187 de séparation de l'ensemble fractionné intermédiaire EQ entre l'ensemble dérivé EZ1, le premier assemblage fractionné AF1 et le noyau transitoire NT comprend une étape 193 de séparation de l'ensemble fractionné intermédiaire EQ entre le premier ensemble séparé EW, le deuxième ensemble séparé EX, l'ensemble dérivé EZ1 et le noyau transitoire NT.

Les moyens 87 de séparation de l'ensemble fractionné intermédiaire EQ entre l'ensemble dérivé EZ1, le premier assemblage fractionné AF1 et le noyau transitoire NT comprennent des moyens 86 de réassemblage du premier ensemble séparé EW et du deuxième ensemble séparé EX ensemble pour former le premier assemblage fractionné AF1, moyens identiques à ceux du neuvième mode de réalisation. De façon analogue, l'étape 187 de séparation de l'ensemble fractionné intermédiaire EQ entre l'ensemble dérivé EZ1, le premier assemblage fractionné AF1 et le noyau transitoire NT comprend une étape 186 de réassemblage du premier ensemble séparé EW et du deuxième ensemble séparé EX ensemble pour former le premier assemblage fractionné AF1.

Le premier ensemble séparé EW comprend au moins une couche W1 constituée de W1'=3 éléments filaires métalliques 14 enroulés en hélice, les W1' éléments filaires métalliques 14 étant issus de la couche Q1 constituée des Q1' éléments filaires métalliques 14 de l'ensemble fractionné intermédiaire EQ. Le deuxième ensemble séparé EX comprend au moins une couche X1 constituée de X1'=2 éléments filaires métalliques 14 enroulés en hélice, les X1' éléments filaires métalliques 14 étant issus de la couche Q1 constituée des Q1' éléments filaires métalliques 14 de l'ensemble fractionné intermédiaire EQ. Ici, chaque premier et deuxième ensemble séparé EW, EX est respectivement constitué de la couche W1, X1.

Les moyens 93 de séparation de l'ensemble fractionné intermédiaire EQ entre le premier ensemble séparé EW, le deuxième ensemble séparé EX, l'ensemble dérivé EZ1 et le noyau transitoire NT sont agencés en amont des moyens 86 de réassemblage du premier ensemble séparé EW et du deuxième ensemble séparé EX ensemble pour former le premier assemblage fractionné AF1. De façon analogue, l'étape 193 de séparation de l'ensemble fractionné intermédiaire EQ entre le premier ensemble séparé EW, le deuxième ensemble séparé EX, l'ensemble dérivé EZ1, le noyau transitoire NT a lieu en amont de l'étape 186 de réassemblage du premier ensemble séparé EW et du deuxième ensemble séparé EX ensemble pour former le premier assemblage fractionné AF1.

Les moyens 93 de séparation de l'ensemble fractionné intermédiaire EQ entre le premier ensemble séparé EW, le deuxième ensemble séparé EX, l'ensemble dérivé EZ1, le noyau transitoire NT comprennent des moyens 95 de séparation de l'ensemble fractionné intermédiaire EQ entre l'ensemble dérivé EZ1 et un ensemble fractionné aval EH. Ici, les moyens de séparation 95 comprennent des moyens 95' de fractionnement de l'ensemble fractionné intermédiaire EQ en l'ensemble dérivé EZ1 et l'ensemble fractionné aval EH. De façon analogue, l'étape 193 de séparation de l'ensemble fractionné intermédiaire EQ entre le premier ensemble séparé EW, le deuxième ensemble séparé EX, l'ensemble dérivé EZ1, le noyau transitoire NT comprend une étape 195 de séparation de l'ensemble fractionné intermédiaire EQ entre l'ensemble dérivé EZ1 et l'ensemble fractionné aval EH. Ici l'étape de séparation 195 comprend une étape 195' de fractionnement de l'ensemble fractionné intermédiaire EQ en l'ensemble dérivé EZ1 et l'ensemble fractionné aval EH.

L'ensemble fractionné aval EH comprend une couche H1 constituée de H1'=5 éléments filaires métalliques 14 enroulés en hélice autour du noyau transitoire NT, les H1' éléments filaires métalliques 14 étant issus de la couche Q1 constituée des Q1'>1 éléments filaires métalliques 14 de l'ensemble fractionné intermédiaire EQ. Ici, l'ensemble fractionné aval EH est constitué de la couche H1 et du noyau transitoire NT, les H1' éléments filaires métalliques 14 étant enroulés en hélice autour du noyau transitoire NT.

Les moyens 93 de séparation de l'ensemble fractionné intermédiaire EQ entre le premier ensemble séparé EW, le deuxième ensemble séparé EX, l'ensemble dérivé EZ1, le noyau transitoire NT comprennent des moyens 97 de séparation de l'ensemble fractionné aval EH entre le premier ensemble séparé EW, le deuxième ensemble séparé EX et le noyau transitoire NT. Ici, les moyens de séparation 97 comprennent des moyens 97' de fractionnement de l'ensemble fractionné aval EH en le premier ensemble séparé EW, le deuxième ensemble séparé EX et le noyau transitoire NT. De façon analogue, l'étape 193 de séparation de l'ensemble fractionné intermédiaire EQ entre le premier ensemble séparé EW, le deuxième ensemble séparé EX, l'ensemble dérivé EZ1 et le noyau transitoire NT comprend une étape 197 de séparation de l'ensemble fractionné aval EH entre le premier ensemble séparé EW, le deuxième ensemble séparé EX, et le noyau transitoire NT. Ici, l'étape de séparation 197 comprend une étape 197' de fractionnement de l'ensemble fractionné aval EH en le premier ensemble séparé EW, le deuxième ensemble séparé EX et le noyau transitoire NT.

Les moyens 95 de séparation de l'ensemble fractionné intermédiaire EQ entre l'ensemble dérivé EZ1 et l'ensemble fractionné aval EH sont agencés en amont des moyens 97 de séparation de l'ensemble fractionné aval EH entre le premier ensemble séparé EW, le deuxième ensemble séparé EX et le noyau transitoire NT. De façon analogue, l'étape 195 de séparation de l'ensemble fractionné intermédiaire EQ entre l'ensemble dérivé EZ1 et l'ensemble fractionné aval EH a lieu en amont de l'étape 197 de séparation de l'ensemble fractionné aval EH entre le premier ensemble séparé EW, le deuxième ensemble séparé EX et le noyau transitoire NT.

Tout comme dans le neuvième mode de réalisation, les moyens 35 de réassemblage comprennent des moyens 35' de réassemblage simultané des premier, deuxième et troisième assemblages fractionnés AF1, AF2, AF3 pour former l'assemblage final A. De façon analogue, l'étape de réassemblage 135 comprend une étape 135' de réassemblage simultané des premier, deuxième et troisième assemblages fractionnés AF1, AF2, AF3 pour former l'assemblage final A.

On notera que dans ce dixième mode de réalisation, on a C1'<A1', C2'<A2', A1'=G1', A2'=Z2'+G2', G1'=Q1', G2'=E2'+F2', Q1'>D1', A1'≥Q1', A2'>E2'+F2', Q1'=Z1'+D1', Q1'=W1'+X1'+Z1', Q1'=Z1'+H1', H1'=W1'+X1' et W1'+X1'=D1'.

L'invention ne se limite pas aux modes de réalisation décrits ci-dessus. En effet, on pourra tout à fait envisager d'exploiter, sans sortir du cadre de l'invention, un procédé et une installation dans lesquels l'étape et les moyens de séparation de l'assemblage transitoire entre au moins le premier assemblage fractionné, le deuxième assemblage fractionné, le troisième assemblage fractionné et le noyau transitoire ou un ou plusieurs ensembles comprenant le noyau transitoire est une étape ou sont des moyens de séparation de l'assemblage transitoire entre le premier assemblage fractionné, le deuxième assemblage fractionné, le troisième assemblage fractionné et un ensemble comprenant le noyau transitoire et des éléments filaires issus de l'assemblage transitoire.

Par ailleurs, on pourra envisager, sans sortir du cadre de l'invention, un noyau transitoire comprenant des première et deuxième partie dont la première partie serait séparée avec un premier ensemble fractionné amont dont serait issu, après une ou plusieurs étapes de séparation, les premier et deuxième assemblages fractionnés et dont la deuxième partie serait séparée avec un deuxième ensemble fractionné amont dont serait issu, après une ou plusieurs étapes de séparation, le troisième assemblage fractionné.

On pourra également envisager une étape de séparation, respectivement des moyens de séparation de l'assemblage transitoire en plus que les premier, deuxième et troisième assemblages fractionnés AF1, AF2, AF3, par exemple quatre, cinq voire six assemblages fractionnés. Dans ces modes de réalisation, l'étape de réassemblage, respectivement les moyens de réassemblage pourront permettre le réassemblage de plus que les premier, deuxième et troisième assemblages fractionnés AF1, AF2, AF3, par exemple le réassemblage de quatre, cinq voire six assemblages fractionnés.

Dans les modes de réalisation décrits ci-dessus, le pas p1 est égal au pas p2 et le sens d'enroulement des éléments filaires métalliques de la couche interne de l'assemblage final est identique au sens d'enroulement des éléments filaires métalliques de la couche externe de l'assemblage final. On pourra également envisager un assemblage final dans lequel le pas p1 est différent du pas p2, les sens d'enroulement des éléments filaires métalliques de la couche interne et de la couche externe de l'assemblage final étant identiques. A cet effet, on envisagera une étape de fourniture de l'assemblage transitoire dans laquelle on assemble la couche interne autour du noyau transitoire à un premier pas p1' lors d'une première étape d'assemblage, puis, dans laquelle, on assemble la couche externe autour de la couche interne à un deuxième pas p2' différent de p1' lors d'une deuxième étape d'assemblage. De façon optionnelle, on pourra prévoir une étape de stockage de la couche interne enroulée autour du noyau transitoire entre les première et deuxième étapes d'assemblage.

## Revendications

1. Procédé de fabrication d'un assemblage final (A) comprenant au moins deux couches (C1, C2) comprenant une couche interne C1 constituée de C1'>1 éléments filaires métalliques (14) enroulés en hélice et une couche externe C2 constituée de C2'>1 éléments filaires métalliques (14) enroulés en hélice autour de la couche interne C1, **caractérisé en ce que** le procédé comprend :
- une étape (100) de fourniture d'un assemblage transitoire (AT) comprenant au moins deux couches (A1, A2) comprenant une couche interne A1 constituée de A1'>1 éléments filaires métalliques (14) enroulés en hélice autour d'un noyau transitoire (NT) et une couche externe A2 constituée de A2'>1 éléments filaires métalliques (14) enroulés en hélice autour de la couche interne A1,
- une étape (124) de séparation de l'assemblage transitoire (AT) entre au moins:
∘ un premier assemblage fractionné (AF1) comprenant au moins une couche D1 constituée de D1'≥1 élément(s) filaire(s) métallique(s) (14) enroulé(s) en hélice, le ou les D1' élément(s) filaire(s) métallique(s) (14) étant issu(s) de la couche interne A1 constituée de A1'>1 éléments filaires métalliques (14) de l'assemblage transitoire (AT),
∘ un deuxième assemblage fractionné (AF2) comprenant au moins une couche E2 constituée de E2'≥1 élément(s) filaire(s) métallique(s) (14) enroulé(s) en hélice, le ou les E2' élément(s) filaire(s) métallique(s) (14) étant issu(s) de la couche externe A2 constituée de A2'>1 éléments filaires métalliques (14) de l'assemblage transitoire (AT),
∘ un troisième assemblage fractionné (AF3) comprenant au moins une couche F2 constituée de F2'≥ 1 élément(s) filaire(s) métallique(s) (14) enroulé(s) en hélice, le ou les F2' élément(s) filaire(s) métallique(s) (14) étant issu(s) de la couche externe A2 constituée de A2'>1 éléments filaires métalliques (14) de l'assemblage transitoire (AT),
∘ le noyau transitoire (NT) ou un ou plusieurs ensembles comprenant le noyau transitoire (NT),
le procédé comprenant une étape (135) de réassemblage d'au moins le premier assemblage fractionné (AF1), le deuxième assemblage fractionné (AF2) et le troisième assemblage fractionné (AF3) ensemble pour former l'assemblage final (A).

2. Procédé selon la revendication 1, dans lequel l'étape (124) de séparation de l'assemblage transitoire (AT) entre le premier assemblage fractionné (AF1), le deuxième assemblage fractionné (AF2), le troisième assemblage fractionné (AF3) et le noyau transitoire (NT) ou un ou plusieurs ensembles comprenant le noyau transitoire (NT) et l'étape (135) de réassemblage du premier assemblage fractionné (AF1) avec le deuxième assemblage fractionné (AF2) et le troisième assemblage fractionné (AF3) sont réalisées de sorte que C1'<A1' et C2'≤A2'.

3. Procédé selon la revendication 2, dans lequel, le deuxième assemblage fractionné (AF2) comprenant au moins deux couches (E1, E2) comprenant une couche interne E1 constituée de E1'≥1 élément(s) filaire(s) métallique(s) (14) enroulé(s) en hélice et une couche externe E2 constituée de E2'≥1 élément(s) filaire(s) métallique(s) (14) enroulé(s) en hélice autour de la couche interne E1, le ou les E1' élément(s) filaire(s) métallique(s) (14) étant issu(s) de la couche interne A1 constituée de A1'>1 éléments filaires métalliques (14) de l'assemblage transitoire (AT) et le ou les E2' élément(s) filaire(s) métallique(s) (14) étant issu(s) de la couche externe A2 constituée de A2'>1 éléments filaires métalliques (14) de l'assemblage transitoire (AT), l'étape (124) de séparation de l'assemblage transitoire (AT) entre le premier assemblage fractionné (AF1), le deuxième assemblage fractionné (AF2), le troisième assemblage fractionné (AF3) et le noyau transitoire (NT) ou un ou plusieurs ensembles comprenant le noyau transitoire (NT) comprend :
- une étape (129) de séparation de l'assemblage transitoire (AT) entre :
- un ensemble fractionné amont (EG) comprenant au moins deux couches (G1, G2) comprenant une couche interne G1 constituée de G1'≥1 élément(s) filaire(s) métallique(s) (14) enroulé(s) en hélice autour du noyau transitoire (NT) et une couche externe G2 constituée de G2'≥1 élément(s) filaire(s) métallique(s) (14) enroulé(s) en hélice autour de la couche interne G1, le ou les G1' élément(s) filaire(s) métallique(s) (14) étant issu(s) de la couche interne A1 constituée de A1'>1 éléments filaires métalliques (14) de l'assemblage transitoire (AT) et le ou les G2' élément(s) filaire(s) métallique(s) (14) étant issu(s) de la couche externe A2 constituée de A2'>1 éléments filaires métalliques (14) de l'assemblage transitoire (AT), et
- le troisième assemblage fractionné (AF3), et
- une étape (132) de séparation de l'ensemble fractionné amont (EG) entre :
- le premier assemblage fractionné (AF1),
- le deuxième assemblage fractionné (AF2), et
- le noyau transitoire (NT) ou un ou plusieurs ensembles comprenant le noyau transitoire (NT), de préférence le noyau transitoire (NT).

4. Procédé selon la revendication précédente, dans lequel l'étape (132) de séparation de l'ensemble fractionné amont (EG) entre le premier assemblage fractionné (AF1), le deuxième assemblage fractionné (AF2), et le noyau transitoire (NT) ou un ou plusieurs ensembles comprenant le noyau transitoire (NT), de préférence le noyau transitoire (NT) comprend :
- une étape (140) de séparation de l'ensemble fractionné amont (EG) entre :
- un ensemble précurseur (EP1) comprenant au moins une couche I1 constituée de I1'>1 éléments filaires métalliques (14) enroulés en hélice, les I1' éléments filaires métalliques (14) étant issus de la couche interne G1 constituée des G1' éléments filaires métalliques (14) de l'ensemble fractionné amont EG,
- le deuxième assemblage fractionné (AF2),
- le noyau transitoire (NT) ou un ou plusieurs ensembles comprenant le noyau transitoire (NT), de préférence le noyau transitoire (NT), et
- une étape (142) de séparation de l'ensemble précurseur (EP1) entre :
- un ensemble principal (EM1) comprenant au moins une couche J1 constituée de J1'≥1 élément(s) filaire(s) métallique(s) (14) enroulé(s) en hélice, le ou les J1'≥1 élément(s) filaire(s) métallique(s) (14) étant issu(s) de la couche I1 constituée des I1'>1 éléments filaires métalliques (14) de l'ensemble précurseur (EP1), l'ensemble principal (EM1) formant le premier assemblage fractionné (AF1), et
- un ensemble complémentaire (ES1) comprenant au moins une couche K1 constituée de K1'≥1 élément(s) filaire(s) métallique(s) (14) enroulé(s) en hélice, le ou les K1'≥1 élément(s) filaire(s) métallique(s) (14) étant issu(s) de la couche I1 constituée des I1'>1 éléments filaires métalliques (14) de l'ensemble précurseur (EP1).

5. Procédé selon la revendication 2, dans lequel l'étape (124) de séparation de l'assemblage transitoire (AT) entre le premier assemblage fractionné (AF1), le deuxième assemblage fractionné (AF2), le troisième assemblage fractionné (AF3) et le noyau transitoire (NT) ou un ou plusieurs ensembles comprenant le noyau transitoire (NT) comprend:
- une étape (180; 183) de séparation de l'assemblage transitoire (AT) entre :
- un ensemble fractionné intermédiaire (EQ) comprenant une couche Q1 constituée de Q1'>1 éléments filaires métalliques (14) enroulés en hélice autour du noyau transitoire (NT), les Q1' éléments filaires métalliques (14) étant issus de la couche interne A1 constituée de A1'>1 éléments filaires métalliques (14) de l'assemblage transitoire (AT), et
- le deuxième assemblage fractionné (AF2),
- le troisième assemblage fractionné (AF3), et
- une étape (187) de séparation de l'ensemble fractionné intermédiaire (EQ) entre :
- un ensemble dérivé (EZ1) comprenant au moins une couche Z1 constituée de Z1'≥1 élément(s) filaire(s) métallique(s) (14) enroulé(s) en hélice, le ou les Z1' élément(s) filaire(s) métallique(s) (14) étant issu(s) de la couche interne Q1 constituée des Q1'>1 éléments filaires métalliques (14) de l'ensemble fractionné intermédiaire (EQ),
- le premier assemblage fractionné (AF1), et
- le noyau transitoire (NT) ou un ou plusieurs ensembles comprenant le noyau transitoire (NT), de préférence le noyau transitoire (NT).

6. Procédé selon la revendication 1, dans lequel l'étape (124) de séparation de l'assemblage transitoire (AT) entre le premier assemblage fractionné (AF1), le deuxième assemblage fractionné (AF2), le troisième assemblage fractionné (AF3) et le noyau transitoire (NT) ou un ou plusieurs ensembles comprenant le noyau transitoire (NT) et l'étape (135) de réassemblage du premier assemblage fractionné (AF1) avec le deuxième assemblage fractionné (AF2) et le troisième assemblage fractionné (AF3) sont réalisées de sorte que C1'=A1' et C2'≤A2'.

7. Procédé selon la revendication 6, dans lequel, le deuxième assemblage fractionné (AF2) comprenant au moins deux couches (E1, E2) comprenant une couche interne E1 constituée de E1'≥1 élément(s) filaire(s) métallique(s) (14) enroulé(s) en hélice et une couche externe E2 constituée de E2'≥1 élément(s) filaire(s) métallique(s) (14) enroulé(s) en hélice autour de la couche interne E1, le ou les E1' élément(s) filaire(s) métallique(s) (14) étant issu(s) de la couche interne A1 constituée de A1'>1 éléments filaires métalliques (14) de l'assemblage transitoire (AT) et le ou les E2' élément(s) filaire(s) métallique(s) (14) étant issu(s) de la couche externe A2 constituée de A2'>1 éléments filaires métalliques (14) de l'assemblage transitoire (AT), l'étape (124) de séparation de l'assemblage transitoire (AT) entre le premier assemblage fractionné (AF1), le deuxième assemblage fractionné (AF2), le troisième assemblage fractionné (AF3) et le noyau transitoire (NT) ou un ou plusieurs ensembles comprenant le noyau transitoire (NT) comprend :
- une étape (129) de séparation de l'assemblage transitoire (AT) entre :
- un ensemble fractionné amont (EG) comprenant au moins deux couches (G1, G2) comprenant une couche interne G1 constituée de G1'≥1 élément(s) filaire(s) métallique(s) (14) enroulé(s) en hélice autour du noyau transitoire (NT) et une couche externe G2 constituée de G2'≥1 élément(s) filaire(s) métallique(s) (14) enroulé(s) en hélice autour de la couche interne G1, le ou les G1' élément(s) filaire(s) métallique(s) (14) étant issu(s) de la couche interne A1 constituée de A1'>1 éléments filaires métalliques (14) de l'assemblage transitoire (AT) et le ou les G2' élément(s) filaire(s) métallique(s) (14) étant issu(s) de la couche externe A2 constituée de A2'>1 éléments filaires métalliques (14) de l'assemblage transitoire (AT), et
- le troisième assemblage fractionné (AF3), et
- une étape (132) de séparation de l'ensemble fractionné amont (EG) entre :
- le premier assemblage fractionné (AF1),
- le deuxième assemblage fractionné (AF2), et
- le noyau transitoire (NT).

8. Procédé selon la revendication 6, dans lequel l'étape (124) de séparation de l'assemblage transitoire (AT) entre le premier assemblage fractionné (AF1), le deuxième assemblage fractionné (AF2), le troisième assemblage fractionné (AF3) et le noyau transitoire (NT) ou un ou plusieurs ensembles comprenant le noyau transitoire (NT) comprend:
- une étape (180) de séparation de l'assemblage transitoire (AT) entre :
- un ensemble fractionné intermédiaire (EQ) comprenant une couche Q1 constituée de Q1'>1 éléments filaires métalliques (14) enroulés en hélice autour du noyau transitoire (NT), les Q1' éléments filaires métalliques (14) étant issus de la couche interne A1 constituée de A1'>1 éléments filaires métalliques (14) de l'assemblage transitoire (AT), et
- le deuxième assemblage fractionné (AF2),
- le troisième assemblage fractionné (AF3), et
- une étape (182) de séparation de l'ensemble fractionné intermédiaire (EQ) entre :
- le premier assemblage fractionné (AF1), et
- le noyau transitoire (NT) ou un ou plusieurs ensembles comprenant le noyau transitoire, de préférence le noyau transitoire (NT).

9. Procédé selon la revendication précédente, dans lequel l'étape (182) de séparation de l'ensemble fractionné intermédiaire (EQ) entre le premier assemblage fractionné (AF1) et le noyau transitoire (NT) ou un ou plusieurs ensembles comprenant le noyau transitoire (NT), de préférence le noyau transitoire (NT) comprend :
- une étape (184) de séparation de l'ensemble fractionné intermédiaire (EQ) entre :
- un premier ensemble séparé (EW) comprenant au moins une couche W1 constituée de W1'≥1 élément(s) filaire(s) métallique(s) (14) enroulé(s) en hélice, le ou les W1' élément(s) filaire(s) métallique(s) (14) étant issu(s) de la couche Q1 constituée des Q1' éléments filaires métalliques (14) de l'ensemble fractionné intermédiaire (EQ),
- un deuxième ensemble séparé (EX) comprenant au moins une couche X1 constituée de X1'≥1 élément(s) filaire(s) métallique(s) (14) enroulé(s) en hélice, le ou les X1' élément(s) filaire(s) métallique(s) (14) étant issu(s) de la couche Q1 constituée des Q1' éléments filaires métalliques (14) de l'ensemble fractionné intermédiaire (EQ),
- le noyau transitoire (NT) ou un ou plusieurs ensembles comprenant le noyau transitoire (NT), de préférence le noyau transitoire (NT),
- une étape (186) de réassemblage du premier ensemble séparé (EW) et du deuxième ensemble séparé (EX) ensemble pour former le premier assemblage fractionné (AF1).

10. Procédé selon l'une quelconque des revendications 1 à 9, dans lequel l'étape (124) de séparation de l'assemblage transitoire (AT) entre le premier assemblage fractionné (AF1), le deuxième assemblage fractionné (AF2), le troisième assemblage fractionné (AF3) et le noyau transitoire (NT) ou un ou plusieurs ensembles comprenant le noyau transitoire (NT) et l'étape (135) de réassemblage du premier assemblage fractionné (AF1), du deuxième assemblage fractionné (AF2) et du troisième assemblage fractionné (AF3) ensemble sont réalisées de sorte que C2'<A2'.

11. Procédé selon l'une quelconque des revendications 1 à 9, dans lequel l'étape (124) de séparation de l'assemblage transitoire (AT) entre le premier assemblage fractionné (AF1), le deuxième assemblage fractionné (AF2), le troisième assemblage fractionné (AF3) et le noyau transitoire (NT) ou un ou plusieurs ensembles comprenant le noyau transitoire (NT) et l'étape (135) de réassemblage du premier assemblage fractionné (AF1), du deuxième assemblage fractionné (AF2) et du troisième assemblage fractionné (AF3) ensemble sont réalisées de sorte que C2'=A2'.

12. Pneumatique, **caractérisé en ce qu'il** comprend un assemblage final (A) comprenant au moins deux couches (C1, C2) comprenant une couche interne C1 constituée de C1'>1 éléments filaires métalliques (14) enroulés en hélice et une couche externe C2 constituée de C2'>1 éléments filaires métalliques (14) enroulés en hélice autour de la couche interne , obtenu par le procédé selon l'une quelconque des revendications précédentes et dans lequel chaque élément filaire métallique de chaque une couche interne C1 et externe C2 est dépourvu de marques de préformation.

13. Installation (10) de fabrication d'un assemblage final (A) comprenant au moins deux couches (C1, C2) comprenant une couche interne C1 constituée de C1'>1 éléments filaires métalliques (14) enroulés en hélice et une couche externe C2 constituée de C2'>1 éléments filaires métalliques (14) enroulés en hélice autour de la couche interne C1, **caractérisé en ce que** l'installation comprend :
- des moyens (11) de fourniture d'un assemblage transitoire (AT) comprenant au moins deux couches (A1, A2) comprenant une couche interne A1 constituée de A1'>1 éléments filaires métalliques (14) enroulés en hélice autour d'un noyau transitoire (NT) et une couche externe A2 constituée de A2'>1 éléments filaires métalliques (14) enroulés en hélice autour de la couche interne A1,
- des moyens (24) de séparation de l'assemblage transitoire (AT) entre au moins:
∘ un premier assemblage fractionné (AF1) comprenant au moins une couche D1 constituée de D1'≥1 élément(s) filaire(s) métallique(s) (14) enroulé(s) en hélice, le ou les D1' élément(s) filaire(s) métallique(s) (14) étant issu(s) de la couche interne A1 constituée de A1'>1 éléments filaires métalliques (14) de l'assemblage transitoire (AT),
∘ un deuxième assemblage fractionné (AF2) comprenant au moins une couche E2 constituée de E2'≥1 élément(s) filaire(s) métallique(s) (14) enroulé(s) en hélice, le ou les E2' élément(s) filaire(s) métallique(s) (14) étant issu(s) de la couche externe A2 constituée de A2'>1 éléments filaires métalliques (14) de l'assemblage transitoire (AT),,
∘ un troisième assemblage fractionné (AF3) comprenant au moins une couche F2 constituée de F2'≥ 1 élément(s) filaire(s) métallique(s) (14) enroulé(s) en hélice, le ou les F2' élément(s) filaire(s) métallique(s) (14) étant issu(s) de la couche externe A2 constituée de A2'>1 éléments filaires métalliques (14) de l'assemblage transitoire (AT),
∘ le noyau transitoire (NT) ou un ou plusieurs ensembles comprenant le noyau transitoire (NT),
l'installation (10) comprenant :
des moyens (135) de réassemblage d'au moins le premier assemblage fractionné (AF1), le deuxième assemblage fractionné (AF2) et le troisième assemblage fractionné (AF3) ensemble pour former l'assemblage final (A).

## Patentansprüche

1. Verfahren zur Herstellung eines Endverbands (A) mit mindestens zwei Lagen (C1, C2), umfassend eine innere Lage C1, die aus C1' > 1 spiralförmig gewickelten Metalldrahtelementen (14) ausgebildet ist, und eine äußere Lage C2, die aus C2' > 1 spiralförmig um die innere Lage C1 gewickelten Metalldrahtelementen (14) ausgebildet ist, **dadurch gekennzeichnet, dass** das Verfahren Folgendes umfasst:
- einen Schritt (100) des Bereitstellens eines Übergangsverbands (AT) mit mindestens zwei Lagen (A1, A2), umfassend eine innere Lage A1, die aus A1' > 1 spiralförmig um einen Übergangskern (NT) gewickelten Metalldrahtelementen (14) ausgebildet ist, und eine äußere Lage A2, die aus A2' > 1 spiralförmig um die innere Lage A1 gewickelten Metalldrahtelementen (14) ausgebildet ist,
- einen Schritt (124) des Trennens des Übergangsverbands (AT) in mindestens:
o einen ersten fraktionierten Verband (AF1) mit mindestens einer Lage D1, die aus D1' ≥ 1 spiralförmig gewickelten Metalldrahtelement(en) (14) ausgebildet ist, wobei das (die) D1' Metalldrahtelement(e) (14) aus der aus A1' > 1 Metalldrahtelementen (14) ausgebildeten inneren Lage A1 des Übergangsverbands (AT) stammt (stammen),
o einen zweiten fraktionierten Verband (AF2) mit mindestens einer Lage E2, die aus E2' ≥ 1 spiralförmig gewickelten Metalldrahtelement(en) (14) ausgebildet ist, wobei das (die) E2' Metalldrahtelement(e) (14) aus der aus A2' > 1 Metalldrahtelementen (14) ausgebildeten äußeren Lage A2 des Übergangsverbands (AT) stammt (stammen),
o einen dritten fraktionierten Verband (AF3) mit mindestens einer Lage F2, die aus F2' ≥ 1 spiralförmig gewickelten Metalldrahtelement(en) (14) ausgebildet ist, wobei das (die) F2' Metalldrahtelement(e) (14) aus der aus A2' > 1 Metalldrahtelementen (14) ausgebildeten äußeren Lage A2 des Übergangsverbands (AT) stammt (stammen),
o den Übergangskern (NT) oder eine oder mehrere den Übergangskern (NT) umfassende Anordnungen,
wobei das Verfahren einen Schritt (135) des Wiederzusammensetzens zumindest des ersten fraktionierten Verbands (AF1), des zweiten fraktionierten Verbands (AF2) und des dritten fraktionierten Verbands (AF3) umfasst, um den Endverband (A) auszubilden.

2. Verfahren nach Anspruch 1, wobei der Schritt (124) des Trennens des Übergangsverbands (AT) in den ersten fraktionierten Verband (AF1), den zweiten fraktionierten Verband (AF2), den dritten fraktionierten Verband (AF3) und den Übergangskern (NT) oder eine oder mehrere den Übergangskern (NT) umfassende Anordnungen und der Schritt (135) des Wiederzusammensetzens des ersten fraktionierten Verbands (AF1) mit dem zweiten fraktionierten Verband (AF2) und dem dritten fraktionierten Verband (AF3) so ausgeführt werden, dass C1' < A1' und C2' ≤ A2'.

3. Verfahren nach Anspruch 2, wobei der zweite fraktionierte Verband (AF2) mindestens zwei Lagen (E1, E2) umfasst, umfassend eine innere Lage E1, die aus E1' ≥ 1 spiralförmig gewickelten Metalldrahtelement(en) (14) ausgebildet ist, und eine äußere Lage E2, die aus E2' ≥ 1 spiralförmig um die innere Lage E1 gewickelten Metalldrahtelement(en) (14) ausgebildet ist, wobei das (die) E1' Metalldrahtelement(e) (14) aus der aus A1' > 1 Metalldrahtelementen (14) des Übergangsverbands (AT) ausgebildeten inneren Lage A1 stammt (stammen) und das (die) E2' Metalldrahtelement(e) (14) aus der aus A2' > 1 Metalldrahtelementen (14) des Übergangsverbands (AT) ausgebildeten äußeren Lage A2 stammt (stammen), wobei der Schritt (124) des Trennens des Übergangsverbands (AT) in den ersten fraktionierten Verband (AF1), den zweiten fraktionierten Verband (AF2), den dritten fraktionierten Verband (AF3) und den Übergangskern (NT) oder eine oder mehrere den Übergangskern (NT) umfassende Anordnungen Folgendes umfasst:
- einen Schritt (129) des Trennens des Übergangsverbands (AT) in:
- eine stromaufwärtige fraktionierte Anordnung (EG) mit mindestens zwei Lagen (G1, G2), umfassend eine innere Lage G1, die aus G1' ≥ 1 spiralförmig um den Übergangskern (NT) gewickelten Metalldrahtelement(en) (14) ausgebildet ist, und eine äußere Lage G2, die aus G2' ≥ 1 spiralförmig um die innere Lage G1 gewickelten Metalldrahtelement(en) (14) ausgebildet ist, wobei das (die) G1' Metalldrahtelement(e) (14) aus der aus A1' > 1 Metalldrahtelementen (14) ausgebildeten inneren Lage A1 des Übergangsverbands (AT) stammt (stammen) und das (die) G2' Metalldrahtelement(e) (14) aus der aus A2' > 1 Metalldrahtelementen (14) ausgebildeten äußeren Lage A2 des Übergangsverbands (AT) stammt (stammen), und
- den dritten fraktionierten Verband (AF3) und
- einen Schritt (132) des Trennens der stromaufwärtigen fraktionierten Anordnung (EG) in:
- den ersten fraktionierten Verband (AF1),
- den zweiten fraktionierten Verband (AF2) und
- den Übergangskern (NT) oder eine oder mehrere den Übergangskern (NT) umfassende Anordnungen, vorzugsweise den Übergangskern (NT).

4. Verfahren nach dem vorangehenden Anspruch, wobei der Schritt (132) des Trennens der stromaufwärtigen fraktionierten Anordnung (EG) in den ersten fraktionierten Verband (AF1), den zweiten fraktionierten Verband (AF2) und den Übergangskern (NT) oder eine oder mehrere den Übergangskern (NT) umfassende Anordnungen, vorzugsweise den Übergangskern (NT), Folgendes umfasst:
- einen Schritt (140) des Trennens der stromaufwärtigen fraktionierten Anordnung (EG) in:
- eine Vorläuferanordnung (EP1), umfassend zumindest eine Lage I1, die aus I1' > 1 spiralförmig gewickelten Metalldrahtelementen (14) ausgebildet ist, wobei die I1' Metalldrahtelemente (14) aus der aus G1' Metalldrahtelementen (14) ausgebildeten inneren Lage G1 der stromaufwärtigen fraktionierten Anordnung EG stammen,
- den zweiten fraktionierten Verband (AF2),
- den Übergangskern (NT) oder eine oder mehrere den Übergangskern (NT) umfassende Anordnungen, vorzugsweise den Übergangskern (NT), und
- einen Schritt (142) des Trennens der Vorläuferanordnung (EP1) in:
- eine Hauptanordnung (EM1), umfassend mindestens eine Lage J1, die aus J1' ≥ 1 spiralförmig gewickelten Metalldrahtelement(en) (14) ausgebildet ist, wobei das (die) J1' ≥ 1 Metalldrahtelement(e) (14) aus der aus I1' > 1 Metalldrahtelementen (14) ausgebildeten Lage I1 der Vorläuferanordnung (EP1) stammt (stammen), wobei die Hauptanordnung (EM1) den ersten fraktionierten Verband (AF1) bildet, und
- eine komplementäre Anordnung (ES1) mit mindestens einer Lage K1, die aus K1' ≥ 1 spiralförmig gewickelten Metalldrahtelement(en) (14) ausgebildet ist, wobei das (die) K1' ≥ 1 Metalldrahtelement(e) (14) aus der aus I1' > 1 Metalldrahtelementen (14) ausgebildeten Lage I1 der Vorläuferanordnung (EP1) stammt (stammen).

5. Verfahren nach Anspruch 2, wobei der Schritt (124) des Trennens des Übergangsverbands (AT) in den ersten fraktionierten Verband (AF1), den zweiten fraktionierten Verband (AF2), den dritten fraktionierten Verband (AF3) und den Übergangskern (NT) oder eine oder mehrere den Übergangskern (NT) umfassende Anordnungen Folgendes umfasst:
- einen Schritt (180; 183) des Trennens des Übergangsverbands (AT) in:
- eine fraktionierte Zwischenanordnung (EQ) mit einer Lage Q1, die aus Q1' > 1 spiralförmig um den Übergangskern (NT) gewickelten Metalldrahtelementen (14) ausgebildet ist, wobei die Q1' Metalldrahtelemente (14) aus der aus A1' > 1 Metalldrahtelementen (14) ausgebildeten inneren Lage A1 des Übergangsverbands (AT) stammen, und
- den zweiten fraktionierten Verband (AF2),
- den dritten fraktionierten Verband (AF3) und
- einen Schritt (187) des Trennens der fraktionierten Zwischenanordnung (EQ) in:
- eine abgeleitete Anordnung (EZ1) mit mindestens einer Lage Z1, die aus Z1' ≥ 1 spiralförmig gewickelten Metalldrahtelement(en) (14) ausgebildet ist, wobei das (die) Z1' Metalldrahtelement(e) (14) aus der aus Q1' > 1 Metalldrahtelementen (14) ausgebildeten inneren Lage Q1 der fraktionierten Zwischenanordnung (EQ) stammt (stammen).
- den ersten fraktionierten Verband (AF1) und
- den Übergangskern (NT) oder eine oder mehrere den Übergangskern (NT) umfassende Anordnungen, vorzugsweise den Übergangskern (NT).

6. Verfahren nach Anspruch 1, wobei der Schritt (124) des Trennens des Übergangsverbands (AT) in den ersten fraktionierten Verband (AF1), den zweiten fraktionierten Verband (AF2), den dritten fraktionierten Verband (AF3) und den Übergangskern (NT) oder eine oder mehrere den Übergangskern (NT) umfassende Anordnungen und der Schritt (135) des Wiederzusammensetzens des ersten fraktionierten Verbands (AF1) mit dem zweiten fraktionierten Verband (AF2) und dem dritten fraktionierten Verband (AF3) so ausgeführt werden, dass C1' = A1' und C2' ≤ A2' .

7. Verfahren nach Anspruch 6, wobei der zweite fraktionierte Verband (AF2) mindestens zwei Lagen (E1, E2) umfasst, umfassend eine innere Lage E1, die aus E1' ≥ 1 spiralförmig gewickelten Metalldrahtelement(en) (14) ausgebildet ist, und eine äußere Lage E2, die aus E2' ≥ 1 spiralförmig um die innere Lage E1 gewickelten Metalldrahtelement(en) (14) ausgebildet ist, wobei das (die) E1' Metalldrahtelement(e) (14) aus der aus A1' > 1 Metalldrahtelementen (14) ausgebildeten inneren Lage A1 des Übergangsverbands (AT) stammt (stammen) und das (die) E2' Metalldrahtelement(e) (14) aus der aus A2' > 1 Metalldrahtelementen (14) ausgebildeten äußeren Lage A2 des Übergangsverbands (AT) stammt (stammen), wobei der Schritt (124) des Trennens des Übergangsverbands (AT) in den ersten fraktionierten Verband (AF1), den zweiten fraktionierten Verband (AF2), den dritten fraktionierten Verband (AF3) und den Übergangskern (NT) oder eine oder mehrere den Übergangskern (NT) umfassende Anordnungen Folgendes umfasst:
- einen Schritt (129) des Trennens des Übergangsverbands (AT) in:
- eine stromaufwärtige fraktionierte Anordnung (EG) mit mindestens zwei Lagen (G1, G2), umfassend eine innere Lage G1, die aus G1 ≥ 1 spiralförmig um den Übergangskern (NT) gewickelten Metalldrahtelement(en) (14) ausgebildet ist, und eine äußere Lage G2, die aus G2' ≥ 1 spiralförmig um die innere Lage G1 gewickelten Metalldrahtelement(en) (14) ausgebildet ist, wobei das (die) G1' Metalldrahtelement(e) (14) aus der aus A1' > 1 Metalldrahtelementen (14) ausgebildeten inneren Lage A1 des Übergangsverbands (AT) stammt (stammen) und das (die) G2' Metalldrahtelement(e) (14) aus der aus A2' > 1 Metalldrahtelementen (14) ausgebildeten äußeren Lage A2 des Übergangsverbands (AT) stammt (stammen), und
- den dritten fraktionierten Verband (AF3) und
- einen Schritt (132) des Trennens der stromaufwärtigen fraktionierten Anordnung (EG) in:
- den ersten fraktionierten Verband (AF1),
- den zweiten fraktionierten Verband (AF2) und
- den Übergangskern (NT).

8. Verfahren nach Anspruch 6, wobei der Schritt (124) des Trennens des Übergangsverbands (AT) in den ersten fraktionierten Verband (AF1), den zweiten fraktionierten Verband (AF2), den dritten fraktionierten Verband (AF3) und den Übergangskern (NT) oder eine oder mehrere den Übergangskern (NT) umfassende Anordnungen Folgendes umfasst:
- einen Schritt (180) des Trennens des Übergangsverbands (AT) in:
- eine fraktionierte Zwischenanordnung (EQ) mit einer Lage Q1, die aus Q1' > 1 spiralförmig um den Übergangskern (NT) gewickelten Metalldrahtelementen (14) ausgebildet ist, wobei die Q1' Metalldrahtelemente (14) aus der aus A1' > 1 Metalldrahtelementen (14) ausgebildeten inneren Lage A1 des Übergangsverbands (AT) stammen, und
- den zweiten fraktionierten Verband (AF2),
- den dritten fraktionierten Verband (AF3) und
- einen Schritt (182) des Trennens der fraktionierten Anordnung (EQ) in:
- den ersten fraktionierten Verband (AF1) und
- den Übergangskern (NT) oder eine oder mehrere den Übergangskern (NT) umfassende Anordnungen, vorzugsweise den Übergangskern (NT).

9. Verfahren nach dem vorangehenden Anspruch, wobei der Schritt (182) des Trennens der fraktionierten Zwischenanordnung (EQ) in den ersten fraktionierten Verband (AF1) und den Übergangskern (NT) oder eine oder mehrere den Übergangskern (NT) umfassende Anordnungen, vorzugsweise den Übergangskern (NT), Folgendes umfasst:
- einen Schritt (184) des Trennens der fraktionierten Anordnung (EQ) in:
- eine erste getrennte Anordnung (EW) mit mindestens einer Lage W1, die aus W1' ≥ 1 spiralförmig gewickelten Metalldrahtelement (en) (14) ausgebildet ist, wobei das (die) W1' Metalldrahtelement(e) (14) aus der aus Q1' Metalldrahtelementen (14) ausgebildeten Lage Q1 der fraktionierten Zwischenanordnung (EQ) stammt (stammen),
- eine zweite separate Anordnung (EX), umfassend mindestens eine Lage X1, die aus X1' ≥ 1 spiralförmig gewickelten Metalldrahtelement(en) (14) ausgebildet ist, wobei das (die) X1' Metalldrahtelement(e) (14) aus der aus Q1' Metalldrahtelementen (14) ausgebildeten Lage Q1 der fraktionierten Zwischenanordnung (EQ) stammt (stammen).
- den Übergangskern (NT) oder eine oder mehrere den Übergangskern (NT) umfassende Anordnungen, vorzugsweise den Übergangskern (NT),
- einen Schritt (186) des Wiederzusammensetzens der ersten separaten Anordnung (EW) und der zweiten separaten Anordnung (EX), um den ersten fraktionierten Verband (AF1) zu bilden.

10. Verfahren nach einem der Ansprüche 1 bis 9, wobei der Schritt (124) des Trennens des Übergangsverbands (AT) in den ersten fraktionierten Verband (AF1), den zweiten fraktionierten Verband (AF2), den dritten fraktionierten Verband (AF3) und den Übergangskern (NT) oder eine oder mehrere den Übergangskern (NT) umfassende Anordnungen und der Schritt (135) des Wiederzusammensetzens des ersten fraktionierten Verbands (AF1), des zweiten fraktionierten Verband (AF2) und des dritten fraktionierten Verbands (AF3) so ausgeführt werden, dass C2' < A2'.

11. Verfahren nach einem der Ansprüche 1 bis 9, wobei der Schritt (124) des Trennens des Übergangsverbands (AT) in den ersten fraktionierten Verband (AF1), den zweiten fraktionierten Verband (AF2), den dritten fraktionierten Verband (AF3) und den Übergangskern (NT) oder eine oder mehrere den Übergangskern (NT) umfassende Anordnungen und der Schritt (135) des Wiederzusammensetzens des ersten fraktionierten Verbands (AF1), des zweiten fraktionierten Verbands (AF2) und des dritten fraktionierten Verbands (AF3) so ausgeführt werden, dass C2' = A2'.

12. Reifen, **dadurch gekennzeichnet, dass** er einen Endverband (A) mit mindestens zwei Lagen (C1, C2) umfasst, umfassend eine innere Lage C1, die aus C1' > 1 spiralförmig gewickelten Metalldrahtelementen (14) ausgebildet ist, und eine äußere Lage C2, die aus C2' > 1 spiralförmig um die innere Lage gewickelten Metalldrahtelementen (14) ausgebildet ist, der durch das Verfahren nach einem der vorangehenden Ansprüche erhalten wird, wobei jedes Metalldrahtelement jeder inneren Lage C1 und äußeren Lage C2 frei von Vorformungsmarkierungen ist.

13. Anlage (10) zur Herstellung eines Endverbands (A) mit mindestens zwei Lagen (C1, C2), umfassend eine innere Lage C1, die aus C1' > 1 spiralförmig gewickelten Metalldrahtelementen (14) ausgebildet ist, und eine äußere Lage C2, die aus C2' > 1 spiralförmig um die innere Lage C1 gewickelten Metalldrahtelementen (14) ausgebildet ist, **dadurch gekennzeichnet, dass** die Anlage Folgendes umfasst:
- Mittel (11) zum Bereitstellen eines Übergangsverbands (AT) mit mindestens zwei Lagen (A1, A2), umfassend eine innere Lage A1, die aus A1' > 1 spiralförmig um einen Übergangskern (NT) gewickelten Metalldrahtelementen (14) ausgebildet ist, und eine äußere Lage A2, die aus A2' > 1 spiralförmig um die innere Lage A1 gewickelten Metalldrahtelementen (14) ausgebildet ist,
- Mittel (24) zum Trennen des Übergangsverbands (AT) in mindestens:
o einen ersten fraktionierten Verband (AF1), umfassend mindestens eine Lage D1, die aus D1' ≥ 1 spiralförmig gewickelten Metalldrahtelement(en) (14) ausgebildet ist, wobei das (die) D1' Metalldrahtelement(e) (14) aus der aus A1' > 1 Metalldrahtelementen (14) ausgebildeten inneren Lage A1 des Übergangsverbands (AT) stammt (stammen),
o einen zweiten fraktionierten Verband (AF2), umfassend mindestens eine Lage E2, die aus E2' ≥ 1 spiralförmig gewickelten Metalldrahtelement(en) (14) ausgebildet ist, wobei das (die) E2' Metalldrahtelement(e) (14) aus der aus A2' > 1 Metalldrahtelementen (14) ausgebildeten äußeren Lage A2 des Übergangsverbands AT stammt (stammen),
o einen dritten fraktionierten Verband (AF3), umfassend mindestens eine Lage F2, die aus F2' ≥ 1 spiralförmig gewickelten Metalldrahtelement(en) (14) ausgebildet ist, wobei das (die) F2' Metalldrahtelement(e) (14) aus der aus A2' > 1 Metalldrahtelementen (14) ausgebildeten äußeren Lage A2 des Übergangsverbands (AT) stammt (stammen),
o den Übergangskern (NT) oder eine oder mehrere den Übergangskern (NT) umfassende Anordnungen,
wobei die Anlage (10) Folgendes umfasst:
Mittel (135) zum Wiederzusammensetzen zumindest des ersten fraktionierten Verbands (AF1), des zweiten fraktionierten Verbands (AF2) und des dritten fraktionierten Verbands (AF3), um den Endverband (A) zu bilden.

## Claims

1. Method for producing a final assembly (A) comprising at least two layers (C1, C2) comprising an inner layer C1 composed of C1'>1 helically wound metallic filamentary elements (14) and an outer layer C2 composed of C2'>1 metallic filamentary elements (14) helically wound around the inner layer C1, **characterized in that** the method comprises:
- a step (100) of providing a temporary assembly (AT) comprising at least two layers (A1, A2) comprising an inner layer A1 composed of A1'>1 metallic filamentary elements (14) helically wound around a temporary core (NT) and an outer layer A2 composed of A2'>1 metallic filamentary elements (14) helically wound around the inner layer A1,
- a step (124) of separating the temporary assembly (AT) between at least:
∘ a first split assembly (AF1) comprising at least one layer D1 composed of D1'≥1 helically wound metallic filamentary element(s) (14), the D1' metallic filamentary element(s) (14) being derived from the inner layer A1 composed of A1'>1 metallic filamentary elements (14) of the temporary assembly (AT),
∘ a second split assembly (AF2) comprising at least one layer (E2) composed of E2'≥1 helically wound metallic filamentary element(s) (14), the E2' metallic filamentary element(s) (14) being derived from the outer layer A2 composed of A2'>1 metallic filamentary elements (14) of the temporary assembly (AT),
∘ a third split assembly (AF3) comprising at least one layer F2 composed of F2'≥1 helically wound metallic filamentary element(s) (14), the F2' metallic filamentary element(s) (14) being derived from the outer layer A2 composed of A2'>1 metallic filamentary elements (14) of the temporary assembly (AT),
∘ the temporary core (NT) or one or more assemblages comprising the temporary core (NT),
the method comprising a step (135) of reassembling at least the first split assembly (AF1), the second split assembly (AF2) and the third split assembly (AF3) to form the final assembly (A).

2. Method according to Claim 1, wherein the step (124) of separating the temporary assembly (AT) between the first split assembly (AF1), the second split assembly (AF2), the third split assembly (AF3) and the temporary core (NT) or one or more assemblages comprising the temporary core (NT) and the step (135) of reassembling the first split assembly (AF1) with the second split assembly (AF2) and the third split assembly (AF3) are carried out such that C1'<A1' and C2'≤A2'.

3. Method according to Claim 2, wherein, the second split assembly (AF2) comprising at least two layers (E1, E2) comprising an inner layer E1 composed of E1'≥1 helically wound metallic filamentary element(s) (14) and an outer layer E2 composed of E2'≥1 metallic filamentary elements (14) helically wound around the inner layer E1, the E1' metallic filamentary element(s) (14) being derived from the inner layer A1 composed of A1'>1 metallic filamentary elements (14) of the temporary assembly (AT) and the E2' metallic filamentary element(s) (14) being derived from the outer layer A2 composed of A2'>1 metallic filamentary elements (14) of the temporary assembly (AT), the step (124) of separating the temporary assembly (AT) between the first split assembly (AF1), the second split assembly (AF2), the third split assembly (AF3) and the temporary core (NT) or one or more assemblages comprising the temporary core (NT) comprises:
- a step (129) of separating the temporary assembly (AT) between:
- an upstream split assemblage (EG) comprising at least two layers (G1, G2) comprising an inner layer G1 composed of G1'≥1 metallic filamentary element(s) (14) helically wound around the temporary core (NT) and an outer layer G2 composed of G2'≥1 metallic filamentary element(s) (14) helically wound around the inner layer G1, the G1' metallic filamentary element(s) (14) being derived from the inner layer A1 composed of A1'>1 metallic filamentary elements (14) of the temporary assembly (AT) and the G2' metallic filamentary element(s) (14) being derived from the outer layer A2 composed of A2'>1 metallic filamentary elements (14) of the temporary assembly (AT), and
- the third split assembly (AF3), and
- a step (132) of separating the upstream split assemblage (EG) between:
- the first split assembly (AF1),
- the second split assembly (AF2), and
- the temporary core (NT) or one or more assemblages comprising the temporary core (NT), preferably the temporary core (NT).

4. Method according to the preceeding claim, wherein the step (132) of separating the upstream split assemblage (EG) between the first split assembly (AF1), the second split assembly (AF2) and the temporary core (NT) or one or more assemblages comprising the temporary core (NT), preferably the temporary core (NT), comprises:
- a step (140) of separating the upstream split assemblage (EG) between:
- a precursor assemblage (EP1) comprising at least one layer l1 composed of l1'>1 helically wound metallic filamentary elements (14), the l1' metallic filamentary elements (14) being derived from the inner layer G1 composed of the G1' metallic filamentary elements (14) of the upstream split assemblage EG,
- the second split assembly (AF2),
- the temporary core (NT) or one or more assemblages comprising the temporary core (NT), preferably the temporary core (NT), and
- a step (142) of separating the precursor assemblage (EP1) between:
- a main assemblage (EM1) comprising at least one layer J1 composed of J1'≥1 helically wound metallic filamentary element(s) (14), the J1'≥1 metallic filamentary element(s) (14) being derived from the layer l1 composed of the l1'>1 metallic filamentary elements (14) of the precursor assemblage (EP1), the main assemblage (EM1) forming the first split assembly (AF1), and
- a supplementary assemblage (ES1) comprising at least one layer K1 composed of K1'≥1 helically wound metallic filamentary element(s) (14), the K1'≥1 metallic filamentary element(s) (14) being derived from the layer l1 composed of the l1'>1 metallic filamentary elements (14) of the precursor assemblage (EP1).

5. Method according to Claim 2, wherein the step (124) of separating the temporary assembly (AT) between the first split assembly (AF1), the second split assembly (AF2), the third split assembly (AF3) and the temporary core (NT) or one or more assemblages comprising the temporary core (NT) comprises:
- a step (180; 183) of separating the temporary assembly (AT) between:
- an intermediate split assemblage (EQ) comprising a layer Q1 composed of Q1'>1 metallic filamentary elements (14) helically wound around the temporary core (NT), the Q1' metallic filamentary elements (14) being derived from the inner layer A1 composed of A1'>1 metallic filamentary elements (14) of the temporary assembly (AT), and
- the second split assembly (AF2),
- the third split assembly (AF3), and
- a step (187) of separating the intermediate split assemblage (EQ) between:
- a derived assemblage (EZ1) comprising at least one layer Z1 composed of Z1'≥1 helically wound metallic filamentary element(s) (14), the Z1' metallic filamentary element(s) (14) being derived from the inner layer Q1 composed of the Q1'>1 metallic filamentary elements (14) of the intermediate split assemblage (EQ),
- the first split assembly (AF1), and
- the temporary core (NT) or one or more assemblages comprising the temporary core (NT), preferably the temporary core (NT).

6. Method according to Claim 1, wherein the step (124) of separating the temporary assembly (AT) between the first split assembly (AF1), the second split assembly (AF2), the third split assembly (AF3) and the temporary core (NT) or one or more assemblages comprising the temporary core (NT) and the step (135) of reassembling the first split assembly (AF1) with the second split assembly (AF2) and the third split assembly (AF3) are carried out such that C1'=A1' and C2'≤A2'.

7. Method according to Claim 6, wherein, the second split assembly (AF2) comprising at least two layers (E1, E2) comprising an inner layer E1 composed of E1'≥1 helically wound metallic filamentary element(s) (14) and an outer layer E2 composed of E2'≥1 metallic filamentary elements (14) helically wound around the inner layer E1, the E1' metallic filamentary element(s) (14) being derived from the inner layer A1 composed of A1'>1 metallic filamentary elements (14) of the temporary assembly (AT) and the E2' metallic filamentary element(s) (14) being derived from the outer layer A2 composed of A2'>1 metallic filamentary elements (14) of the temporary assembly (AT), the step (124) of separating the temporary assembly (AT) between the first split assembly (AF1), the second split assembly (AF2), the third split assembly (AF3) and the temporary core (NT) or one or more assemblages comprising the temporary core (NT) comprises:
- a step (129) of separating the temporary assembly (AT) between:
- an upstream split assemblage (EG) comprising at least two layers (G1, G2) comprising an inner layer G1 composed of G1'≥1 metallic filamentary element(s) (14) helically wound around the temporary core (NT) and an outer layer G2 composed of G2'≥1 metallic filamentary element(s) (14) helically wound around the inner layer G1, the G1' metallic filamentary element(s) (14) being derived from the inner layer A1 composed of A1'>1 metallic filamentary elements (14) of the temporary assembly (AT) and the G2' metallic filamentary element(s) (14) being derived from the outer layer A2 composed of A2'>1 metallic filamentary elements (14) of the temporary assembly (AT), and
- the third split assembly (AF3), and
- a step (132) of separating the upstream split assemblage (EG) between:
- the first split assembly (AF1),
- the second split assembly (AF2), and
- the temporary core (NT).

8. Method according to Claim 6, wherein the step (124) of separating the temporary assembly (AT) between the first split assembly (AF1), the second split assembly (AF2), the third split assembly (AF3) and the temporary core (NT) or one or more assemblages comprising the temporary core (NT) comprises:
- a step (180) of separating the temporary assembly (AT) between:
- an intermediate split assemblage (EQ) comprising a layer Q1 composed of Q1'>1 metallic filamentary elements (14) helically wound around the temporary core (NT), the Q1' metallic filamentary elements (14) being derived from the inner layer A1 composed of A1'>1 metallic filamentary elements (14) of the temporary assembly (AT), and
- the second split assembly (AF2),
- the third split assembly (AF3), and
- a step (182) of separating the intermediate split assemblage (EQ) between:
- the first split assembly (AF1), and
- the temporary core (NT) or one or more assemblages comprising the temporary core, preferably the temporary core (NT).

9. Method according to the preceeding claim, wherein the step (182) of separating the intermediate split assemblage (EQ) between the first split assembly (AF1) and the temporary core (NT) or one or more assemblages comprising the temporary core (NT), preferably the temporary core (NT), comprises:
- a step (184) of separating the intermediate split assemblage (EQ) between:
- a first separated assemblage (EW) comprising at least one layer W1 composed of W1'≥1 helically wound metallic filamentary element(s) (14), the W1' metallic filamentary element(s) (14) being derived from the layer Q1 composed of the Q1' metallic filamentary elements (14) of the intermediate split assemblage (EQ),
- a second separated assemblage (EX) comprising at least one layer X1 composed of X1'≥1 helically wound metallic filamentary element(s) (14), the X1' metallic filamentary element(s) (14) being derived from the layer Q1 composed of the Q1' metallic filamentary elements (14) of the intermediate split assemblage (EQ),
- the temporary core (NT) or one or more assemblages comprising the temporary core (NT), preferably the temporary core (NT),
- a step (186) of reassembling the first separated assemblage (EW) and the second separated assemblage (EX) to form the first split assembly (AF1).

10. Method according to one of Claims 1 to 9, wherein the step (124) of separating the temporary assembly (AT) between the first split assembly (AF1), the second split assembly (AF2), the third split assembly (AF3) and the temporary core (NT) or one or more assemblages comprising the temporary core (NT) and the step (135) of reassembling the first split assembly (AF1), the second split assembly (AF2) and the third split assembly (AF3) are carried out such that C2'<A2'.

11. Method according to one of Claims 1 to 9, wherein the step (124) of separating the temporary assembly (AT) between the first split assembly (AF1), the second split assembly (AF2), the third split assembly (AF3) and the temporary core (NT) or one or more assemblages comprising the temporary core (NT) and the step (135) of reassembling the first split assembly (AF1), the second split assembly (AF2) and the third split assembly (AF3) are carried out such that C2'=A2'.

12. Tyre, **characterized in that** it comprises a final assembly (A) comprising at least two layers (C1, C2) comprising an inner layer C1 composed of C1'>1 helically wound metallic filamentary elements (14) and an outer layer C2 composed of C2'>1 metallic filamentary elements (14) helically wound around the inner layer, obtained by the method according to one of the preceding claims and in which each metallic filamentary element of each inner layer C1 and outer layer C2 is without preforming marks.

13. Installation (10) for producing a final assembly (A) comprising at least two layers (C1, C2) comprising an inner layer C1 composed of C1'>1 helically wound metallic filamentary elements (14) and an outer layer C2 composed of C2'>1 metallic filamentary elements (14) helically wound around the inner layer C1, **characterized in that** the installation comprises:
- means (11) for providing a temporary assembly (AT) comprising at least two layers (A1, A2) comprising an inner layer A1 composed of A1'>1 metallic filamentary elements (14) helically wound around a temporary core (NT) and an outer layer A2 composed of A2'>1 metallic filamentary elements (14) helically wound around the inner layer A1,
- means (24) for separating the temporary assembly (AT) between at least:
∘ a first split assembly (AF1) comprising at least one layer D1 composed of D1'≥1 helically wound metallic filamentary element(s) (14), the D1' metallic filamentary element(s) (14) being derived from the inner layer A1 composed of A1'>1 metallic filamentary elements (14) of the temporary assembly (AT),
∘ a second split assembly (AF2) comprising at least one layer (E2) composed of E2'≥1 helically wound metallic filamentary element(s) (14), the E2' metallic filamentary element(s) (14) being derived from the outer layer A2 composed of A2'>1 metallic filamentary elements (14) of the temporary assembly (AT),
∘ a third split assembly (AF3) comprising at least one layer F2 composed of F2'≥1 helically wound metallic filamentary element(s) (14), the F2' metallic filamentary element(s) (14) being derived from the outer layer A2 composed of A2'>1 metallic filamentary elements (14) of the temporary assembly (AT),
∘ the temporary core (NT) or one or more assemblages comprising the temporary core (NT),
the installation (10) comprising:
means (135) for reassembling at least the first split assembly (AF1), the second split assembly (AF2) and the third split assembly (AF3) to form the final assembly (A).
